# EUROPEAN PATENT SPECIFICATION

(11) **EP 1 729 615 B1**
(45) Date of publication and mention of the grant of the patent: **08.05.2019**
(21) Application number: 05724343.8
(22) Date of filing: 02.03.2005
(51) Int. Cl.: H05B 37/02, A63J 17/00

(54) **ENTERTAINMENT LIGHTING SYSTEM**
UNTERHALTUNGSBELEUCHTUNGSSYSTEM
SYSTÈME D'ÉCLAIRAGE DE DIVERTISSEMENT

(30) Priority: 02.03.2004 US 549526 P; 15.03.2004 US 553111 P; 31.03.2004 US 558400 P
(43) Date of publication of application: 13.12.2006
(73) Proprietor: Signify North America Corporation, Somerset NJ 08875 (US)
(72) Inventor: MUELLER, George, G., Boston, MA 02113 (US); DOWLING, Kevin, J., Westford, MA 01886 (US); LYS, Ihor, A., Milton, MA 02186 (US)
(74) Representative: Verweij, Petronella Daniëlle
(86) International application number: PCT/US2005/006773
(87) International publication number: WO 2005/084339

(56) References cited:
- WO-A2-03/067934
- WO-A2-2005/052751
- GB-A- 2 354 602
- US-A- 5 461 188
- US-A- 6 031 343
- US-A1- 2002 038 157
- US-A1- 2003 100 837
- US-A1- 2003 193 846
- US-A1- 2004 156 192
- US-A1- 2006 053 447
- US-A1- 2006 064 533
- US-B2- 6 868 292
- US-B2- 7 015 825

## Description

### Background

Methods and systems for semiconductor illumination have been described, including those techniques disclosed by Color Kinetics Incorporated of Boston, Massachusetts in their patent applications. Digital processors enable the creation of illumination effects, such as fades or other transitions between different colors. When more than one lighting system is provided, among the lightings systems may be coordinated to achieve both spatial and temporal effects. Thus a color-chasing rainbow may be created using a number of suitably arranged lighting systems under processor control.

However, creating coordinated lighting effects presents many challenges, particularly in how to create complex effects that involve multiple lighting units in unusual geometries. A need exists for improved systems for creating and deploying lighting shows. A need also exists for improved systems for allowing users to create and modify lighting effects in real-time, such as during audio/visual performances that have a lighting component. The UK Patent Application GB2354602 (Peter S. Jones) discloses a computer system for controlling a lighting show, based on audio data and interactive input by a user.

### Summary

Provided herein are methods and systems for managing control instructions for a plurality of light systems. The methods and systems may include providing a light system manager for mapping locations of a plurality of light systems. The methods and systems according to the invention include providing a light system composer for composing a lighting show. The methods and systems further include providing a light system engine for playing a lighting show on a plurality of light systems. The light system manager further includes a mapping facility that maps an incoming entertainment signal, such as an audio signal, to a lighting control signal. According to the invention a control system is used to modify lighting effects based on a user interface.

In one aspect, a method of illuminating an environment in coordination with a media display includes: providing a lighting control system for controlling a lighting system; providing a user interface for controlling a media display that is distinct from the lighting system; and associating an input of the lighting control system with an output of the user interface.

The method may further include providing an intermediate object representation between a visualization and the lighting control system, so that a mapping between the visualization and the lighting control system can be dynamically modified by a user in real time. The method may further include taking an output from an audio/visual controller with a physical interface and using it to control one or more lights in an entertainment venue.

The lighting system may include a string of lighting units. The string may be displayed on an area. The area may include a curtain. The area may include a panel-type display. The area may include a tile. The area may include a floor. The area may include a dance floor. The area may include a stage. The area may include a bar. The area may include a wall.

The method may include taking a visualization from a computer display associated with an audio player and displaying lights that correspond to the visualization in a physical entertainment venue. The method may include allowing a user to modify a skin of the audio player through a physical interface. The physical interface may include a touch screen. Touching the screen may change at least one of the brightness and the color of at least a part of the skin. The lighting system in such embodiments may include a string of lighting units displayed on an area, and the area may include one or more of a curtain, a panel-type display, a tile, a floor, a dance floor, a stage, a bar, and/or a wall.

The method may include taking video input for a music video and displaying one or more corresponding lights on a string of lights that use a serial addressing protocol. The method may include allowing a user to modify the video input by interacting with a physical interface. The physical interface may include a jog dial. The jog dial may allow a user to control a rate of the playback of the video input. The physical interface may include a touch screen. Touching the screen may modify a color of at least a part of a video frame. Touching the screen may modify a brightness of at least a part of a video frame. The lighting system in such embodiments may include a string of lighting units displayed on an area, and the area may include one or more of a curtain, a panel-type display, a tile, a floor, a dance floor, a stage, a bar, and/or a wall.

The method may include providing a handheld graphical user interface for modifying alighting effect associated with an audio visual display in real time. The graphical user interface may include an icon that represents a dynamic effect.

In another aspect, a method of location-based addressing of lighting units in a lighting network may include: providing an audio/visual control facility; providing a lighting control facility; providing a plurality of lighting units in a lighting network; associating a location-determination facility with a plurality of the lighting units; and mapping the physical locations of the lighting units to addresses for the lighting units in the lighting network. The location-determination facility may include a triangulation facility.

In another aspect, a system disclosed herein includes: a plurality of light emitting diodes associated with an entertainment event; a network facility interconnecting the plurality of light emitting diodes, wherein the plurality of light emitting diodes respond to control signals carried over the network facility; a control facility for generating control signals; and one or more input facilities connecting input data to the control facility.

In the system, the event may take place in an entertainment venue. The system may include a network of control facilities. The system may include a network of input facilities. The entertainment venue may include at least one of a stadium, an arena, a concert hall, an auditorium, a convention center, a display hall, a nightclub, a discotheque, a live-performance theater, a movie theater, an outdoor theater, a band shell, a recording studio, a film studio, a video studio, a home, a home theater center, a home audio/visual center, a vehicle, an article of clothing, an interior wall, an exterior wall, a sign, a billboard, a tent, and a racetrack. The entertainment event may include one or more of a concert, a play, a movie, a musical, a sporting event, a speech, a rally, and a convention.

The input data may include one or more of aural data, visual data, peripheral data, sensor data, or simulated input data. The aural data may include at least one of duration, periodicity, meter, beat, pitch, amplitude, timbre, harmonic profile, rhyme, spectral profile, mixing data, sequencing data, digital filter coefficients, and transformation data. The visual data may include at least one of color, tone, saturation, depth of field, focus, light, movement, hue, intensity, chromaticity, luminosity, color decomposition, pixel data, visual filter data, visual effect data, and transformation data. The peripheral data may include at least one of genre, popularity, source of origin, creation date, release date, author, and ownership. The simulated input data may be created to simulate output from an audio-visual device.

A source of the input data may include at least one of a live event and prerecorded media. The live event may include a music concert or a recital. The live event may include a dramatic performance. The live event may include a sporting event. The live event may include an ambient sound. The live event may include a natural occurrence. The natural occurrence may include one or more of weather, a natural phenomenon, an erupting volcano, a celestial state, and a celestial event.

The system may further include a live control facility that provides live control of input data. The live control may include a live creation of media. The media may include one or more of a reproduction of a live event, a representation of a live event, and a simulated event. The media may include one or more of a television program, a radio program, a motion picture, a sound recording, a video recording, an image, a video game, a text display, an audio source, a visual source, a mixed audio-visual source, an algorithm. The media may include a display on one or more of a display device, a television, a computer monitor, a billboard, a sign, a touch screen, a projection monitor, a projection screen, an interactive screen, and interactive display, an interactive monitor, and a display associated with an electronic device. The electronic device may include one or more of a mobile telephone, a wireless electronic mail device, a personal digital assistant, an mp3 player, a CD player, and a radio. The live control may include capturing a sound associated with an event. The sound may be associated with a projected image. The sound may be associated with an audio source. The sound may be associated with a video source.

The system may further include a means for receiving the input data in the input facility. The input data may be received by a microphone connected to the input facility. The input data may be received directly through an audio-visual cable connected to the input facility. The input data may be received wirelessly by the input facility. The input data may be projected on a device connected to the input facility. The input data may be superimposed on a device connected to the input facility. The input data may be received on a device connected to the input facility.

The system may further include a conversion means for the input facility to convert the input data to output signals recognized by the control facility. A location of one or more of the light emitting diodes may be known. A map of the light emitting diodes may be used to represent input data. A map of the light emitting diodes may be used to represent output data.

The input facility may include an interactively controllable coupling between the input data and the control facility. The interactively controllable coupling may be at least one of an audio soundboard, an audio mixing board, an audio editing device, a video editing device, a computer, a personal digital assistant, a housing with a display and switches, a wireless network, an interactive audio/visual device allowing the control of audio and visual output from the device different from the audio and visual input to the device, a mapping device, or a computer-based program allowing interaction with and manipulation of input data. The interactively controllable coupling may be manually controlled. The interactively controllable coupling may be automatically controlled. The interactively controllable coupling may be controlled by a software algorithm. Control of the interactively controllable coupling may be shared by an operator and a software algorithm.

A user interface for control of the interactively controllable coupling includes one or more of a touch screen, a dial, a turntable, a button, a knob, a lever, a trackball, a switch, a haptic interface, a gestural input using proximity sensors, a gestural input using motion sensors, a gestural input using imaging devices, a physiological monitor, a temperature sensor, a decimeter, a video camera, a microphone, a virtual reality headset, and virtual reality gloves.

An output data may be controlled by one or more of a characteristic, the characteristic corresponding to one or more of the input data and the output data, and a control signal. The characteristic may include beats per minute. The characteristic may include pitch. The characteristic may include spectral content. The characteristic may include descriptive metadata. The descriptive metadata includes one or more of genre, title, author, data, and media type. The characteristic may include a visual criteria selected from the group consisting of color, tone, saturation, depth of field, focus, light, movement, hue, intensity, chromaticity, luminosity, color decomposition, pixel data, visual filter data, visual effect data, and transformation data. The characteristic may include a location of input data on a map of the light emitting diodes.

The output data may be controlled based upon at least one external criterion not connected to the input data. The at least one external criterion may include a weather criterion. The at least one external criterion may include a temperature. The at least one external criterion may include a mood criterion. The at least one external criterion may include data representative of a density of an audience. The at least one external criterion may include a season criterion. The at least one external criterion may include a time of day. The at least one criterion may include data representative of previous entertainment. The at least one criterion may include data representative of one or more characteristics of planned subsequent entertainment. The at least one criterion may include data representative of an operator of the system. The at least one criterion may include data representative of physical movements. The physical movements may include movements of one or more of a hand, an arm, a body, and a head. The at least one criterion may include data representative of a body temperature. The at least one criterion may include data representative of a heart rate. The at least one criterion may include data representative of a blood pressure. The output data may be recorded. The output data may be reproduced.

Existing and desired characteristics of the output data can be presented in at least one of a graphical form, a textual form, an automated voice description, or an abstract visual signal. The input data and the output data may be manually coupled. The input data and the output data may be automatically coupled. Existing characteristics of the input data can be presented in at least one of a graphical form, a textual form, an automated voice description, or an abstract visual signal. The input data and the output data may be manually coupled. The input data and the output data may be automatically coupled.

The network facility may use a serial addressing protocol.

It should be appreciated that all combinations of the foregoing concepts and additional concepts discussed in greater detail below are contemplated as being part of the inventive subject matter disclosed herein. In particular, all combinations of claimed subject matter appearing at the end of this disclosure are contemplated as being part of the inventive subject matter disclosed herein.

Definitions used herein are for purposes of illustration and are not intended to be limiting in any way.

As used herein for purposes of the present disclosure, the term "LED" should be understood to include any electroluminescent diode or other type of carrier injection / junction-based system that is capable of generating radiation in response to an electric signal. Thus, the term LED includes, but is not limited to, various semiconductor-based structures that emit light in response to current, light emitting polymers, electroluminescent strips, and the like.

In particular, the term LED refers to light emitting diodes of all types (including semi-conductor and organic light emitting diodes) that may be configured to generate radiation in one or more of the infrared spectrum, ultraviolet spectrum, and various portions of the visible spectrum (generally including radiation wavelengths from approximately 400 nanometers to approximately 700 nanometers). Some examples of LEDs include, but are not limited to, various types of infrared LEDs, ultraviolet LEDs, red LEDs, blue LEDs, green LEDs, yellow LEDs, amber LEDs, orange LEDs, and white LEDs (discussed further below). It also should be appreciated that LEDs may be configured to generate radiation having various bandwidths for a given spectrum (e.g., narrow bandwidth, broad bandwidth).

For example, one implementation of an LED configured to generate essentially white light (e.g., a white LED) may include a number of dies which respectively emit different spectra of electroluminescence that, in combination, mix to form essentially white light. In another implementation, a white light LED may be associated with a phosphor material that converts electroluminescence having a first spectrum to a different second spectrum. In one example of this implementation, electroluminescence having a relatively short wavelength and narrow bandwidth spectrum "pumps" the phosphor material, which in turn radiates longer wavelength radiation having a somewhat broader spectrum. A variety of interfaces, tools, protocols, and the like are disclosed for managing control instructions to light systems. Generally, any arrangement of lighting systems may be mapped into an environment for design and deployment of lighting effect. Various aspects of the environment may include a light system manager for mapping locations of a plurality of light systems, a light system composer for composing lighting shows or effects, and a light system engine for executing lighting shows on various light systems.

Definitions used herein are for purposes of illustration and are not intended to be limiting in any way. As used herein, "Color Kinetics" means Color Kinetics Incorporated, a Delaware corporation with headquarters in Boston, Massachusetts.

As used herein, the term "LED" means any system that is capable of receiving an electrical signal and producing a color of light in response to the signal. The term "LED" should be understood to include light emitting diodes of all types, as well as other types of carrier injection / junction-based systems, or any other semiconductor or organic structures or systems that emit light in response to an electric signal. Thus, LEDs may include light emitting polymers, light emitting strips, semiconductor dies that produce light in response to current, organic LEDs, electro-luminescent strips, and other such systems. Additionally, an "LED" may refer to a single light emitting diode package having multiple semiconductor dies that are individually controlled. It should also be understood that the term "LED" does not restrict the package type of the LED. The term "LED" includes packaged LEDs, non-packaged LEDs, surface mount LEDs, chip on board LEDs and LEDs of all other configurations. It should also be appreciated that LEDs may be configured to generate radiation in one or more of the infrared spectrum, ultraviolet spectrum, and various portions of the visible spectrum (generally including radiation wavelengths from approximately 400 nanometers to approximately 700 nanometers). Some examples of LEDs include, but are not limited to, various types of infrared LEDs, ultraviolet LEDs, red LEDs, blue LEDs, green LEDs, yellow LEDs, amber LEDs, orange LEDs, and white LEDs. It also should be appreciated that LEDs may be configured to generate radiation having various bandwidths or ranges of bandwidths, and may thus be single frequency (or nearly single frequency), narrow band, or broad band sources of light.

It should also be understood that the term LED does not limit the physical and/or electrical package type of an LED. For example, as discussed above, an LED may refer to a single light emitting device having multiple dies that are configured to respectively emit different spectrums of radiation (e.g., that may or may not be individually controllable). Also, an LED may be associated with a phosphor that is considered as an integral part of the LED (e.g., some types of white LEDs). In general, the term LED may refer to packaged LEDs, non-packaged LEDs, surface mount LEDs, chip-on-board LEDs, radial package LEDs, power package LEDs, LEDs including some type of encasement and/or optical element (e.g., a diffusing lens), etc.

An LED system is one type of illumination source. As used herein "illumination source" should be understood to include all illumination sources, including LED systems, as well as incandescent sources, including filament lamps, pyro-luminescent sources, such as flames, candle-luminescent sources, such as gas mantles and carbon arch radiation sources, as well as photo-luminescent sources, including gaseous discharges, fluorescent sources, phosphorescence sources, lasers, electro-luminescent sources, such as electro-luminescent lamps, light emitting diodes, and cathode luminescent sources using electronic satiation, as well as miscellaneous luminescent sources including galvano-luminescent sources, crystallo-luminescent sources, kine-luminescent sources, thermo-luminescent sources, triboluminescent sources, sonoluminescent sources, and radioluminescent sources. Illumination sources may also include luminescent polymers capable of producing primary colors.

The term "illuminate" should be understood to refer to the production of one or more frequencies of radiation by an illumination source. The term "color" should be understood to refer to any frequency or combination of frequencies of radiation within a spectrum, and may include frequencies not only of the visible spectrum, but also frequencies in the infrared and ultraviolet areas of the spectrum, and in other areas of the electromagnetic spectrum.

The term "light source" should be understood to refer to any one or more of a variety of radiation sources, including, but not limited to, LED-based sources as defined above, incandescent sources (e.g., filament lamps, halogen lamps), fluorescent sources, phosphorescent sources, high-intensity discharge sources (e.g., sodium vapor, mercury vapor, and metal halide lamps), lasers, other types of luminescent sources, electro-luminescent sources, pyro-luminescent sources (e.g., flames), candle-luminescent sources (e.g., gas mantles, carbon arc radiation sources), photo-luminescent sources (e.g., gaseous discharge sources), cathode luminescent sources using electronic satiation, galvano-luminescent sources, crystallo-luminescent sources, kine-luminescent sources, thermo-luminescent sources, triboluminescent sources , sonoluminescent sources, radioluminescent sources, and luminescent polymers.

A given light source may be configured to generate electromagnetic radiation within the visible spectrum, outside the visible spectrum, or a combination of both. Hence, the terms "light" and "radiation" are used interchangeably herein. Additionally, a light source may include as an integral component one or more filters (e.g., color filters), lenses, or other optical components. Also, it should be understood that light sources may be configured for a variety of applications, including, but not limited to, indication and/or illumination. An "illumination source" is a light source that is particularly configured to generate radiation having a sufficient intensity to effectively illuminate an interior or exterior space.

The term "spectrum" should be understood to refer to any one or more frequencies (or wavelengths) of radiation produced by one or more light sources. Accordingly, the term "spectrum" refers to frequencies (or wavelengths) not only in the visible range, but also frequencies (or wavelengths) in the infrared, ultraviolet, and other areas of the overall electromagnetic spectrum. Also, a given spectrum may have a relatively narrow bandwidth (essentially few frequency or wavelength components) or a relatively wide bandwidth (several frequency or wavelength components having various relative strengths). It should also be appreciated that a given spectrum may be the result of a mixing of two or more other spectrums (e.g., mixing radiation respectively emitted from multiple light sources).

For purposes of this disclosure, the term "color" is used interchangeably with the term "spectrum." However, the term "color" generally is used to refer primarily to a property of radiation that is perceivable by an observer (although this usage is not intended to limit the scope of this term). Accordingly, the terms "different colors" implicitly refer to different spectrums having different wavelength components and/or bandwidths. It also should be appreciated that the term "color" may be used in connection with both white and non-white light.

The term "color temperature" generally is used herein in connection with white light, although this usage is not intended to limit the scope of this term. Color temperature essentially refers to a particular color content or shade (e.g., reddish, bluish) of white light. The color temperature of a given radiation sample conventionally is characterized according to the temperature in degrees Kelvin (K) of a black body radiator that radiates essentially the same spectrum as the radiation sample in question. The color temperature of white light generally falls within a range of from approximately 700 degrees K (generally considered the first visible to the human eye) to over 10,000 degrees K.

Lower color temperatures generally indicate white light having a more significant red component or a "warmer feel," while higher color temperatures generally indicate white light having a more significant blue component or a "cooler feel." By way of example, a wood burning fire has a color temperature of approximately 1,800 degrees K, a conventional incandescent bulb has a color temperature of approximately 2848 degrees K, early morning daylight has a color temperature of approximately 3,000 degrees K, and overcast midday skies have a color temperature of approximately 10,000 degrees K. A color image viewed under white light having a color temperature of approximately 3,000 degree K has a relatively reddish tone, whereas the same color image viewed under white light having a color temperature of approximately 10,000 degrees K has a relatively bluish tone.

The terms "lighting unit" and "lighting fixture" are used interchangeably herein to refer to an apparatus including one or more light sources of same or different types. A given lighting unit may have any one of a variety of mounting arrangements for the light source(s), enclosure/housing arrangements and shapes, and/or electrical and mechanical connection configurations. Additionally, a given lighting unit optionally may be associated with (e.g., include, be coupled to and/or packaged together with) various other components (e.g., control circuitry) relating to the operation of the light source(s). An "LED-based lighting unit" refers to a lighting unit that includes one or more LED-based light sources as discussed above, alone or in combination with other non LED-based light sources.

The terms "processor" or "controller" are used herein interchangeably to describe various apparatus relating to the operation of one or more light sources. A processor or controller can be implemented in numerous ways, such as with dedicated hardware, using one or more microprocessors, microcontrollers, programmable digital signal processors, programmable gate arrays, programmable logic devices or other devices that can be programmed to perform the various functions discussed herein, or as a combination of dedicated hardware to perform some functions and programmed microprocessors and associated circuitry to perform other functions.

In various implementations, a processor may be associated with one or more storage media generically referred to herein as "memory," e.g., volatile and/or non-volatile computer memory such as RAM, PROM, EPROM, and EEPROM, floppy disks, compact disks, optical disks, magnetic tape, removable or integrated flash memory devices, and so on. In some implementations, the storage media may be encoded with one or more programs that, when executed on one or more processors, perform at least some of the functions discussed herein. Various storage media may be fixed within a processor or controller or may be transportable, such that the one or more programs stored thereon can be loaded into a processor or controller so as to implement various aspects of the systems discussed herein. The terms "program" or "computer program" are used herein in a generic sense to refer to any type of computer code (e.g., high or low level software, microcode, and so on) that can be employed to control operation of a processor.

The term "addressable" as used herein means accessible through an address, or generally configured to receive information (e.g., data) intended for one or more devices, and to selectively respond to particular information therein. Addressable devices may include light sources in general, lighting units or fixtures, processors associated with one or more light sources or lighting units, other non-lighting related devices and so on. The term "addressable" often is used in connection with a networked environment (or a "network," discussed further below), in which multiple devices are coupled in a communicating relationship.

In one network implementation, one or more devices coupled to a network may serve as a controller for one or more other devices coupled to the network (e.g., in a master / slave relationship). In another implementation, a networked environment may include one or more dedicated controllers that are configured to control one or more of the devices coupled to the network. Generally, multiple devices coupled to the network each may have access to data that is present on the communications medium or media; however, a given device may be "addressable" in that it is configured to selectively exchange data with (i.e., receive data from and/or transmit data to) the network, based, for example, on one or more particular identifiers (e.g., "addresses") assigned to it.

The term "network" as used herein refers to any interconnection of two or more devices (including controllers) that facilitates the transport of information (e.g. for device control, data storage, data exchange, diagnostics, etc.) between any two or more devices and/or among multiple devices coupled to the network. As should be readily appreciated, various implementations of networks suitable for interconnecting multiple devices may include any of a variety of network topologies and employ any of a variety of communication protocols. Additionally, in various networks according to the present invention, any one connection between two devices may represent a dedicated connection between the two systems, or alternatively a shared or other non-dedicated connection. In addition to carrying information intended for the two devices, such a non-dedicated connection may carry information not necessarily intended for either of the two devices. Furthermore, it should be readily appreciated that various networks of devices as discussed herein may employ one or more wireless, wired, cable, fiber optic and/or other links to facilitate information transport throughout the network.

The term "user interface" as used herein refers to an interface between a human user or operator and one or more devices that enables communication between the user and the device(s). Examples of user interfaces that may be employed in various implementations of the present invention include, but are not limited to, switches, potentiometers, buttons, dials, sliders, a mouse, keyboard, keypad, various types of game controllers (e.g., joysticks), track balls, display screens, various types of graphical user interfaces (GUIs), touch screens, microphones and other types of sensors that may receive some form of human-generated stimulus and generate a signal in response thereto.

### Brief Description of the Drawings

Fig. 1 shows a lighting unit that may be used with the systems described herein.
Figs. 2A and 2B show a number of lighting units in a networked lighting system.
Fig. 3 shows a system for generating control signals to lighting units.
Fig. 4 shows a method and system for generating a control signal to a lighting unit.
Fig. 5 illustrates a configuration file for data relating to light systems in an environment.
Fig. 6 shows a computer for configuring a lighting system.
Fig. 7 is a representation of an environment with light systems that project light onto portions of the environment.
Fig. 8 is a schematic diagram showing the propagation of an effect through a light system.
Fig. 9 is a flow diagram showing steps for using an image capture device to determine the positions of a plurality of light systems in an environment.
Fig. 10 is a flow diagram showing steps for interacting with a graphical user interface to generate a lighting effect in an environment.

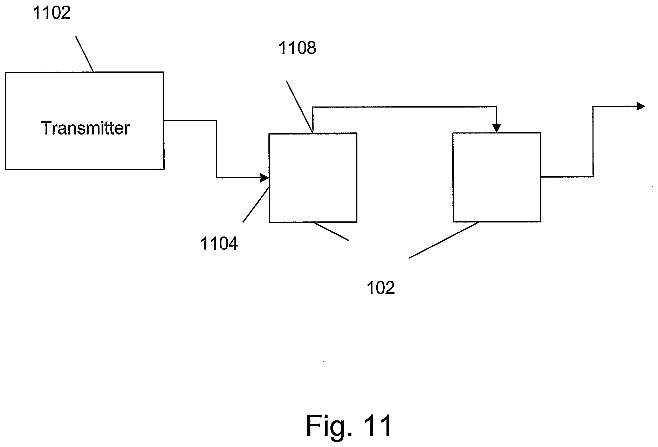

Fig. 11 is a schematic diagram depicting light systems that transmit data that is generated by a network transmitter.
Fig. 12 is a flow diagram showing steps for generating a control signal for a light system using an object-oriented programming technique.
Fig. 13 is a flow diagram for executing a thread to generate a lighting signal for a real world light system based on data from a computer application.
Fig. 15 is a schematic diagram setting out high-level system elements for a light system manager for a plurality of elements.
Fig. 16 provides a schematic diagram with system elements for a light system manager.
Fig. 17 is a schematic diagram with additional system elements for the light system manager of Fig. 16.
Fig. 18 is a schematic diagram with additional system elements for the light system manager of Fig. 16.
Fig. 19 shows a representation of a plurality of lighting units in a coordinate system.
Fig. 20 shows a representation of a string of lighting units formed into an array.
Fig. 21 shows a string of lighting units in a rectangular perimeter configuration.
Fig. 22 shows a string of lighting units in a triangular array.
Fig. 23 shows a string of lighting units used to form a character.
Fig. 24 shows a string of lighting units in a three-dimensional configuration.
Fig. 25 shows a user interface for a mapping facility for a light system manager.
Fig. 26 shows additional aspects of the user interface of Fig. 25.
Fig. 27 shows additional aspects of the user interface of Fig. 25.
Fig. 28 shows additional aspects of the user interface of Fig. 25.
Fig. 29 shows additional aspects of the user interface of Fig. 25.
Fig. 30 shows additional aspects of the user interface of Fig. 25.
Fig. 31 shows additional aspects of the user interface of Fig. 25.
Fig. 32 shows additional aspects of the user interface of Fig. 25.
Fig. 33 shows groupings of lights within an array.
Fig. 34 shows additional aspects of the user interface of Fig. 25.
Fig. 35 shows additional aspects of the user interface of Fig. 25.
Fig. 36 shows a dragging line interface for forming groups of lighting units.
Fig. 37 shows additional aspects of the user interface of Fig. 25.
Fig. 38 shows additional aspects of the user interface of Fig. 25.
Fig. 39 is a flow diagram that shows steps for using a mapping facility of a light system manager.
Fig. 40 shows a user interface for a light show composer.
Fig. 41 shows parameters for an effect that can be composed by the light system composer of Fig. 40.
Fig. 42 shows aspects of linking of effects in a light system composer.
Fig. 43 shows additional aspects of linking of effects.
Fig. 44 shows additional aspects of a user interface for a light show composer.
Fig. 45 shows additional aspects of a user interface for a light show composer.
Fig. 46 shows additional aspects of a user interface for a light show composer.
Fig. 47 shows additional aspects of a user interface for a light show composer.
Fig. 48 shows additional aspects of a user interface for a light show composer.
Fig. 49 shows additional aspects of a user interface for a light show composer.
Fig. 50 shows additional aspects of a user interface for a light show composer.
Fig. 51 shows additional aspects of a user interface for a light show composer.
Fig. 52 shows additional aspects of a user interface for a light show composer.
Fig. 53 shows additional aspects of a user interface for a light show composer.
Fig. 54 shows additional aspects of a user interface for a light show composer.
Fig. 55 shows additional aspects of a user interface for a light show composer.
Fig. 56 shows additional aspects of a user interface for a light show composer.
Fig. 57 shows additional aspects of a user interface for a light show composer.
Fig. 58 shows additional aspects of a user interface for a light show composer.
Fig. 59 shows additional aspects of a user interface for a light show composer.
Fig. 60 shows additional aspects of a user interface for a light show composer.
Fig. 61 shows additional aspects of a user interface for a light show composer.
Fig. 62 shows additional aspects of a user interface for a light show composer.
Fig. 63 is a schematic diagram showing elements for a user interface for a light system engine.
Fig. 64 shows a user interface for a configuration system for a light system manager.
Fig. 65 shows a user interface for a playback system for a light system manager.
Fig. 66 shows a user interface for a download system for a light system manager.
Fig. 67 is a schematic diagram for a web-based interface for supplying control to a light system engine.
Fig. 68 is a schematic diagram showing a computer system for relating audio signals to lighting control signals.
Fig. 69 is a schematic diagram for another embodiment of a system for relating an audio signal and a lighting control signal.
Fig. 70 is a schematic diagram for another embodiment of a system for relating an audio signal and a lighting control signal.
Fig. 71 is a diagram of high-level components of an entertainment system that provides lighting control.
Fig. 72 is a schematic diagram of a lighting control system that also controls one or more entertainment systems.
Fig. 73 shows a user interface for a lighting control system.
Fig. 74 shows a user interface for a lighting control system.
Fig. 75 shows an entertainment lighting system deployed in an entertainment venue.
Fig. 76 shows a user interface for an entertainment lighting system.
Fig. 77 shows a user interface for an entertainment lighting system.

### Detailed Description

Methods and systems are provided herein for supplying control signals for lighting systems, including methods and systems for authoring effects and shows for lighting systems.

Various embodiments of the present invention are described below, including certain embodiments relating particularly to LED-based light sources. It should be appreciated, however, that the present invention is not limited to any particular manner of implementation, and that the various embodiments discussed explicitly herein are primarily for purposes of illustration. For example, while many of the examples herein describe LED-based implementations, the various concepts discussed herein may be usefully employed in a variety of environments involving LED-based light sources, other types of light sources not including LEDs, environments that involve both LEDs and other types of light sources in combination, and environments that involve non-lighting-related devices alone or in combination with various types of light sources. It will be understood that the term environment or lighting environment, as used herein, are intended to refer to any environment or venue in which a lighting system and/or other related devices might be deployed to generate lighting effects, unless a different meaning is explicitly stated or otherwise clear from the context.

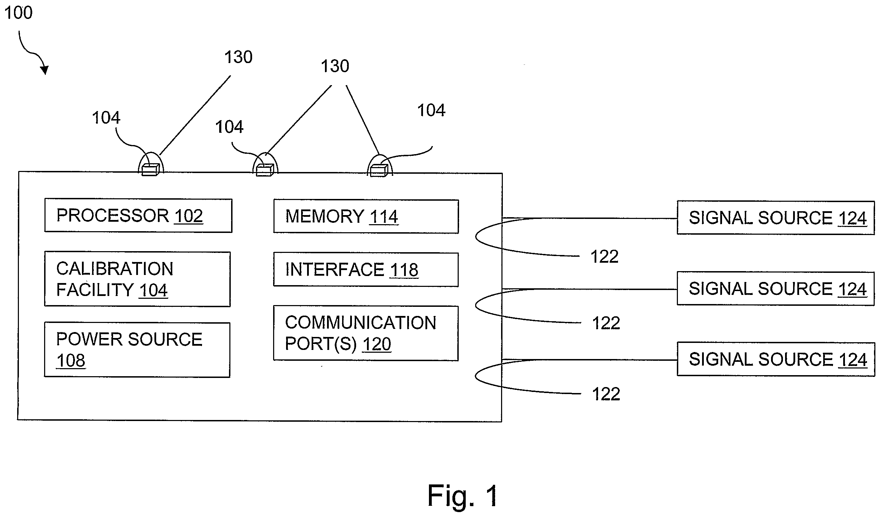

Fig. 1 shows a lighting unit 100 that may serve as a device in a lighting environment. Some examples of LED-based lighting units similar to those that are described below in connection with Fig. 1 may be found, for example, in U.S. Patent No. 6,016,038, issued January 18, 2000 to Mueller et al., entitled "Multicolored LED Lighting Method and Apparatus," and U.S. Patent No. 6,211,626, issued April 3, 2001 to Lys et al, entitled "Illumination Components," which patents are both hereby incorporated herein by reference.

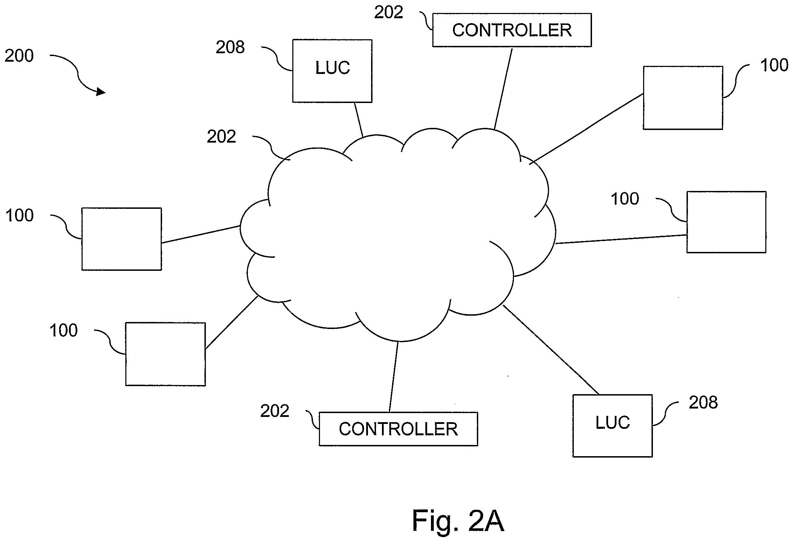

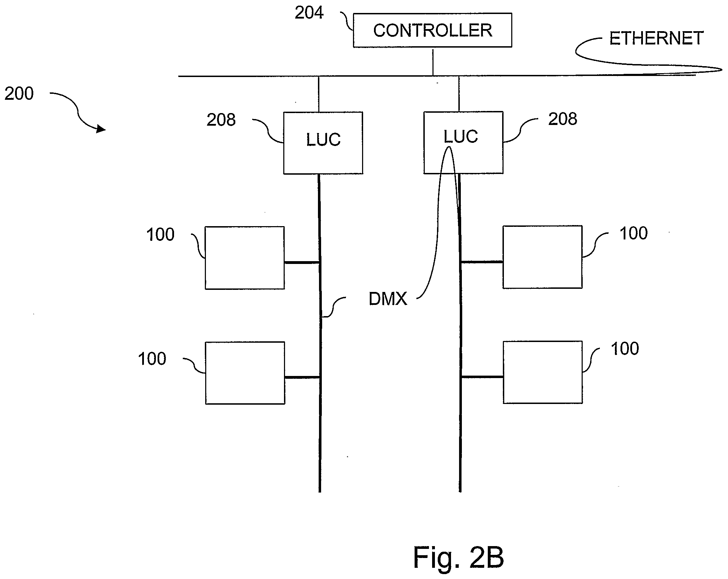

The lighting unit 100 shown in Fig. 1 may be used alone or together with other similar lighting units in a system of lighting units, such as the system discussed below in connection with Fig. 2. Used alone or in combination with other lighting units, the lighting unit 100 may be employed in a variety of applications including, but not limited to, interior or exterior space illumination in general, direct or indirect illumination of objects or spaces, theatrical or other entertainment-based and/or special effects illumination, decorative illumination, safety-oriented illumination, vehicular illumination, illumination of displays and/or merchandise (e.g. for advertising and/or in retail/consumer environments), combined illumination and communication systems, etc., as well as for various indication and informational purposes.

Additionally, one or more lighting units 100 may be implemented in a variety of products including, but not limited to, various forms of light modules or bulbs having various shapes and electrical/mechanical coupling arrangements (including replacement or "retrofit" modules or bulbs adapted for use in conventional sockets or fixtures), as well as a variety of consumer and/or household products such as night lights, toys, games or game components, entertainment components or systems, utensils, appliances, kitchen aids, cleaning products, and the like.

The lighting unit 100 may include one or more light sources 104 (shown collectively as 104), wherein one or more of the light sources may be an LED-based light source that includes one or more light emitting diodes (LEDs). In one aspect of this embodiment, any two or more of the light sources 104 may be adapted to generate radiation of different colors (e.g. red, green, and blue, respectively). Although Fig. 1 shows three light sources 104, it should be appreciated that the lighting unit 100 is not limited in this respect, as different numbers and various types of light sources (all LED-based light sources, LED-based and non-LED-based light sources in combination, etc.) adapted to generate radiation of a variety of different colors, including essentially white light, may be employed in the lighting unit 100, as discussed further below.

As shown in Fig. 1, the lighting unit 100 also may include a processor 102 that is configured to output one or more control signals to drive the light sources 104 so as to generate various intensities of light from the light sources 104. For example, in one implementation, the processor 102 may be configured to output at least one control signal for each light source 104 so as to independently control the intensity of light generated by each light source 104. Some examples of control signals that may be generated by the processor to control the light sources include, but are not limited to, pulse modulated signals, pulse width modulated signals (PWM), pulse amplitude modulated signals (PAM), pulse code modulated signals (PCM) analog control signals (e.g., current control signals, voltage control signals), combinations and/or modulations of the foregoing signals, or other control signals. In one aspect, the processor 102 may control other dedicated circuitry (not shown) which in turn controls the light sources 104 so as to vary their respective intensities.

One or more of the light sources 104 may include a group of multiple LEDs or other types of light sources (e.g., various parallel and/or serial connections of LEDs or other types of light sources) that are controlled together by the processor 102. Additionally, it should be appreciated that one or more of the light sources 104 may include one or more LEDs that are adapted to generate radiation having any of a variety of spectra (i.e., wavelengths or wavelength bands), including, but not limited to, various visible colors (including essentially white light), various color temperatures of white light, ultraviolet, or infrared. LEDs having a variety of spectral bandwidths (e.g., narrow band, broader band) may be employed in various implementations of the lighting unit 100.

In another aspect, the lighting unit 100 may be constructed and arranged to produce a wide range of variable color radiation. For example, the lighting unit 100 may be particularly arranged such that the processor-controlled variable intensity light generated by two or more of the light sources 104 combines to produce a mixed colored light (including essentially white light having a variety of color temperatures). In particular, the color (or color temperature) of the mixed colored light may be varied by varying one or more of the respective intensities of the light sources (e.g., in response to one or more control signals output by the processor 102). Furthermore, the processor 102 may be particularly configured (e.g., programmed) to provide control signals to one or more of the light sources so as to generate a variety of static or time-varying (dynamic) multi-color (or multi-color temperature) lighting effects.

Thus, the lighting unit 100 may include a wide variety of colors of LEDs in various combinations, including two or more of red, green, and blue LEDs to produce a color mix, as well as one or more other LEDs to create varying colors and color temperatures of white light. For example, red, green and blue can be mixed with amber, white, UV, orange, IR or other colors of LEDs. Such combinations of differently colored LEDs in the lighting unit 100 can facilitate accurate reproduction of a host of desirable spectrums of lighting conditions, examples of which include, but are not limited to, a variety of outside daylight equivalents at different times of the day, various interior lighting conditions, lighting conditions to simulate a complex multicolored background, and the like. Other desirable lighting conditions can be created by removing particular pieces of spectrum that may be specifically absorbed, attenuated or reflected in certain environments. Water, for example tends to absorb and attenuate most non-blue and non-green colors of light, so underwater applications may benefit from lighting conditions that are tailored to emphasize or attenuate some spectral elements relative to others.

The lighting unit 100 also may include a memory 114 to store various information. For example, the memory 114 may be employed to store one or more lighting programs for execution by the processor 102 (e.g., to generate one or more control signals for the light sources), as well as various types of data useful for generating variable color radiation (e.g., calibration information, discussed further below). The memory 114 also may store one or more particular identifiers (e.g., a serial number, an address, etc.) that may be used either locally or on a system level to identify the lighting unit 100. The memory 114 may include read-only memory, which may be programmable read-only memory, for storing information such as identifiers or boot information. In various embodiments, identifiers may be pre-programmed by a manufacturer, for example, and may be either alterable or non-alterable thereafter (e.g., via some type of user interface located on the lighting unit, via one or more data or control signals received by the lighting unit, etc.). Alternatively, such identifiers may be determined at the time of initial use of the lighting unit in the field, and again may be alterable or non-alterable thereafter.

One issue that may arise in connection with controlling multiple light sources 104 in the lighting unit 100, and controlling multiple lighting units 100 in a lighting system relates to potentially perceptible differences in light output between substantially similar light sources. For example, given two virtually identical light sources being driven by respective identical control signals, the actual intensity of light output by each light source may be perceptibly different. Such a difference in light output may be attributed to various factors including, for example, slight manufacturing differences between the light sources, normal wear and tear over time of the light sources that may differently alter the respective spectrums of the generated radiation, or other environmental factors or normal fabrication variations. For purposes of the present discussion, light sources for which a particular relationship between a control signal and resulting intensity are not known are referred to as "uncalibrated" light sources.

The use of one or more uncalibrated light sources as light sources 104 in the lighting unit 100 may result in generation of light having an unpredictable, or "uncalibrated," color or color temperature. For example, consider a first lighting unit including a first uncalibrated red light source and a first uncalibrated blue light source, each controlled by a corresponding control signal having an adjustable parameter in a range of from zero to 255 (0-255). For purposes of this example, if the red control signal is set to zero, blue light is generated, whereas if the blue control signal is set to zero, red light is generated. However, it both control signals are varied from non-zero values, a variety of perceptibly different colors may be produced (e.g., in this example, at very least, many different shades of purple are possible). In particular, perhaps a particular desired color (e.g., lavender) is given by a red control signal having a value of 125 and a blue control signal having a value of 200.

Now consider a second lighting unit including a second uncalibrated red light source substantially similar to the first uncalibrated red light source of the first lighting unit, and a second uncalibrated blue light source substantially similar to the first uncalibrated blue light source of the first lighting unit. As discussed above, even if both of the uncalibrated red light sources are driven by respective identical control signals, the actual intensity of light output by each red light source may be perceptibly different. Similarly, even if both of the uncalibrated blue light sources are driven by respective identical control signals, the actual intensity of light output by each blue light source may be perceptibly different.

With the foregoing in mind, it should be appreciated that if multiple uncalibrated light sources are used in combination in lighting units to produce a mixed colored light as discussed above, the observed color (or color temperature) of light produced by different lighting units under identical control conditions may be perceivably different. Specifically, consider again the "lavender" example above; the "first lavender" produced by the first lighting unit with a red control signal of 125 and a blue control signal of 200 indeed may be perceptibly different than a "second lavender" produced by the second lighting unit with a red control signal of 125 and a blue control signal of 200. More generally, the first and second lighting units generate uncalibrated colors by virtue of their uncalibrated light sources.

In view of the foregoing, the lighting unit 100 may include a calibration facility 104 to facilitate the generation of light having a calibrated (e.g., predictable, reproducible) color at any given time. In one aspect, the calibration facility 104 may be configured to adjust the light output of at least some light sources 104 of the lighting unit 100 so as to compensate for perceptible differences between similar light sources used in different lighting units.

For example, the processor 102 of the lighting unit 100 may be configured to control one or more of the light sources 104 so as to output radiation at a calibrated intensity that substantially corresponds in a predetermined manner to a control signal for the light source(s) 104. As a result of mixing radiation having different spectra and respective calibrated intensities, a calibrated color is produced. One or more calibration values for one or more of the light sources 104 may be stored in the memory 114, and the processor 102 may be programmed to apply the respective calibration values to the control signals for the corresponding light sources 104 so as to generate the calibrated intensities.

In one aspect, calibration values may be determined once (e.g., during a lighting unit manufacturing/testing phase) and stored in the memory 114 for use by the processor 102. In another aspect, the processor 102 may be configured to derive one or more calibration values dynamically (e.g. from time to time) with the aid of one or more photosensors (not shown) or other suitable devices. The photosensor(s) may be one or more external components coupled to the lighting unit 100, or alternatively may be integrated as part of the lighting unit 100 itself. A photosensor is one example of a signal source that may be integrated or otherwise associated with the lighting unit 100, and monitored by the processor 102 in connection with the operation of the lighting unit 100. Other examples of such signal sources are discussed further below.

The processor 102 may derive one or more calibration values by applying a reference control signal to a light source 104, and measuring (e.g., via one or more photosensors) an intensity of radiation generated in response. The processor 102 may be programmed to then make a comparison of the measured intensity and at least one reference value (e.g., representing an intensity that nominally would be expected in response to the reference control signal). Based on such a comparison, the processor 102 may determine one or more calibration values for the light source 104. In particular, the processor 102 may derive a calibration value such that, when applied to the reference control signal, the light source 104 outputs radiation having an intensity the corresponds to the reference value (i.e., the "expected" intensity).

In various aspects, one calibration value may be derived for an entire range of control signal/output intensities for a given light source 104. The calibration value may serve as a source value for a formula that calibrates light output, such as through a straight line approximation of calibration over the range of operation of the light source 104. Alternatively, multiple calibration values may be derived for a given light source (i.e., a number of calibration value "samples" may be obtained) that are respectively applied over different control signal/output intensity ranges, to approximate a nonlinear calibration function in a piecewise linear manner.

The lighting unit 100 may include one or more interfaces 118 that are provided to facilitate any of a number of user-selectable settings or functions (e.g., generally controlling the light output of the lighting unit 100, changing and/or selecting various pre-programmed lighting effects to be generated by the lighting unit, changing and/or selecting various parameters of selected lighting effects, setting particular identifiers such as addresses or serial numbers for the lighting unit, etc.). Communication with the interface 118 of the lighting unit 100 may be accomplished through wire or cable, or wireless transmission. The interface 118 may present external controls that are, for example, physical controls such as switches, dials, buttons, or the like, programmatic controls, such as an application programming interface, or a user interface such as a graphical user interface on a computer. Similarly, the interface 118 may simply present a network interface that may be accessed through any corresponding network facility, and may be coupled in turn to a computer that provides a graphical user interface to a user for controlling the lighting unit 100. All such interfaces may be used, alone or in combination, to control operation of the lighting unit 100 described herein.

In one implementation, the processor 102 of the lighting unit 100 monitors the interface 118 and controls one or more of the light sources 104 based at least in part on signals, such as user signals, provided through the interface 118. For example, the processor 102 may be configured to respond to operation of the interface 118 by originating one or more control signals for controlling one or more of the light sources 104. Alternatively, the processor 102 may be configured to respond by selecting one or more pre-programmed control signals stored in memory 114, modifying control signals generated by executing a lighting program, selecting and executing a new lighting program from memory 114, or otherwise affecting the radiation generated by one or more of the light sources 104.

In a manually controlled embodiment, the interface 118 may include one or more switches (e.g., a standard wall switch) that interrupt power to the processor 102. The processor 102 may be configured to monitor the power as controlled by the switch of the interface 118, and in turn control one or more of the light sources 104 based at least in part on a duration of a power interruption caused by operation of the interface118. As discussed above, the processor 102 may be particularly configured to respond to a predetermined duration of a power interruption by, for example, selecting one or more pre-programmed control signals stored in memory 114, modifying control signals generated by executing a lighting program, selecting and executing a new lighting program from memory 114, or otherwise affecting the radiation generated by one or more of the light sources 104.

Fig. 1 also illustrates that the lighting unit 100 may be configured to receive one or more signals 122 from one or more other signal sources 124. In one implementation, the processor 102 of the lighting unit may use the signal(s) 122, either alone or in combination with other control signals (e.g., signals generated by executing a lighting program), to control one or more of the light sources 104 in a manner similar to that discussed above in connection with the interface 118. At the same time, the interface 118 may include circuitry and/or software to receive and interpret the control signals 122 from the signal sources 124.

Examples of the signal(s) 122 that may be received and processed by the processor 102 include, but are not limited to, one or more audio signals, video signals, power signals, various types of data signals, signals representing information obtained from a network (e.g., the Internet), signals representing one or more detectable/sensed conditions, signals from lighting units, signals consisting of modulated light, etc. In various implementations, the signal source(s) 124 may be located remotely from the lighting unit 100, or included as a component of the lighting unit 100. For example, in one embodiment, a signal from one lighting unit could be sent over a network to another lighting unit.

Some examples of a signal source 124 that may be employed in, or used in connection with, the lighting unit 100 include any of a variety of sensors or transducers that generate one or more signals 122 in response to some stimulus. Examples of such sensors include, but are not limited to, various types of environmental condition sensors, such as thermally sensitive (e.g., temperature, infrared) sensors, humidity sensors, motion sensors, photosensors/light sensors (e.g., sensors that are sensitive to one or more particular spectra of electromagnetic radiation), various types of cameras, sound or vibration sensors or other pressure/force transducers (e.g., microphones, piezoelectric devices), and the like.

Additional examples of a signal source 124 include various metering/detection devices that monitor electrical signals or characteristics (e.g., voltage, current, power, resistance, capacitance, inductance, etc.) or chemical/biological characteristics (e.g., acidity, a presence of one or more particular chemical or biological agents, bacteria, etc.) and provide one or more signals 122 based on measured values of the signals or characteristics. Yet other examples of a signal source 124 include various types of scanners, image recognition systems, voice or other sound recognition systems, artificial intelligence and robotics systems, and the like. A signal source 124 could also be another lighting unit 100, a processor 102, or any one of many available signal generating devices, such as media players, MP3 players, computers, DVD players, CD players, television signal sources, camera signal sources, microphones, speakers, telephones, cellular phones, instant messenger devices, SMS devices, wireless devices, personal organizer devices, and many others.

The lighting unit 100 also may include one or more optical elements 130 to optically process the radiation generated by the light sources 104. For example, one or more optical elements 130 may be configured to alter both of a spatial distribution and a propagation direction of radiation from the light sources 104. In particular, one or more optical elements may be configured to change a diffusion angle of the generated radiation. In one aspect of this embodiment, one or more optical elements 130 may be particularly configured to variably change one or both of a spatial distribution and a propagation direction of the generated radiation (e.g., in response to some electrical and/or mechanical stimulus). Examples of optical elements that may be included in the lighting unit 100 include, but are not limited to, reflective materials, refractive materials, diffusing materials, translucent materials, filters, lenses, mirrors, and fiber optics. The optical element 130 also may include a phosphorescent material, luminescent material, or other material capable of responding to or interacting with radiation from the light sources 104.

The lighting unit 100 may include one or more communication ports 120 to facilitate coupling of the lighting unit 100 to any of a variety of other devices. For example, one or more communication ports 120 may facilitate coupling multiple lighting units together as a networked lighting system, in which at least some of the lighting units are addressable (e.g., have particular identifiers or addresses) and are responsive to particular data transported across the network. It will be appreciated that the interface 118 may also serve as a communication port, and that the communication port 120 may include an interface for any suitable wired or wireless communications, and that notwithstanding the separate description of these components, all such possible combinations are intended to be included within the lighting unit 100 as described herein.

In a networked lighting system environment, as discussed in greater detail further below, the processor 102 of the lighting unit 100 may be configured to respond to particular data (e.g., lighting control commands) received over the network (not shown) that pertain to it. Once the processor 102 identifies particular data intended for it, such as by examining addressing information therein, it may read the data and, for example, change the lighting conditions produced by its light sources 104 according to the received data (e.g., by generating appropriate control signals to the light sources 104). In one aspect, the memory 114 of the lighting unit 100 (and other lighting units in a network) may be loaded, for example, with a table of lighting control signals that correspond with data the processor 102 receives. Once the processor 102 receives data from the network, the processor 102 may consult the table to select the control signals that correspond to the received data, and control the light sources 104 of the lighting unit 100 accordingly.

In one aspect of this embodiment, the processor 102 may be configured to interpret lighting instructions/data that are received in a DMX protocol (as discussed, for example, in U.S. Patents 6,016,038 and 6,211,626), which is a lighting command protocol conventionally employed in the lighting industry for some programmable lighting applications. However, it should be appreciated that other communication protocols may be suitably employed with the systems described herein.

The lighting unit 100 may include and/or be coupled to one or more power sources 108. The power source(s) 108 may include, but are not limited to, AC power sources, DC power sources, batteries, solar-based power sources, thermoelectric or mechanical-based power sources and the like. Additionally, in one aspect, the power source(s) 108 may include or be associated with one or more power conversion devices that convert power received by an external power source to a form suitable for operation of the lighting unit 100.

While not shown explicitly in Fig. 1, the lighting unit 100 may be implemented in any one of several different structural configurations. Examples of such configurations include, but are not limited to, an essentially linear or curvilinear configuration, a circular configuration, an oval configuration, a rectangular configuration, combinations of the foregoing, various other geometrically shaped configurations, various two or three dimensional configurations, and the like.

The lighting unit 100 also may have any one of a variety of mounting arrangements, enclosure/housing arrangements and shapes to partially or fully enclose the light sources 104, and/or provide electrical and mechanical connection configurations to the lighting unit 100 or the light sources 104. In particular, a lighting unit 100 may be configured as a replacement or "retrofit" to engage electrically and mechanically in a conventional socket or fixture arrangement (e.g., an Edison-type screw socket, a halogen fixture arrangement, a fluorescent fixture arrangement, etc.). Additionally, the mounting arrangements may include electro-mechanical devices for controlling light output, such as robotics to point a lighting unit 100 in various directions, a focus control to change focus of a beam of light emitting from the lighting unit 100, or a selector to change filters for light emitted from the lighting unit 100. All such electro-mechanical systems may be including in the lighting unit 100, and may be employed to generate the various lighting effects described herein.

Additionally, one or more optical elements 130 as discussed above may be partially or fully integrated with an enclosure/housing arrangement for the lighting unit 100. Furthermore, the lighting unit 100 may optionally be associated with (e.g., include, be coupled to and/or packaged together with) various other components such as control circuitry including the processor 102 and/or memory 114, one or more sensors, transducers, or other signal sources 124, interfaces 118 (including user interfaces and controls), displays, power sources 108, power conversion devices, and other components relating to the operation of the light source(s) 300.

Fig. 2A illustrates an example of a networked lighting system 200, also referred to herein as a lighting system 200. As shown in Fig. 2, a number of lighting units 100, such as those described above with reference to Fig. 1, may be interconnected in a communicating relationship through a network 202 to form the networked lighting system 200. It should be appreciated, however, that the particular configuration, number, and arrangement of lighting units 100 shown in Fig. 2 is for purposes of illustration only, and that the invention is not limited to the particular system topology shown in Fig. 2. More generally, a lighting system 200 or networked lighting system 200 will be understood to refer to any number of lighting units 100 and/or other devices that may be controlled to generate lighting effects as described herein.

While not shown explicitly in Fig. 2A, it should be appreciated that the networked lighting system 200 may be configured flexibly to include any of the components discussed above, such as the signal sources 124, interfaces 118, communication ports 120, and other components and signals discussed above with reference to Fig. 1, either as stand alone components, integrated components or shared components. Thus for example, one or more user interfaces and/or one or more signal sources such as sensors/transducers may constitute "shared resources" in the networked lighting system 200 that may be used in connection with controlling any one or more of the lighting units 100 of the system.

As shown in Fig. 2A, the lighting system 200 may include one or more lighting unit controllers ("LUCs") 208, wherein each LUC 208 is responsible for communicating with and generally controlling one or more lighting units 100 coupled to it. Although Fig. 2 illustrates two LUCs 208 controlling four lighting units 100, it should be appreciated that the systems described herein are not limited this respect, as different numbers of lighting units 100 may be coupled to a given LUC 208 in a variety of different configurations including serial connections, parallel connections, networked connections, and combinations thereof. It will further be appreciated that in certain configurations, there may be one LUC 208 for each lighting unit 100, or one LUC 208 for all lighting units 100 in the lighting system 200, or various combinations of LUCs 208 and lighting units 100. Further, the lighting units 100 and/or LUCs 208 may be interconnected using a variety of different communication media and protocols.

In the system 200 of Fig. 2A, each LUC 208 in turn may be coupled to a central controller 204 that is configured to communicate with one or more LUCs 208. Although Fig. 2A shows two LUCs 208 and one central controller 204 in a generic network configuration, it should be appreciated that according to various embodiments, different numbers of LUCs 208 may be coupled to the central controller 204. Additionally, the LUCs 208 and the central controller 204 may be coupled together in a variety of configurations using a variety of different communication media and protocols to form the networked lighting system 200. Moreover, it should be appreciated that the interconnection of LUCs 208 and the central controller 204, and the interconnection of lighting units 100 to respective LUCs 208, may be accomplished in different manners (e.g., using different configurations, communication media, and protocols).

For example, according to one embodiment of networked lighting system 200, the central controller 204 may communicate with the LUCs 208 using an Ethernet network, and in turn the LUCs 208 may use DMX-based communications with the lighting units 100. This topology is depicted generally in Fig. 2A as a specific example of a networked lighting system 200 that may be used with the systems described herein. Note that the depicted Ethernet and DMX networks continue past the depicted devices to illustrate the number of additional devices that can be accommodated by these network protocols. In one aspect of this embodiment, each LUC 208 may be configured as an addressable Ethernet-based controller and accordingly may be identifiable to the central controller 204 via a unique address (or a unique group of addresses) using an Ethernet-based protocol. In this manner, the central controller 204 may be configured to support Ethernet communications throughout a network of coupled LUCs 208, and each LUC 208 may in turn communicate lighting control information to one or more lighting units 100 coupled to the LUC 208 through a DMX-based network.

In the networked lighting system 200 of Figs. 2A and/or 2B, the LUCs 208 may be configured to be "intelligent" in that the central controller 204 may be configured to communicate higher level commands to the LUCs 208 that need to be interpreted by the LUCs 208 before lighting control information can be forwarded to the lighting units 100. For example, a lighting system user may want to generate a color changing effect that varies colors from one lighting unit 100 to another lighting unit 100, or across a number of the lighting units 100 in such a way as to generate the appearance of a propagating rainbow of colors ("rainbow chase"), given a particular placement of lighting units 100 with respect to one another. In this example, the user may provide a simple instruction to the central controller 204 to accomplish this, and in turn the central controller 204 may communicate over the Ethernet network to one or more LUCs 208 and provide a high level command to generate a "rainbow chase." The command may contain timing, intensity, hue, saturation or other relevant information, for example. When an intended LUC 208 receives such a command, it may then interpret the command so as to generate the appropriate lighting control signals which it then communicates using a DMX protocol via any of a variety of signaling techniques (e.g., PWM) to one or more lighting units 100 that it controls, or it may transmit intermediate level lighting control signals that are in turn processed by the lighting units 100 into drive signals for associated LEDs 104.

It should again be appreciated that the foregoing example of using multiple different communication implementations (e.g., Ethernet/DMX) in a lighting system according to one embodiment of the present invention is for purposes of illustration only, and that the invention is not limited to this particular example. Rather, the generic network architecture depicted in Fig. 2A should be understood to include any network protocol or combination of network protocols that may be usefully employed with the lighting systems described herein.

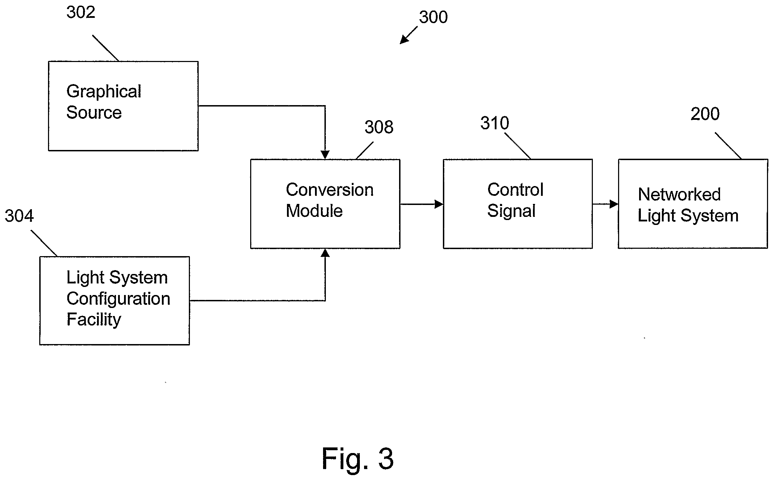

Figure 3 shows a system for generating control signals to lighting units. The system may include a graphical source 302, a configuration facility 304, a conversion module 308, a control signal 310, and a light system 100, which may be any of the light systems 100 described above.

The graphical source 302 may be any source for a graphical representation of an image, such as a drawing or photograph, or an image source file using any of a variety of formats for storing graphical file such as bit-mapped files, JPEG files, PNG files, PDF files, and so on. The static image may include images captured from a computer screen, television screen, or other video output. The static image may also be a printed or hand-rendered image, or any other image in any tangible form or media. The graphical representation may also be an image generated by a computer application, such as any number of graphical computer tools, page layout programs, software design studios, computer-assisted design tools, or a rendering program or routine for more general aesthetic images such as screen savers, skins, and visualizations used in many audio-visual and media programs. Specific examples of software that may be used to render images include the Flash media family of programs offered by Macromedia, Incorporated, as well as Adobe Illustrator, Adobe Photoshop, and Adobe LiveMotion. There are many other programs that can be used to generate both static and dynamic images. For example, Microsoft Corporation provides a number of software products for image manipulation including Paint for working directly with bit-mapped files, a generic set of drawing tools available in the Microsoft Office suite, and DirectX software libraries for rendering three-dimensional objects. Other formats such as vector graphics formats, printing formats, media compression formats, audio-visual communication formats, and so on provide various techniques for creating and communicating images in computer form. All such programs and formats may be usefully employed as graphical sources 302 in the systems described herein.

It will be generally appreciated that images provided by the graphical source 302 may never be displayed, and may be provided directly to other components such as the conversion module 308 directly in digital form. Thus visual effects such as a flame may be synthesized without human intervention. Additionally, some visual effects may be applied to still or moving images including morphs, fades, swipes, and other well known effects in the audio visual arts. Algorithms or functions may be applied to still and/or moving images to generate these effects as graphical representations without display or human intervention. Generally, lighting units 100 in a networked lighting system 200 may generate effects without requiring viewing or review on a display device prior to rendering in the networked lighting system 200.

The graphical source 302 may be a program for creating lighting effects in a two-or three-dimensional lighting environment. For example, a user may specify an explosion lighting effect. The desired effect may be an initial bright white light in a corner of a room with light traveling away from the corner (possibly with changing color) at a specified speed and in a specified direction. In an embodiment, the program may execute a function or algorithm that produces an event such as an explosion, a lighting strike, headlights, a train passing through a room, a bullet shot through a room, a light moving through a room, a sunrise across a room, or any other event that might be realized with a number of lighting units 100 in a space. The function or algorithm may represent an image such as lights swirling in a room, balls of light bouncing in a room, sounds bouncing in a room, or other images. The function or algorithm may also represent randomly generated effects, repeating effects or other effects.

Referring again to Fig. 3, a light system configuration facility 304 may accomplish further steps for the methods and systems described herein. The light system configuration facility may generate a system configuration file, configuration data or other configuration information for a lighting system, such as the one depicted in connection with Figs. 1 and 2.

The light system configuration facility 304 can represent individual lighting units 100 or a networked lighting system 200, or a number of networked lighting systems 200, or any combination of these, and may provide configuration data on the capabilities and control of individual lighting units 100, as well as information concerning physical locations of lighting units 100. In this context, lighting units 100 may include, for example, tiles including arrays of LEDs, organic LEDs (which may be fabricated as luminous sheets), cove lights, ceiling lights, spot lights, and so on. Similarly, the configuration facility 304 may determine, or be provided with, surfaces that can be lit by various lighting units 100. For example, where a lighting effect calls for a particular section of a room to change in hue, saturation or brightness, control signals may be provided to direct one or more lighting units 100 at walls, or regions of walls in the appropriate section of the room.

Referring still to Fig. 3, an image from the graphical source 302 and the configuration information from the light system configuration facility 304 can be delivered to a conversion module 308, which may combine the image with position information for lighting units 100 and an associated lighting environment (e.g., the room described above). The combined information may be converted by the conversion module 308 into suitable control signals 310 for communication to the networked light system 200. The conversion module 308 may, for example, map positions in the image directly to positions of light units 100 in the environment on a pixel-by-pixel basis from the image to the light units 100. Other techniques may also be applied, such as converting or otherwise processing image data to employ light units in various ways (e.g., projected light versus directly viewed light) to achieve desired lighting effects based upon the image data and the environment. Thus the image may be mapped to surfaces in the environment that can be light by the lighting units 100. Many different mapping relationships between image data, lighting units 100, and an environment can be envisioned and are intended to fall within the scope of functions that may be performed by the conversion module 308 described herein.

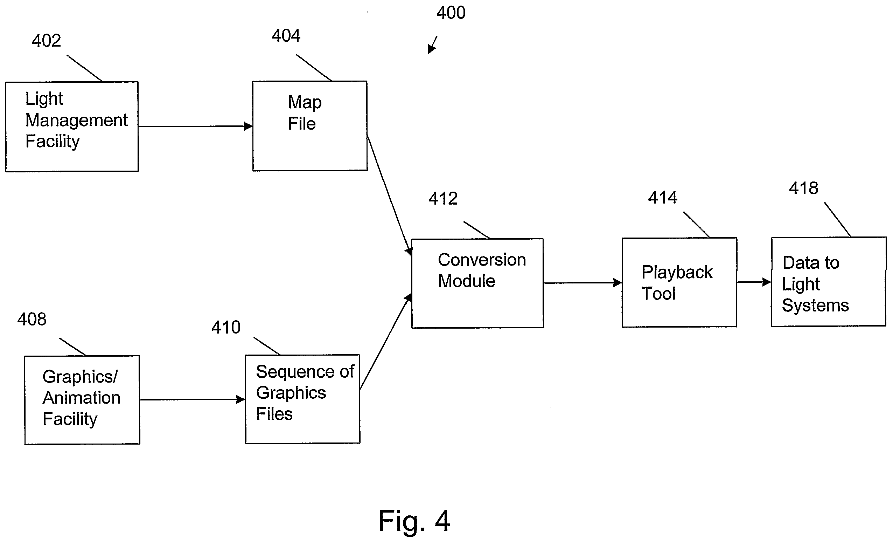

Figure 4 shows a method and system for generating a control signal to a lighting unit. A light management facility 402 may be used to generate a map file 404 that maps positions in an environment to one or more lighting units 100, and/or to surfaces that are lit by the lighting units 100, and any other positions that may be relevant to controlling lighting effects. An animation facility 408 may generate a sequence of graphics files 410 for a lighting effect such as an animation effect. A conversion module 412 may relate the information in the map file 404 to the graphical information in the graphics files 410. For example, color information in the graphics files 410 may be used to convert to color control signals for a light system to generate a corresponding color. Pixel information for each graphics file 410 may be converted to address information for light units 100 in a networked lighting system 200. The conversion module 412 may includes a lookup table or other conversion algorithms for converting particular graphics file information into particular lighting control signals, based on the content of a configuration file for the lighting system 200 and conversion algorithms appropriate for the animation facility 408. The converted information can be sent to a playback tool 414, which may in turn convert the animation effect into control signals 418 for the lighting system 200.

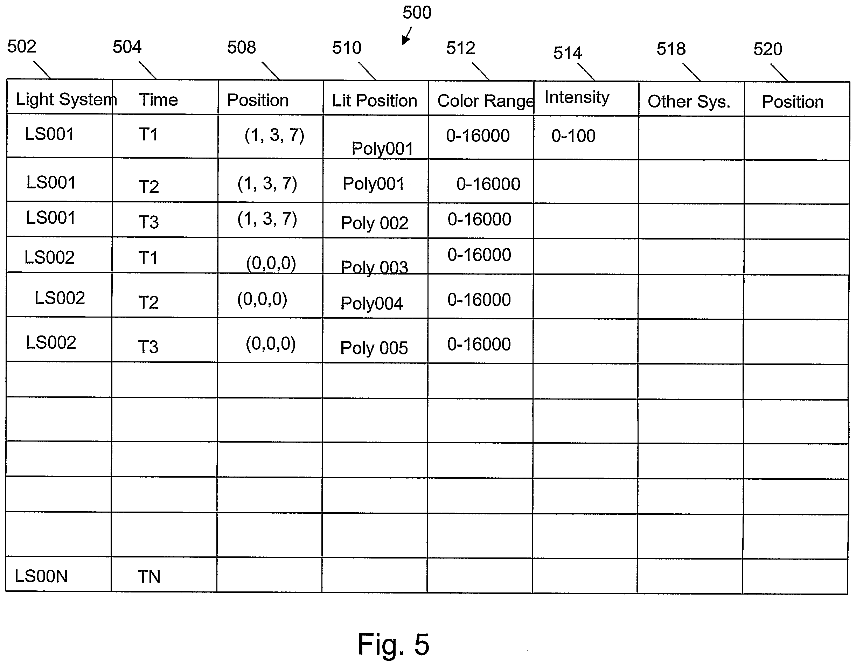

Referring to Fig. 5, an embodiment of a configuration file 500 is depicted, showing certain elements of configuration information that can be stored for a light system 200. For example, the configuration file 500 may store an identifier 502 for each lighting unit 100 or other device, as well as a position 508 of that device in a desired coordinate or mapping system for the environment (which may be (x,y,z) coordinates, polar coordinates, (x,y) coordinates, or any other coordinates or coordinate system useful for identifying device locations). The position 508 and other information may be time-dependent, so the configuration file 500 can include one or more time 504 fields that describe a time base, time delay, or other data relating to time. The configuration file 500 may also store information about a position 510 for a lighting unit 100 or region that is lit by the light system 200, or other position information for a device that may be useful for generating lighting effects. That information can consist of a set of coordinates, or it may be an identified surface, polygon, object, or other item in the environment. The configuration file 500 can also store information about the available degrees of freedom for use of the light system 200, such as a color range 512, an intensity range 514, or the like. The configuration file 500 can also include information about other systems in the environment that are controlled by the control systems disclosed herein, information about the characteristics of surfaces in the environment, and the like. Thus, the configuration file 500 can map a set of light units 100 or light systems 200 to the conditions that they are capable of generating in an environment.

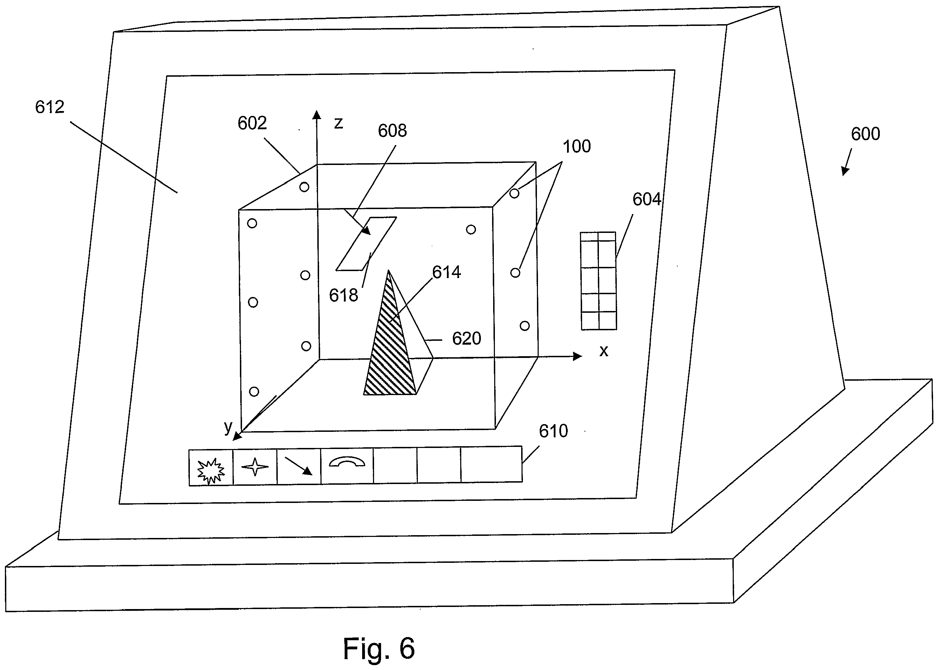

Figure 6 shows a computer 600 for configuring a lighting system, which may be any of the lighting systems 200 described above. In an embodiment, configuration information such as the configuration file 500 may be generated using a program executed on a processor. The program may provide a graphical user interface 612 on the computer 600 where a representation of an environment 602 can be displayed, along with lighting units 100, lit surfaces 614 and/or any other elements in a graphical format. The environment 602 maybe, for example, a room. Representations of lighting units 100, lighted surfaces 614, or other systems may then be displayed within the interface 612 and edited or configured by a user, such as by assigning position coordinates or other location information to various features. A position map may also be generated for the representation of the lighted surface 614, for example.

The representation 602 may be used to design and generate lighting effects. For example, a set of stored effects can be represented by icons 610 on the screen 612. An explosion icon can be selected with a mouse-controlled cursor or other interface technique, which may prompt the user to click on a starting and ending point for the explosion in the coordinate system. By locating a vector in the representation, the user can cause an explosion to be initiated, for example, in an upper corner of the environment 602, and a wave of light and or sound may propagate through the environment 602. With all of the light systems 102 in predetermined positions, as identified in the configuration file 500, the representation of the explosion can be played in the room by the light system and or another system such as a sound system.

Once information is entered for the lighting system 200, the program may be used to deploy lighting effects on the lighting system using the techniques generally described above with reference to Figs. 4 and 5. The program may be configured, for example to generate an array of lighting effects such as color-changing effects, stroboscopic effects, flashing effects, coordinated lighting effects, lighting effects coordinated with other media such as video or audio, color wash where the color changes in hue, saturation or intensity over a period of time, ambient color generation, color fades, effects that simulate movement such as a color chasing rainbow, a flare streaking across a room, a sun rising, a plume from an explosion, other moving effects, and any other lighting effect consistent with the environment 602 and the lighting system 200. Light and color continually surround the user, and controlling or changing the illumination or color in a space can change emotions, create atmosphere, provide enhancement of a material or object, or create other pleasing and or useful effects. In one embodiment, a user may deploy lighting effects will editing them, thus enabling a feedback loop that allows the user to conveniently modify the control signals to achieve a desired effect.

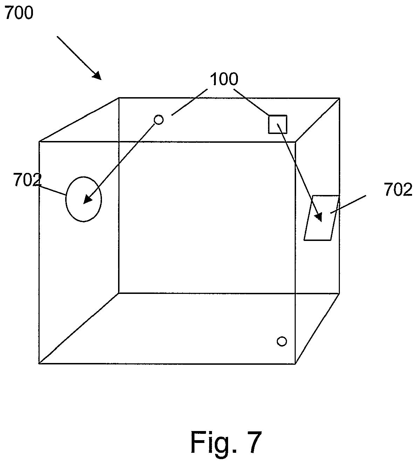

Figure 7 illustrates how the light from a lighting system 200 may be displayed on a surface of an environment 700. A lighting unit 100 of a lighting system may project light onto a surface area 702. The area 702 may move, and with suitable capabilities, the lighting unit 100 may be made to follow the area 702. It will be appreciated that similar techniques may be applied to sound systems or other systems operating in combination with the lighting system 200 described herein. Thus, control of lighting effects may include a capability to project images or light within an environment 700. Images may similarly be projects from or displayed on computer screens or other projection devices. Sound or other effects may be correlated with the lighting effects. For example, the peak intensity of a light wave propagating through a space may be just ahead of a sound wave. As a result, the light wave may pass through a room followed by a sound wave. The light wave may be played back on a lighting system and the sound wave may be played back on a sound system. This coordination can create effects that appear to be passing through a room or various other effects.

Referring again to Fig. 6, an effect can propagate through a virtual environment that is represented on the display screen 612 of the computer 600. In embodiments, the effect can be modeled as a vector or plane moving through space over time. Thus, all lighting units 100 that are located on the plane of the effect in the real world environment can be controlled to generate a certain type of illumination when the effect plane propagates through the light system plane. This can be modeled in the virtual environment of the display screen, so that a designer can drag a plane through a series of positions that vary over time. For example, an effect plane 618 can move with a vector 608 through the virtual environment. When the effect plan 618 reaches the surface 614 of a polygon 620, the polygon 620 can be highlighted in a color selected from the color palette 604. A lighting unit 100 positioned on a real world object that corresponds to the polygon 620 can then illuminate in the same color in the real world environment. Of course, the polygon 620 could be any object, or configuration of lighting units 100 on an object such as a surface, wall, table, sculpture, or the like.

In an embodiment, the image information may be communicated from a central controller. The information may be altered before a lighting system responds to the information. For example, the image information may be directed to a position within a position map. All of the information directed at a position map may be collected prior to sending the information to a lighting system. This may be accomplished every time the image is refreshed or every time this section of the image is refreshed or at other times. In an embodiment, an algorithm may be performed on information that is collected. The algorithm may average the information, calculate and select the maximum information, calculate and select the minimum information, calculate and select the first quartile of the information, calculate and select the third quartile of the information, calculate and select the most used information calculate and select the integral of the information or perform another calculation on the information. This step may be completed to level the effect of the lighting system in response to information received. For example, the information in one refresh cycle may change the information in the map several times and the effect may be viewed best when the projected light takes on one value in a given refresh cycle.

In an embodiment, the information communicated to a lighting system may be altered before a lighting system responds to the information. The information format may change prior to the communication for example. The information may be communicated from a computer through a USB port or other communication port and the format of the information may be changed to a lighting protocol such as DMX when the information is communicated to the lighting system. In an embodiment, the information or control signals may be communicated to a lighting system or other system through a communications port of a computer, portable computer, notebook computer, personal digital assistant or other system. The information or control signals may also be stored in memory, electronic or otherwise, to be retrieved at a later time. Systems such the iPlayer and SmartJack systems manufactured and sold by Color Kinetics Incorporated can be used to communicate and or store lighting control signals.

In an embodiment, several systems may be associated with position maps and the several systems may a share position map or the systems may reside in independent position areas. For example, the position of a lighted surface from a first lighting system may intersect with a lighted surface from a second lighting system. The two systems may still respond to information communicated to the either of the lighting systems. In an embodiment, the interaction of two lighting systems may also be controlled. An algorithm, function or other technique may be used to change the lighting effects of one or more of the lighting systems in a interactive space. For example, if the interactive space is greater than half of the non-interactive space from a lighting system, the lighting system's hue, saturation or brightness may be modified to compensate the interactive area. This may be used to adjust the overall appearance of the interactive area or an adjacent area for example.

Control signals generated using methods and or systems according to the principles of the present invention can be used to produce a vast variety of effects. Imagine a fire or explosion effect that one wishes to have move across a wall or room. It starts at one end of the room as a white flash that quickly moves out followed by a highbrightness yellow wave whose intensity varies as it moves through the room. When generating a control signal according to the principles of the present invention, a lighting designer does not have to be concerned with the lights in the room and the timing and generation of each light system's lighting effects. Rather the designer only needs to be concerned with the relative position or actual position of those lights in the room. The designer can lay out the lighting in a room and then associate the lights in the room with graphical information, such as pixel information, as described above. The designer can program the fire or explosion effect on a computer, using Flash 5 for example, and the information can be communicated to the light systems 102 in an environment. The position of the lights in the enviromnent may be considered as well as the surfaces 107 or areas 702 that are going to be lit.

In an embodiment, the lighting effects could also be coupled to sound that will add to and reinforce the lighting effects. An example is a 'red alert' sequence where a' whoop whoop' siren-like effect is coupled with the entire room pulsing red in concert with the sound. One stimulus reinforces the other. Sounds and movement of an earthquake using low frequency sound and flickering lights is another example of coordinating these effects. Movement of light and sound can be used to indicate direction.

In an embodiment the lights are represented in a two-dimensional or plan view. This allows representation of the lights in a plane where the lights can be associated with various pixels. Standard computer graphics techniques can then be used for effects. Animation tweening and even standard tools may be used to create lighting effects. Macromedia Flash works with relatively low-resolution graphics for creating animations on the web. Flash uses simple vector graphics to easily create animations. The vector representation is efficient for streaming applications such as on the World Wide Web for sending animations over the net. The same technology can be used to create animations that can be used to derive lighting commands by mapping the pixel information or vector information to vectors or pixels that correspond to positions of light systems 102 within a coordinate system for an environment 100.

For example, an animation window of a computer 600 can represent a room or other environment of the lights. Pixels in that window can correspond to lights within the room or a low-resolution averaged image can be created from the higher resolution image. In this way lights in the room can be activated when a corresponding pixel or neighborhood of pixels turn on. Because LED-based lighting technology can create any color on demand using digital control information, see U.S. Patents 6,016,038, 6,150,774, and 6,166,496, the lights can faithfully recreate the colors in the original image.

Some examples of effects that could be generated using systems and methods according to the principles of the invention include, but are not limited to, explosions, colors, underwater effects, turbulence, color variation, fire, missiles, chases, rotation of a room, shape motion, tinkerbell-like shapes, lights moving in a room, and many others. Any of the effects can be specified with parameters, such as frequencies, wavelengths, wave widths, peak-to-peak measurements, velocities, inertia, friction, speed, width, spin, vectors, and the like. Any of these can be coupled with other effects, such as sound.

In computer graphics, anti-aliasing is a technique for removing staircase effects in imagery where edges are drawn and resolution is limited. This effect can be seen on television when a narrow striped pattern is shown. The edges appear to crawl like ants as the lines approach the horizontal. In a similar fashion, the lighting can be controlled in such a way as to provide a smoother transition during effect motion. The effect parameters such as wave width, amplitude, phase or frequency can be modified to provide better effects.

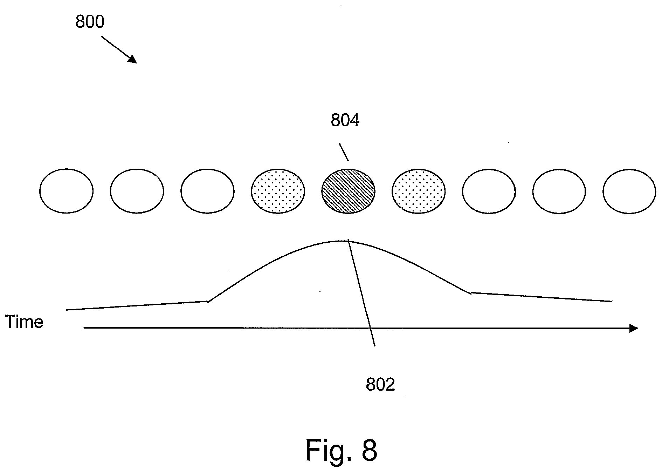

For example, referring to Fig. 8, a schematic diagram 800 has circles that represent a single light 804 over time. For an effect to 'traverse' this light, it might simply have a step function that causes the light to pulse as the wave passes through the light. However, without the notion of width, the effect might be indiscernible. The effect preferably has width. If however, the effect on the light was simply a step function that turned on for a period of time, then might appear to be a harsh transition, which may be desirable in some cases but for effects that move over time (i.e. have some velocity associated with them) then this would not normally be the case.

The wave 802 shown in Fig. 8 has a shape that corresponds to the change. In essence it is a visual convolution of the wave 802 as it propagates through a space. So as a wave, such as from an explosion, moves past points in space, those points rise in intensity from zero, and can even have associated changes in hue or saturation, which gives a much more realistic effect of the motion of the effect. At some point, as the number and density of lights increases, the room then becomes an extension of the screen and provides large sparse pixels. Even with a relatively small number of light systems 102 the effect eventually can serve as a display similar to a large screen display.

Effects can have associated motion and direction, i.e. a velocity. Even other physical parameters can be described to give physical parameters such as friction, inertia, and momentum. Even more than that, the effect can have a specific trajectory. In an embodiment, each light may have a representation that gives attributes of the light. This can take the form of 2D position, for example. A light system 102 can have all various degrees of freedom assigned (e.g., xyz-rpy), or any combination.

The techniques listed here are not limited to lighting. Control signals can be propogated through other devices based on their positions, such as special effects devices such as pyrotechnics, smell-generating devices, fog machines, bubble machines, moving mechanisms, acoustic devices, acoustic effects that move in space, or other systems.

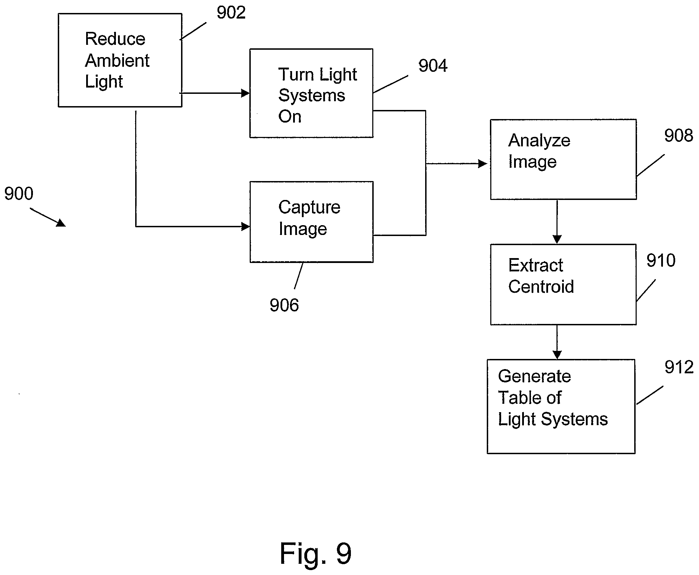

An embodiment of the present invention is a method of automatically capturing the position of the light systems 102 within an environment. An imaging device may be used as a means of capturing the position of the light. A camera, connected to a computing device, can capture the image for analysis can calculation of the position of the light. Fig. 9 depicts a flow diagram 900 that depicts a series of steps that may be used to accomplish this method. First, at a step 902, the environment to be mapped may be darkened by reducing ambient light. Next, at a step 904, control signals can be sent to each light system 102, commanding the light system 102 to turn on and off in turn. Simultaneously, the camera can capture an image during each "on" time at a step 906. Next, at a step 908, the image is analyzed to locate the position of the "on" light system 102. At a step 910 a centroid can be extracted. Because no other light is present when the particular light system 102 is on, there is little issue with other artifacts to filter and remove from the image. Next, at a step 912, the centroid position of the light system 102 is stored and the system generates a table of light systems 102 and centroid positions. This data can be used to populate a configuration file, such as that depicted in connection with Fig. 5. In sum, each light system 102, in turn, is activated, and the centroid measurement determined. This is done for all of the light systems 102. An image thus gives a position of the light system in a plane, such as with (x,y) coordinates.

Where a 3D position is desired a second image may be captured to triangulate the position of the light in another coordinate dimension. This is the stereo problem. In the same way human eyes determine depth through the correspondence and disparity between the images provided by each eye, a second set of images may be taken to provide the correspondence. The camera is either duplicated at a known position relative to the first camera or the first camera is moved a fixed distance and direction. This movement or difference in position establishes the baseline for the two images and allows derivation of a third coordinate (e.g., (x,y,z)) for the light system 102.

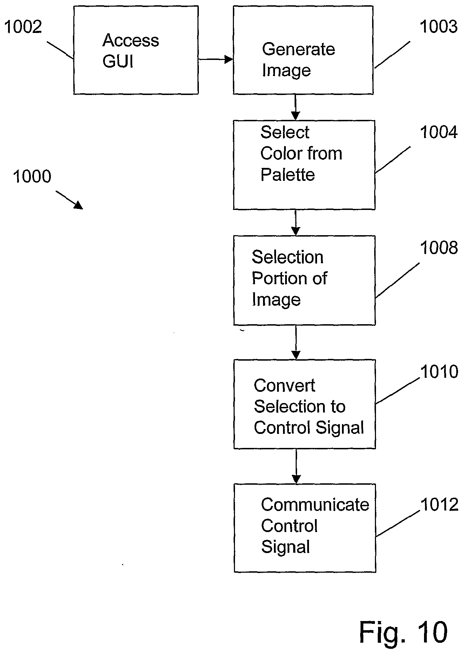

Another embodiment of the invention is depicted in Fig. 10, which contains a flow diagram 1000 with steps for generating a control signal. First, at a step 1002 a user can access a graphical user interface, such as the display 612 depicted in Fig. 6. Next, at a step 1003, the user can generate an image on the display, such as using a graphics program or similar facility. The image can be a representation of an environment, such as a room, wall, building, surface, object, or the like, in which light systems 102 are disposed. It is assumed in connection with Fig. 10 that the configuration of the light systems 102 in the environment is known and stored, such as in a table or configuration file 500. Next, at a step 1004, a user can select an effect, such as from a menu of effects. In an embodiment, the effect may be a color selected from a color palette. The color might be a color temperature of white. The effect might be another effect, such as described herein. In an embodiment, generating the image 1003 may be accomplished through a program executed on a processor. The image may then be displayed on a computer screen. Once a color is selected from the palette at the step 1004, a user may select a portion of the image at a step 1008. This may be accomplished by using a cursor on the screen in a graphical user interface where the cursor is positioned over the desired portion of the image and then the portion is selected with a mouse. Following the selection of a portion of the image, the information from that portion can be converted to lighting control signals at a step 1010. This may involve changing the format of the bit stream or converting the information into other information. The information that made the image may be segmented into several colors such as red, green, and blue. The information may also be communicated to a lighting system in, for example, segmented red, green, and blue signals. The signal may also be communicated to the lighting system as a composite signal at a step 1012. This technique can be useful for changing the color of a lighting system. For example, a color palette may be presented in a graphical user interface and the palette may represent millions of different colors. A user may want to change the lighting in a room or other area to a deep blue. To accomplish her task, the user can select the color from the screen using a mouse and the lighting in the room changes to match the color of the portion of the screen she selected. Generally, the information on a computer screen is presented in small pixels of red, green and blue. LED systems, such as those found in U.S. Patent Nos. 6,016,038, 6,150,774 and 6,166,496, may include red, green and blue lighting elements as well. The conversion process from the information on the screen to control signals may be a format change such that the lighting system understands the commands. However, in an embodiment, the information or the level of the separate lighting elements may be the same as the information used to generate the pixel information. This provides for an accurate duplication of the pixel information in the lighting system.

Using the techniques described herein, including techniques for determining positions of light systems in environments, techniques for modeling effects in environments (including time- and geometry-based effects), and techniques for mapping light system environments to virtual environments, it is possible to model an unlimited range of effects in an unlimited range of environments. Effects need not be limited to those that can be created on a square or rectangular display. Instead, light systems can be disposed in a wide range of lines, strings, curves, polygons, cones, cylinders, cubes, spheres, hemispheres, non-linear configurations, clouds, and arbitrary shapes and configurations, then modeled in a virtual environment that captures their positions in selected coordinate dimensions. Thus, light systems can be disposed in or on the interior or exterior of any environment, such as a room, building, home, wall, object, product, retail store, vehicle, ship, airplane, pool, spa, hospital, operating room, or other location.

In embodiments, the light system may be associated with code for the computer application, so that the computer application code is modified or created to control the light system. For example, object-oriented programming techniques can be used to attach attributes to objects in the computer code, and the attributes can be used to govern behavior of the light system. Object oriented techniques are known in the field, and can be found in texts such as "Introduction to Object-Oriented Programming" by Timothy Budd, the entire disclosure of which is herein incorporated by reference. It should be understood that other programming techniques may also be used to direct lighting systems to illuminate in coordination with computer applications, object oriented programming being one of a variety of programming techniques that would be understood by one of ordinary skill in the art to facilitate the methods and systems described herein.

In an embodiment, a developer can attach the light system inputs to objects in the computer application. For example, the developer may have an abstraction of a light system 102 that is added to the code construction, or object, of an application object. An object may consist of various attributes, such as position, velocity, color, intensity, or other values. A developer can add light as an instance in the object in the code of a computer application. For example, the object could be vector in an object-oriented computer animation program or solid modeling program, with attributes, such as direction and velocity. A light system 102 can be added as an instance of the object of the computer application, and the light system can have attributes, such as intensity, color, and various effects. Thus, when events occur in the computer application that call on the object of the vector, a thread running through the program can draw code to serve as an input to the processor of the light system. The light can accurately represent geometry, placement, spatial location, represent a value of the attribute or trait, or provide indication of other elements or objects.

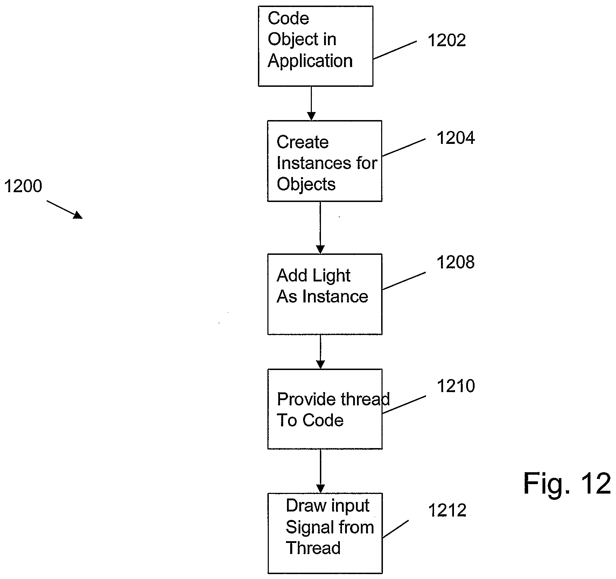

Referring to Fig. 12, a flow chart 1200 provides steps for a method of providing for coordinated illumination. At the step 1202, the programmer codes an object for a computer application, using, for example, object-oriented programming techniques. At a step 1204, the programming creates instances for each of the objects in the application. At a step 1208, the programmer adds light as an instance to one or more objects of the application. At a step 1210, the programmer provides for a thread, running through the application code. At a step 1212, the programmer provides for the thread to draw lighting system input code from the objects that have light as an instance. At a step 1214, the input signal drawn from the thread at the step 1212 is provided to the light system, so that the lighting system responds to code drawn from the computer application.

Using such object-oriented light input to the light system 102 from code for a computer application, various lighting effects can be associated in the real world environment with the virtual world objects of a computer application. For example, in animation of an effect such as explosion of a polygon, a light effect can be attached with the explosion of the polygon, such as sound, flashing, motion, vibration and other temporal effects. Further, the light system 102 could include other effects devices including sound producing devices, motion producing devices, fog machines, rain machines or other devices which could also produce indications related to that object.

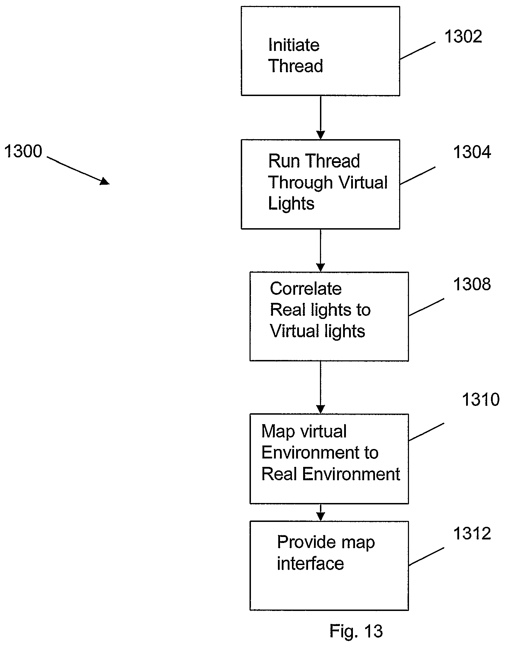

Referring to Fig. 13, a flow diagram 1300 depicts steps for coordinated illumination between a representation on virtual environment of a computer screen and a light system 102 or set of light systems 102 in a real environment. In embodiments, program code for control of the light system 102 has a separate thread running on the machine that provides its control signals. At a step 1302 the program initiates the thread. At a step 1304 the thread as often as possible runs through a list of virtual lights, namely, objects in the program code that represent lights in the virtual environment. At a step 1308 the thread does three-dimensional math to determine which real-world light systems 102 in the environment are in proximity to a reference point in the real world (e.g., a selected surface 107) that is projected as the reference point of the coordinate system of objects in the virtual environment of the computer representation. Thus, the (0,0,0) position can be a location in a real environment and a point on the screen in the display of the computer application (for instance the center of the display. At a step 1310, the code maps the virtual environment to the real world environment, including the light systems 102, so that events happening outside the computer screen are similar in relation to the reference point as are virtual objects and events to a reference point on the computer screen.

At a step 1312, the host of the method may provide an interface for mapping. The mapping function may be done with a function, e.g., "project-all-lights," as described in Directlight API described below and in Appendix A, that maps real world lights using a simple user interface, such as drag and drop interface. The placement of the lights may not be as important as the surface the lights are directed towards. It may be this surface that reflects the illumination or lights back to the environment and as a result it may be this surface that is the most important for the mapping program. The mapping program may map these surfaces rather than the light system locations or it may also map both the locations of the light systems and the light on the surface.

A system for providing the code for coordinated illumination may be any suitable computer capable of allowing programming, including a processor, an operating system, and memory, such as a database, for storing files for execution.

Each real light 102 may have attributes that are stored in a configuration file. An example of a structure for a configuration file is depicted in Fig. 5. In embodiments, the configuration file may include various data, such as a light number, a position of each light, the position or direction of light output, the gamma (brightness) of the light, an indicator number for one or more attributes, and various other attributes. By changing the coordinates in the configuration file, the real world lights can be mapped to the virtual world represented on the screen in a way that allows them to reflect what is happening in the virtual environment. The developer can thus create time-based effects, such as an explosion. There can then be a library of effects in the code that can be attached to various application attributes. Examples include explosions, rainbows, color chases, fades in and out, etc. The developer attaches the effects to virtual objects in the application. For example, when an explosion is done, the light goes off in the display, reflecting the destruction of the object that is associated with the light in the configuration file.

To simplify the configuration file, various techniques can be used. In embodiments, hemispherical cameras, sequenced in turn, can be used as a baseline with scaling factors to triangulate the lights and automatically generate a configuration file without ever having to measure where the lights are. In embodiments, the configuration file can be typed in, or can be put into a graphical user interface that can be used to drag and drop light sources onto a representation of an environment. The developer can create a configuration file that matches the fixtures with true placement in a real environment. For example, once the lighting elements are dragged and dropped in the environment, the program can associate the virtual lights in the program with the real lights in the environment. An example of a light authoring program to aid in the configuration of lighting is included in U.S. Patent Application No. 09/616,214 "Systems and Methods for Authoring Lighting Sequences." Color Kinetics Inc. also offers a suitable authoring and configuration program called "ColorPlay."

Further details as to the implementation of the code can be found in the Directlight API document attached hereto as Appendix A. Directlight API is a programmer's interface that allows a programmer to incorporate lighting effects into a program. Directlight API is attached in Appendix A and the disclosure incorporated by reference herein. Object oriented programming is just one example of a programming technique used to incorporate lighting effects. Lighting effects could be incorporated into any programming language or method of programming. In object oriented programming, the programmer is often simulating a 3D space.

In the above examples, lights were used to indicate the position of objects which produce the expected light or have light attached to them. There are many other ways in which light can be used. The lights in the light system can be used for a variety of purposes, such as to indicate events in a computer application (such as a game), or to indicate levels or attributes of objects.

Simulation types of computer applications are often 3D rendered and have objects with attributes as well as events. A programmer can code events into the application for a simulation, such as a simulation of a real world environment. A programmer can also code attributes or objects in the simulation. Thus, a program can track events and attributes, such as explosions, bullets, prices, product features, health, other people, patterns of light, and the like. The code can then map from the virtual world to the real world. In embodiments, at an optional step, the system can add to the virtual world with real world data, such as from sensors or input devices. Then the system can control real and virtual world objects in coordination with each other. Also, by using the light system as an indicator, it is possible to give information through the light system that aids a person in the real world environment.

Architectural visualization, mechanical engineering models, and other solid modeling environments are encompassed herein as embodiments. In these virtual environments lighting is often relevant both in a virtual environment and in a solid model real world visualization environment. The user can thus position and control a light system 102 the illuminates a real world sold model to illuminate the real world solid model in correspondence to illumination conditions that are created in the virtual world modeling environment. Scale physical models in a room of lights can be modeled for lighting during the course of a day or year or during different seasons for example, possibly to detect previously unknown interaction with the light and various building surfaces. Another example would be to construct a replica of a city or portion of a city in a room with a lighting system such as those discussed above. The model could then be analyzed for color changes over a period of time, shadowing, or other lighting effects. In an embodiment, this technique could be used for landscape design. In an embodiment, the lighting system is used to model the interior space of a room, building, or other piece of architecture. For example, an interior designer may want to project the colors of the room, or fabric or objects in the room with colors representing various times of the day, year, or season. In an embodiment, a lighting system is used in a store near a paint section to allow for simulation of lighting conditions on paint chips for visualization of paint colors under various conditions. These types of real world modeling applications can enable detection of potential design flaws, such as reflective buildings reflecting sunlight in the eyes of drivers during certain times of the year. Further, the three-dimensional visualization may allow for more rapid recognition of the aesthetics of the design by human beings, than by more complex computer modeling.

Solid modeling programs can have virtual lights. One can light a model in the virtual environment while simultaneously lighting a real world model the same way. For example, one can model environmental conditions of the model and recreate them in the real world modeling environment outside the virtual environment. For example, one can model a house or other building and show how it would appear in any daylight environment. A hobbyist could also model lighting for a model train set (for instance based on pictures of an actual train) and translate that lighting into the illumination for the room wherein the model train exists. Therefore the model train may not only be a physical representation of an actual train, but may even appear as that train appeared at a particular time. A civil engineering project could also be assembled as a model and then a lighting system according to the principles of the invention could be used to simulate the lighting conditions over the period of the day. This simulation could be used to generate lighting conditions, shadows, color effects or other effects. This technique could also be used in Film/Theatrical modeling or could be used to generate special effects in filmmaking. Such a system could also be used by a homeowner, for instance by selecting what they want their dwelling to look like from the outside and having lights be selected to produce that look. This is a possibility for safety when the owner is away. Alternatively, the system could work in reverse where the owner turns on the lights in their house and a computer provides the appearance of the house from various different directions and distances.

Although the above examples discuss modeling for architecture, one of skill in the art would understand that any device, object, or structure where the effect of light on that device, object, or structure can be treated similarly.

Medical or other job simulation could also be performed. A lighting system according to the principles of the present invention may be used to simulate the lighting conditions during a medical procedure. This may involve creating an operating room setting or other environment such as an auto accident at night, with specific lighting conditions. For example, the lighting on highways is generally high-pressure sodium lamps which produce nearly monochromatic yellow light and as a result objects and fluids may appear to be a non-normal color. Parking lots generally use metal halide lighting systems and produce a broad spectrum light that has spectral gaps. Any of these environments could be simulated using a system according to the principles of the invention. These simulators could be used to train emergency personnel how to react in situations lit in different ways. They could also be used to simulate conditions under which any job would need to be performed. For instance, the light that will be experienced by an astronaut repairing an orbiting satellite can be simulated on earth in a simulation chamber.

Lights can also be used to simulate travel in otherwise inaccessible areas such as the light that would be received traveling through space or viewing astronomical phenomena, or lights could be used as a three dimensional projection of an otherwise unviewable object. For instance, a lighting system attached to a computing device could provide a three dimensional view from the inside of a molecular model. Temporal Function or other mathematical concepts could also be visualized.

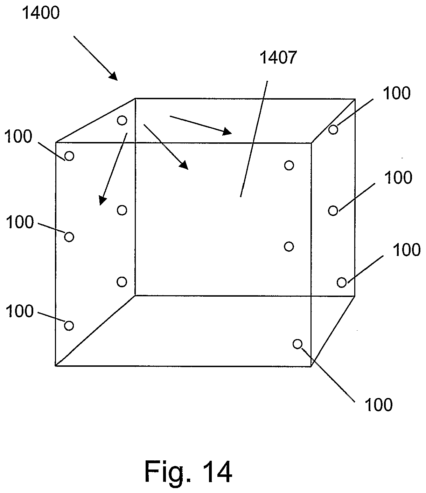

Referring to Fig. 14, in embodiments of the invention, the lighting system may be used to illuminate an environment. On such environment 1400 is shown in Fig. 14. The environment has at least one lighting unit 100 mounted therein, and in a preferred embodiment may have multiple lighting units 100 therein. The lighting unit 100 may be a controllable lighting unit 100, such as described above in connection with Fig. 2, with lights 208 that illuminate portions of the environment 100.

Referring still to Fig. 14, the environment 1400 may include a surface 1407 that is lit by one or more lighting units 100. In the depicted embodiment the surface 1407 comprises a wall or other surface upon which light could be reflected. In another embodiment, the surface could be designed to absorb and retransmit light, possibly at a different frequency. For instance the surface 1407 could be a screen coated with a phosphor where illumination of a particular color could be projected on the screen and the screen could convert the color of the illumination and provide a different color of illumination to a viewer in the environment 1400. For instance the projected illumination could primarily be in the blue, violet or ultraviolet range while the transmitted light is more of a white. In embodiments, the surface 1407 may also include one or more colors, figures, lines, designs, figures, pictures, photographs, textures, shapes or other visual or graphical elements that can be illuminated by the lighting system. The elements on the surface can be created by textures, materials, coatings, painting, dyes, pigments, coverings, fabrics, or other methods or mechanisms for rendering graphical or visual effects. In embodiments, changing the illumination from the lighting system may create visual effects. For example, a picture on the surface 1407 may fade or disappear, or become more apparent or reappear, based on the color of the light from the lighting system that is rendered on the surface 1407. Thus, effects can be created on the surface 1407 not only by shining light on a plain surface, but also through the interaction of light with the visual or graphical elements on the surface.

In certain preferred embodiments, the lighting units 1400 are networked lighting systems where the lighting control signals are packaged into packets of addressed information. The addressed information may then be communicated to the lighting systems in the lighting network. Each of the lighting systems may then respond to the control signals that are addressed to the particular lighting system. This is an extremely useful arrangement for generating and coordinating lighting effects in across several lighting systems. Embodiments of U.S. Patent Application No. 09/616,214 "Systems and Methods for Authoring Lighting Sequences" describe systems and methods for generating system control signals and is herby incorporated by reference herein.

A lighting system, or other system according to the principles of the present invention, may be associated with an addressable controller. The addressable controller may be arranged to "listen" to network information until it "hears" its address. Once the systems address is identified, the system may read and respond to the information in a data packet that is assigned to the address. For example, a lighting system may include an addressable controller. The addressable controller may also include an alterable address and a user may set the address of the system. The lighting system may be connected to a network where network information is communicated. The network may be used to communicate information to many controlled systems such as a plurality of lighting systems for example. In such an arrangement, each of the plurality of lighting systems may be receiving information pertaining to more than one lighting system. The information may be in the form of a bit stream where information for a first addressed lighting system is followed by information directed at a second addressed lighting system. An example of such a lighting system can be found in U.S. Patent No. 6,016,038, which is hereby incorporated by reference herein.

In an embodiment, the lighting unit 100 is placed in a real world environment 1400. The real world environment 1400 could be a room. The lighting system could be arranged, for example, to light the walls, ceiling, floor or other sections or objects in a room, or particular surfaces 1407 of the room. The lighting system may include several addressable lighting units 100 with individual addresses. The illumination can be projected so as to be visible to a viewer in the room either directly or indirectly. That is a light of a lighting unit 100 could shine so that the light is projected to the viewer without reflection, or could be reflected, refracted, absorbed and reemitted, or in any other manner indirectly presented to the viewer.

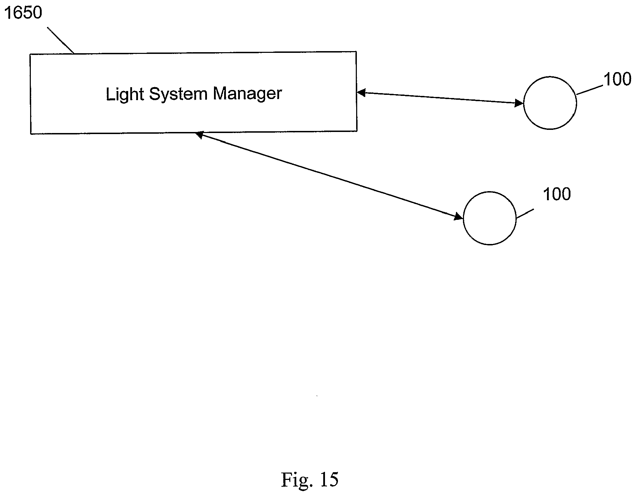

Referring to Fig. 15, it is desirable to provide a light system manager 1650 to manage a plurality of lighting units 100 or other light systems.

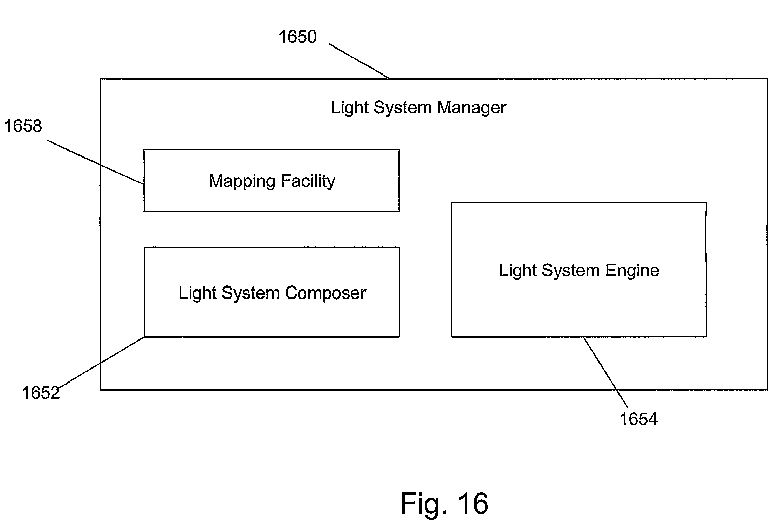

Referring to Fig. 16, a light system manager 1650 is provided, which may consist of a combination of hardware and software components. Included is a mapping facility 1658 for mapping the locations of a plurality of light systems. The mapping facility 1658 may use various techniques for discovering and mapping lights, such as described herein or as known to those of skill in the art. Also provided is a light system composer 1652 for composing one or more lighting shows that can be displayed on a light system. The authoring of the shows may be based on geometry and an obj ect-oriented programming approach, such as the geometry of the light systems that are discovered and mapped using the mapping facility 1658, according to various methods and systems disclosed herein or known in the art. Also provided is a light system engine 1654, for playing lighting shows by executing code for lighting shows and delivering lighting control signals, such as to one or more lighting systems, or to related systems, such as power/data systems, that govern lighting systems. Further details of the light system manager 1650, mapping facility 1658, light system composer 1652 and light system engine 1654 are provided herein.

The light system manager 1650, mapping facility 1658, light system composer 1652 and light system engine 1654 may be provided through a combination of computer hardware, telecommunications hardware and computer software components. The different components may be provided on a single computer system or distributed among separate computer systems.

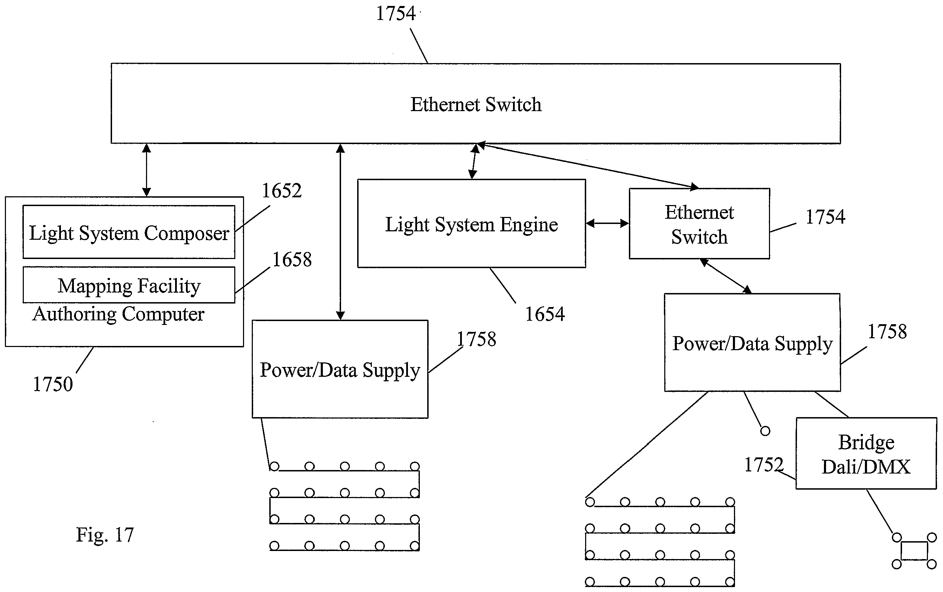

Referring to Fig. 17, in an embodiment, the mapping facility 1658 and the light system composer 1652 are provided on an authoring computer 1750. The authoring computer 1750 may be a conventional computer, such as a personal computer. In embodiments the authoring computer 1750 includes conventional personal computer components, such as a graphical user interface, keyboard, operating system, memory, and communications capability. In embodiments the authoring computer 1750 operates with a development environment with a graphical user interface, such as a Windows environment. The authoring computer 1750 may be connected to a network, such as by any conventional communications connection, such as a wire, data connection, wireless connection, network card, bus, Ethernet connection, Firewire, 802.11 facility, Bluetooth, or other connection. In embodiments, such as in Fig. 17, the authoring computer 1750 is provided with an Ethernet connection, such as via an Ethernet switch 1754, so that it can communicate with other Ethernet-based devices, optionally including the light system engine 1654, a light system itself (enabled for receiving instructions from the authoring computer 1750), or a power/data supply (PDS) 1758 that supplies power and/or data to a light system. The mapping facility 1650 and the light system composer 1652 may comprise software applications running on the authoring computer 1750.

Referring still to Fig. 17, in an architecture for delivering control systems for complex shows to one or more light systems, shows that are composed using the authoring computer 1750 are delivered via an Ethernet connection through one or more Ethernet switches1754 to the light system engine 1654. The light system engine 1654 downloads the shows composed by the light system composer 1652 and plays them, generating lighting control signals for light systems. In embodiments, the lighting control signals are relayed by an Ethernet switch 1754 to one or more power/data supplies 1758 and are in turn relayed to light systems that are equipped to execute the instructions, such as by turning LEDs on or off, controlling their color or color temperature, changing their hue, intensity, or saturation, or the like. In embodiments the power/data supply may be programmed to receive lighting shows directly from the light system composer 1652. In embodiments a bridge may be programmed to convert signals from the format of the light system engine 1654 to a conventional format, such as DMX or DALI signals used for entertainment lighting.

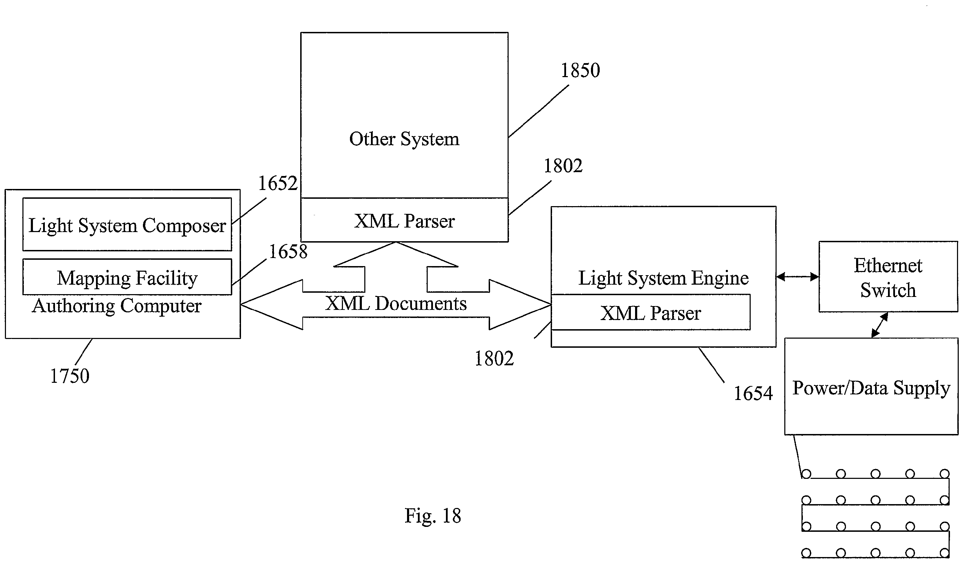

Referring to Fig. 18, in embodiments the lighting shows composed using the light system composer 1652 are compiled into simple scripts that are embodied as XML documents. The XML documents can be transmitted rapidly over Ethernet connections. In embodiments, the XML documents are read by an XML parser 1802 of the light system engine 1654. Using XML documents to transmit lighting shows allows the combination of lighting shows with other types of programming instructions. For example, an XML document type definition may include not only XML instructions for a lighting show to be executed through the light system engine 1654, but also XML with instructions for another computer system, such as a sound system, and entertainment system, a multimedia system, a video system, an audio system, a sound-effect system, a smoke effect system, a vapor effect system, a dry-ice effect system, another lighting system, a security system, an information system, a sensor-feedback system, a sensor system, a browser, a network, a server, a wireless computer system, a building information technology system, or a communication system.

Thus, methods and systems provided herein include providing a light system engine for relaying control signals to a plurality of light systems, wherein the light system engine plays back shows. The light system engine 1654 may include a processor, a data facility, an operating system and a communication facility. The light system engine 1654 may be configured to communicate with a DALI or DMX lighting control facility. In embodiments, the light system engine communicates with a lighting control facility that operates with a serial communication protocol. In embodiments the lighting control facility is a power/data supply for a lighting unit 100.

In embodiments, the light system engine 1654 executes lighting shows downloaded from the light system composer 1652. In embodiments the shows are delivered as XML files from the light show composer 1652 to the light system engine 1654. In embodiment the shows are delivered to the light system engine over a network. In embodiments the shows are delivered over an Ethernet facility. In embodiments the shows are delivered over a wireless facility. In embodiments the shows are delivered over a Firewire facility. In embodiments shows are delivered over the Internet.

In embodiments lighting shows composed by the lighting show composer 1652 can be combined with other files from another computer system, such as one that includes an XML parser that parses an XML document output by the light show composer 1652 along with XML elements relevant to the other computer. In embodiments lighting shows are combined by adding additional elements to an XML file that contains a lighting show. In embodiments the other computer system comprises a browser and the user of the browser can edit the XML file using the browser to edit the lighting show generated by the lighting show composer. In embodiments the light system engine 1654 includes a server, wherein the server is capable of receiving data over the Internet. In embodiments the light system engine 1654 is capable of handling multiple zones of light systems, wherein each zone of light systems has a distinct mapping. In embodiments the multiple zones are synchronized using the internal clock of the light system engine 1654.

The methods and systems included herein include methods and systems for providing a mapping facility 1658 of the light system manager 1650 for mapping locations of a plurality of light systems. In embodiments, the mapping system discovers lighting systems in an environment, using techniques described above. In embodiments, the mapping facility then maps light systems in a two-dimensional space, such as using a graphical user interface.

In embodiments of the invention, the light system engine 1654 comprises a personal computer with a Linux operating system. In embodiments the light system engine is associated with a bridge to a DMX or DALI system.

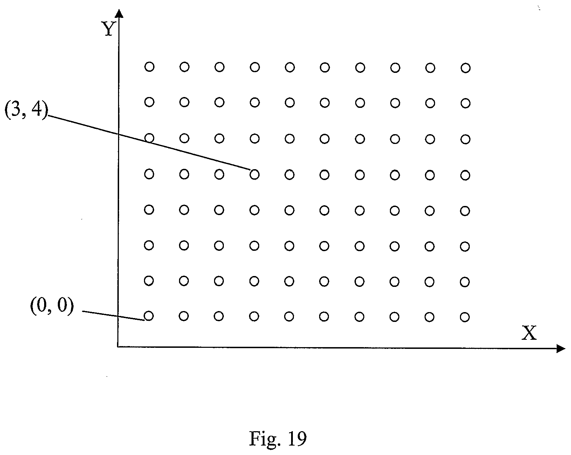

Referring to Fig. 19, the graphical user interface of the mapping facility 1652 of the authoring computer 1650 can display a two-dimensional map, or it may represent a two-dimensional space in another way, such as with a coordinate system, such as Cartesian, polar or spherical coordinates. In embodiments, lights in an array, such as a rectangular array, can be represented as elements in a matrix, such as with the lower left corner being represented as the origin (0, 0) and each other light being represented as a coordinate pair (x, y), with x being the number of positions away from the origin in the horizontal direction and y being the number of positions away from the origin in the vertical direction. Thus, the coordinate (3, 4) can indicate a light system three positions away from the origin in the horizontal direction and four positions away from the origin in the vertical direction. Using such a coordinate mapping, it is possible to map addresses of real world lighting systems into a virtual environment, where control signals can be generated and associated geometrically with the lighting systems. With conventional addressable lighting systems, a Cartesian coordinate system may allow for mapping of light system locations to authoring systems for light shows.

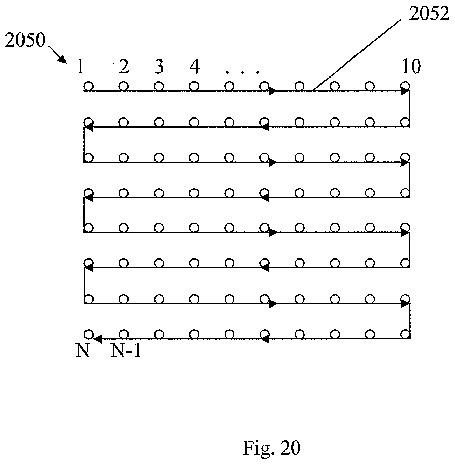

Referring to Fig. 20, it may be convenient to map lighting systems in other ways. For example, a rectangular array 2050 can be formed by suitably arranging a curvilinear string 2052 of lighting units. The string of lighting units may use a serial addressing protocol, such as described in the applications incorporated by reference herein, wherein each lighting unit in the string reads, for example, the last unaltered byte of data in a data stream and alters that byte so that the next lighting unit will read the next byte of data. If the number of lighting units N in a rectangular array of lighting units is known, along with the number of rows in which the lighting units are disposed, then, using a table or similar facility, a conversion can be made from a serial arrangement of lighting units 1 to N to another coordinate system, such as a Cartesian coordinate system. Thus, control signals can be mapped from one system to the other system. Similarly, effects and shows generated for particular configurations can be mapped to new configurations, such as any configurations that can be created by arranging a string of lighting units, whether the share is rectangular, square, circular, triangular, or has some other geometry. In embodiments, once a coordinate transformation is known for setting out a particular geometry of lights, such as building a two-dimensional geometry with a curvilinear string of lighting units, the transformation can be stored as a table or similar facility in connection with the light management system 1650, so that shows authored using one authoring facility can be converted into shows suitable for that particular geometric arrangement of lighting units using the light management system 1650. The light system composer 1652 can store pre-arranged effects that are suitable for known geometries, such as a color chasing rainbow moving across a tile light with sixteen lighting units in a four-by-four array, a burst effect moving outward from the center of an eight-by-eight array of lighting units, or many others.

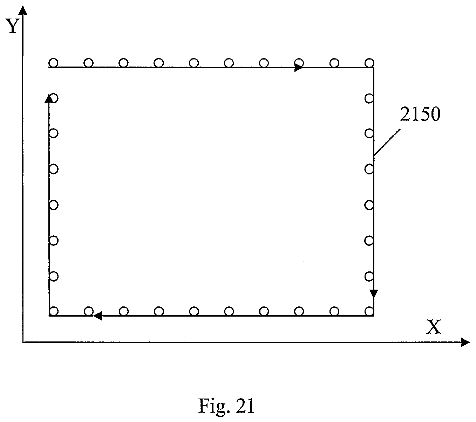

Various other geometrical configurations of lighting units are so widely used as to benefit from the storing of pre-authored coordinate transformations, shows and effects. For example, referring to Fig. 21, a rectangular configuration 2150 is widely employed in architectural lighting environments, such as to light the perimeter of a rectangular item, such as a space, a room, a hallway, a stage, a table, an elevator, an aisle, a ceiling, a wall, an exterior wall, a sign, a billboard, a machine, a vending machine, a gaming machine, a display, a video screen, a swimming pool, a spa, a walkway, a sidewalk, a track, a roadway, a door, a tile, an item of furniture, a box, a housing, a fence, a railing, a deck, or any other rectangular item.

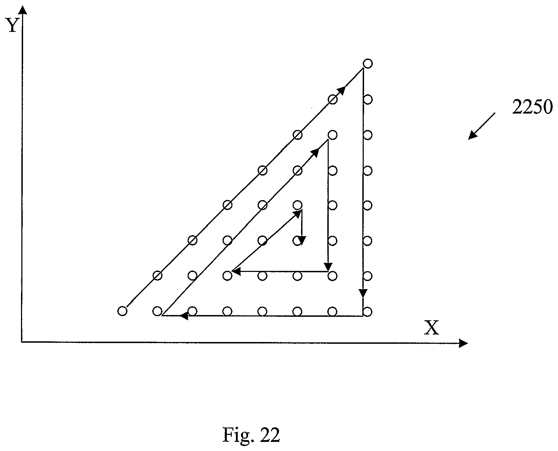

Referring to Fig. 22, a triangular configuration 2250 can be created, using a curvilinear string of lighting units, or by placing individual addressable lighting units in the configuration. Again, once the locations of lighting units and the dimensions of the triangle are known, a transformation can be made from one coordinate system to another, and pre-arranged effects and shows can be stored for triangular configurations of any selected number of lighting units. Triangular configurations 2250 can be used in many environments, such as for lighting triangular faces or items, such as architectural features, alcoves, tiles, ceilings, floors, doors, appliances, boxes, works of art, or any other triangular items.

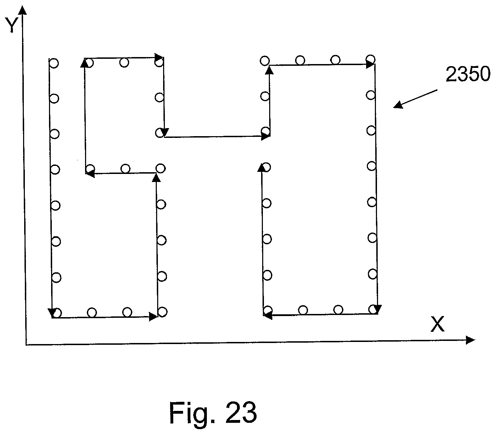

Referring to Fig. 23, lighting units can be placed in the form of a character, number, symbol, logo, design mark, trademark, icon, or other configuration designed to convey information or meaning. The lighting units can be strung in a curvilinear string to achieve any configuration in any dimension, such as the formation of the number "80" in the configuration 2350 of Fig. 23. Again, once the locations of the lighting units are known, a conversion can be made between Cartesian (x, y) coordinates and the positions of the lighting units in the string, so that an effect generated using a one coordinate system can be transformed into an effect for the other. Characters such as those mentioned above can be used in signs, on vending machines, on gaming machines, on billboards, on transportation platforms, on buses, on airplanes, on ships, on boats, on automobiles, in theatres, in restaurants, or in any other environment where a user wishes to convey information.

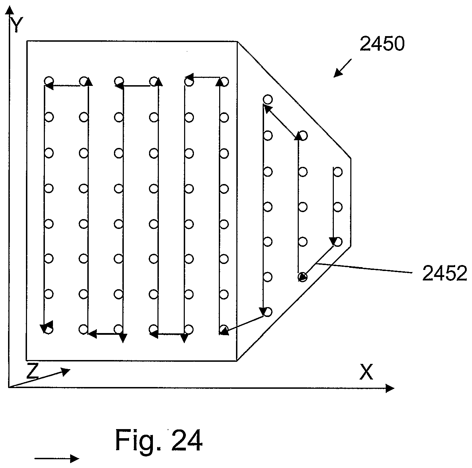

Referring to Fig. 24, lighting units can be configured in any arbitrary geometry, not limited to two-dimensional configurations. For example, a string of lighting units can cover two sides of a building, such as in the configuration 2450 of Fig. 24. The three-dimensional coordinates (x, y, z) can be converted based on the positions of the individual lighting units in the string 2452. Once a conversion is known between the (x, y, z) coordinates and the string positions of the lighting units, shows authored in Cartesian coordinates, such as for individually addressable lighting units, can be converted to shows for a string of lighting units, or vice versa. Pre-stored shows and effects can be authored for any geometry, whether it is a string or a two- or three-dimensional shape. These include rectangles, squares, triangles, geometric solids, spheres, pyramids, tetrahedrons, polyhedrons, cylinders, boxes and many others, including shapes found in nature, such as those of trees, bushes, hills, or other features.

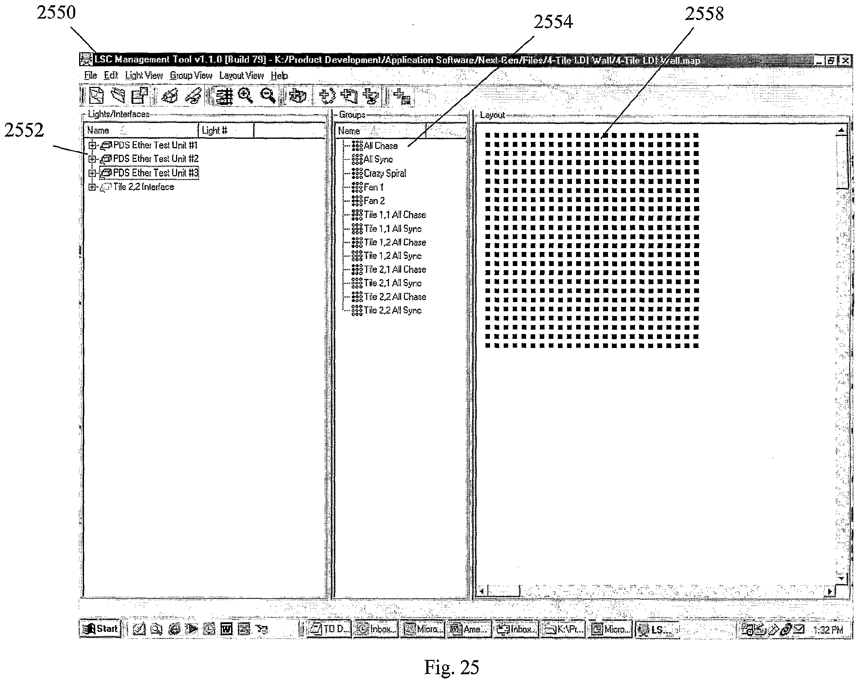

Referring to Fig. 25, the light system manager 1650 may operate in part on the authoring computer 1750, which may include a mapping facility 1652. The mapping facility 1652 may include a graphical user interface 2550, or management tool, which may assist a user in mapping lighting units to locations. The management tool 2550 may include various panes, graphs or tables, each displayed in a window of the management tool. A lights/interfaces pane 2552 lists lighting units or lighting unit interfaces that are capable of being managed by the management tool. Interfaces may include power/data supplies (PDS) 1758 for one or more lighting systems, DMX interfaces, DALI interfaces, interfaces for individual lighting units, interfaces for a tile lighting unit, or other suitable interfaces. The interface 2550 also includes a groups pane 2554, which lists groups of lighting units that are associated with the management tool 2550, including groups that can be associated with the interfaces selected in the lights/interfaces pane 2552. As described in more detail below, the user can group lighting units into a wide variety of different types of groups, and each group formed by the user can be stored and listed in the groups pane 2554. The interface 2550 also includes the layout pane 2558, which includes a layout of individual lighting units for a light system or interface that is selected in the lights/interfaces pane 2552. The layout pane 2558 shows a representative geometry of the lighting units associated with the selected interface, such as a rectangular array if the interface is an interface for a rectangular tile light, as depicted in Fig. 25. The layout can be any other configuration, as described in connection with the other figures above. Using the interface 2550, a user can discover lighting systems or interfaces for lighting systems, map the layout of lighting units associated with the lighting system, and create groups of lighting units within the mapping, to facilitate authoring of shows or effects across groups of lights, rather than just individual lights. The grouping of lighting units dramatically simplifies the authoring of complex shows for certain configurations of lighting units.

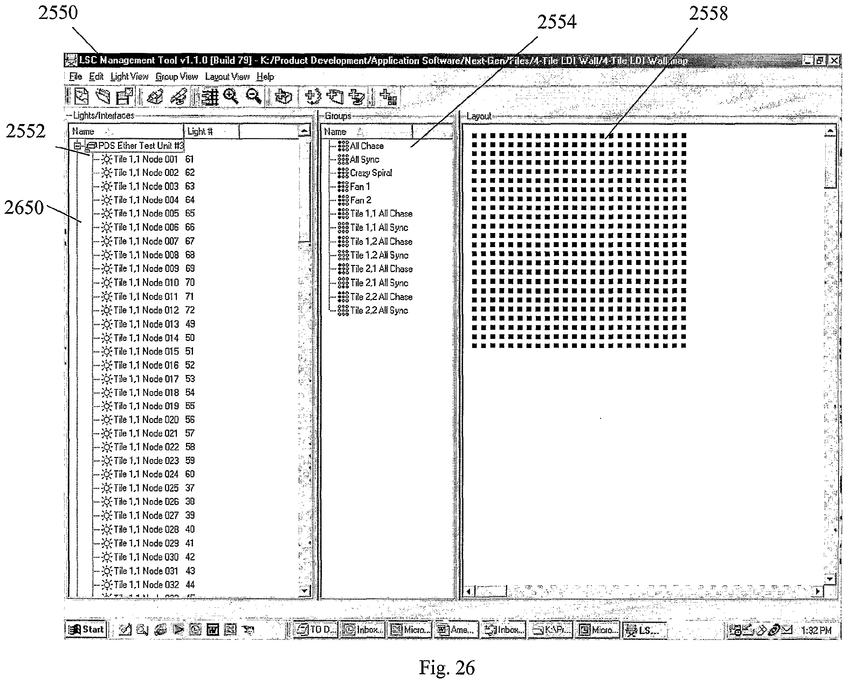

Referring to Fig. 26, further details of the lights/interfaces pane 2552 are provided. Here, by clicking the "+" sign, the user can display a list 2650 of all of the individual lighting units that are associated with a particular interface that is presented in the lights/interfaces pane 2552. The pane 2650 of Fig. 26 lists each of the nodes of a tile light, but other lighting units could be listed, depending on the configuration of lighting units associated with a particular interface.

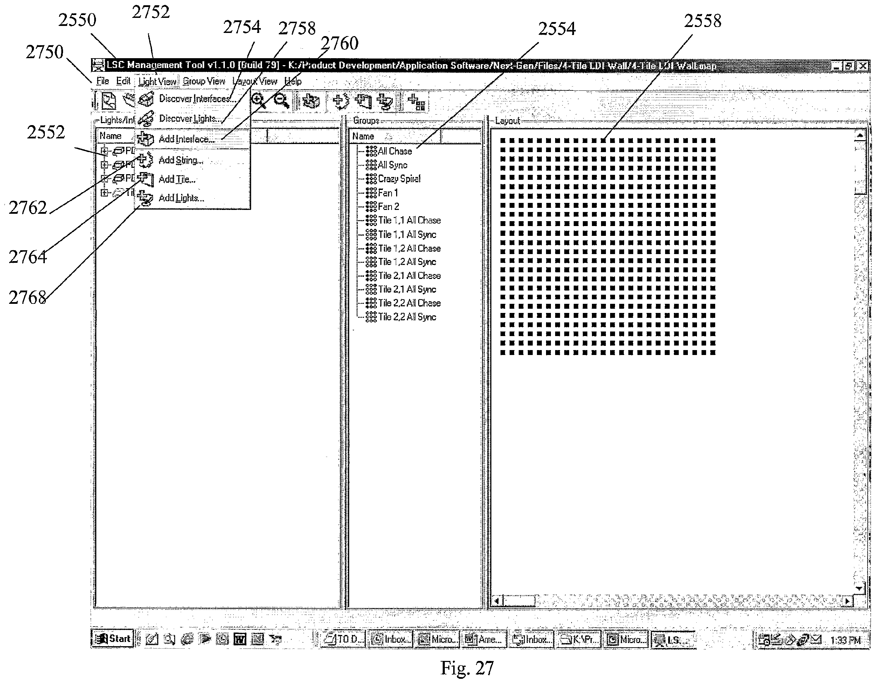

Referring to Fig. 27, the interface 2550 includes a series of menus 2750 that can be initiated by placing the mouse over the appropriate menu at the top of the display 2550. The "light view" menu 2752 opens up a menu that includes various options for the user, including discover interfaces 2754, discover lights 2758, add interfaces 2760, add string 2762, add tile 2764 and add lights 2768. Clicking on any one of those menus allows the user to initiate the associated action. The discover interfaces 2754 option initiates a wizard through which the user can discover interfaces that can be managed using the light management system 1650, such as PDS interfaces 1758 that supply power and data to various lighting units, as well as tile light interfaces for tile lights and other interfaces. The discover lights menu 2758 allows the user to discover lights that are associated with particular interfaces or that can be managed directly through the light management system 1658. The add interfaces menu 2760 allows the user to add a new interface to the lights/interfaces pane 2752. The add string menu 2762 allows the user to add a number of lighting units in a string configuration to the lights/interfaces pane 2752. The add tile menu 2764 allows the user to add a tile light interface to the lights/interfaces pane 2752. The add lights menu 2768 allows the user to add a lighting unit to the lights/interfaces pane 2752. Once the interface, light, tile, string, or other item is added to the lights/interfaces pane 2752, it can be manipulated by the interface 2550 to provide an appropriate mapping for the light management tool 1650.

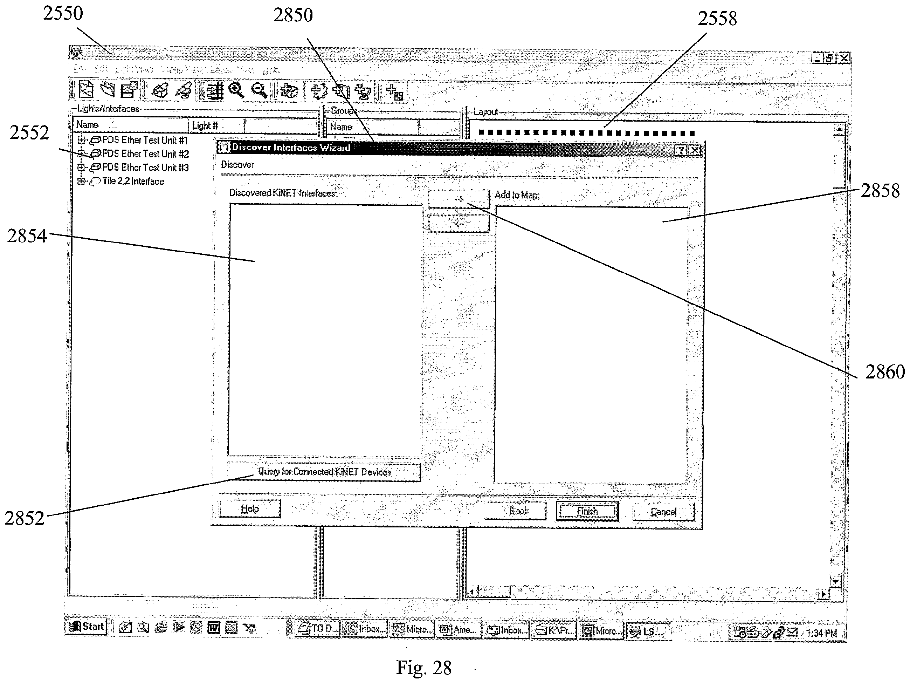

Referring to Fig. 28, when the discover interfaces button 2754 is selected in the interface 2550, after selecting the light view menu button 2752, a discover interfaces wizard 2850 appears, through which a user can add an interface to be managed by the light management system 1650. The user can click a query button 2852 to query the surrounding network neighborhood for connected devices that employ lighting system network protocols. Discovered devices appear in a discovered interfaces pane 2854. The user can click the arrow 2860 to add a discovered device (such as a PDS 1758, tile light interface, light string, or the like) to the add to map pane 2858, in which case the discovered device or interface will then appear in the lights/interfaces pane 2552 of the interface 2550, and the user will be able to initiate other actions to manage the newly discovered interface.

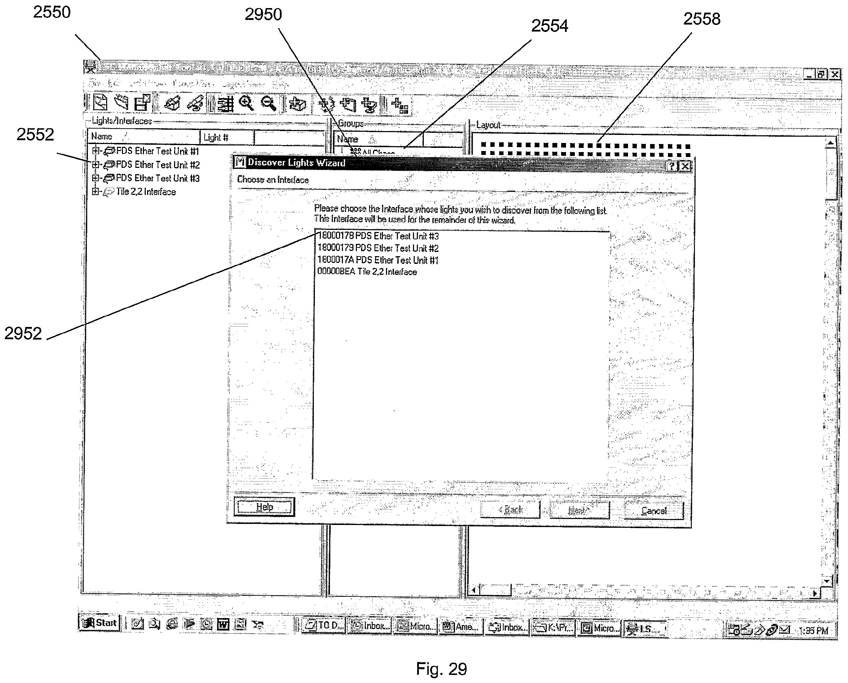

Referring to Fig. 29, when the discover lights button 2758 is selected in the interface 2550, after selecting the light view menu button 2752, a discover lights wizard 2950 appears, through which a user can discover lights that are under the control of the interfaces that appear in the lights/interfaces pane 2552. A pane 2952 allows the user to select the particular interface for which the user wishes to discover lights.

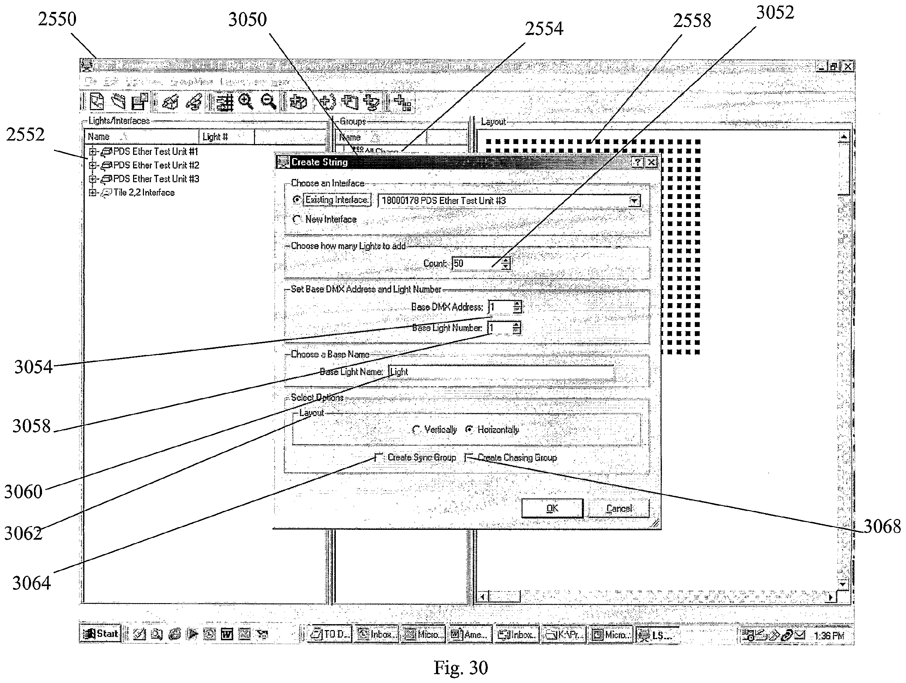

Referring to Fig. 30, when the add string button 2762 is selected from the menu that results from clicking the light view menu button 2752 in the interface 2550, a create string wizard 3050 appears that assists the user in adding a string of lights as one of the interfaces in the lights/interfaces pane 2552. In the create string wizard 3050, the user can elect to add a string to an existing interface or to a new interface. The user then indicates the number of lighting units in the string at the tab 3052. The user then sets the base DMX address for the string at the tab 3054 and sets the base light number of the string at the tab 3058. The user can then name the base light in the string with a character or string that serves as an identifier in the tab 3060. Using a button 3062, the user can elect to layout the string vertically or horizontally (or, in embodiments, in other configurations). The user can elect to create a synchronized group by placing an "x" in the button 3064. The user can elect to create a chasing group by placing an "x" in the button 3068. Thus, using the create string wizard 3050, the user names a string, assigns it to an interface, such as a PDS 1758, determines its basic layout, determines its base DMX address and base light number, and determines whether it should consist of a synchronized group, a chasing group, or neither. Similar menus can optionally be provided to add other known lighting configurations, such as a new tile, a new circle of lights, a new array of lights, a new rectangle of lights, or the like, in any desired configuration.

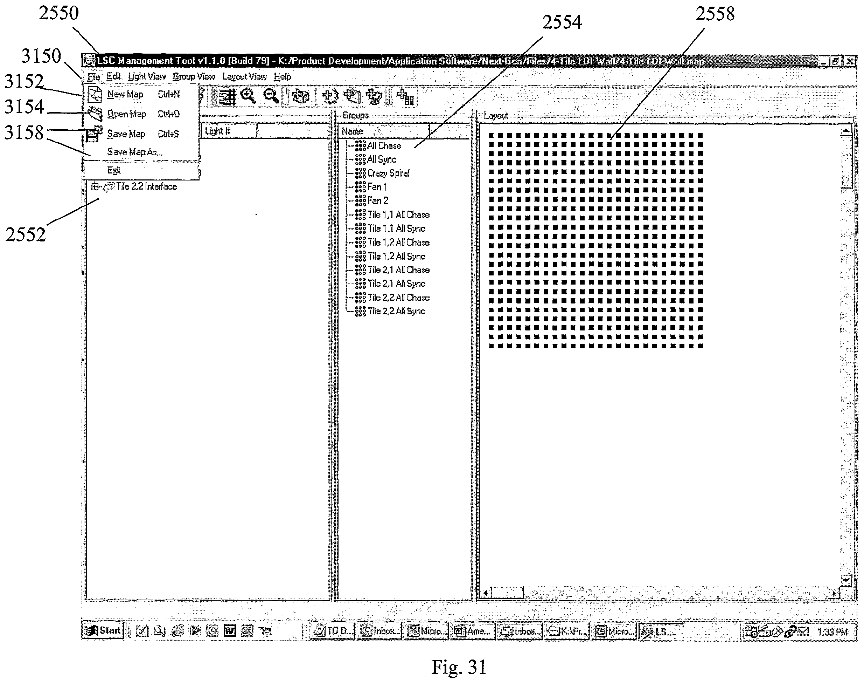

Referring to Fig. 31, by clicking the file menu 3150 of the interface 2550 the user is offered options to create a new map 3152, open an existing map 3154 or save a map 3158 (including to save the map in a different file location). Thus, maps of a given set of interfaces, lights, groups and layouts can be stored as files. A given set of light interfaces can, for example, be mapped in different ways. For example, in a stage lighting environment, the lights on two different sides of the stage could be made part of the same map, or they could be mapped as separate maps, or zones, so that the user can author shows for the two zones together, separately, or both, depending on the situation.

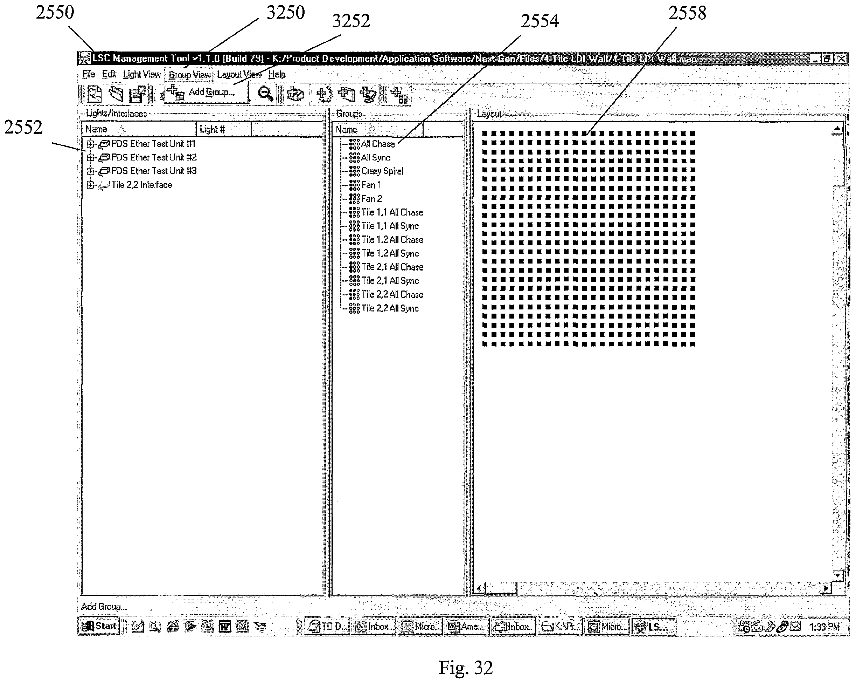

Referring to Fig. 32, by clicking the group view menu 3250 on the interface 2550, the user is offered a menu button 3250 by which the user can choose to add a group. An added group will be displayed in the group pane 2554. The ability to group lights offers powerful benefits in the composing of lighting shows using the lighting show composer 1654. Rather than having to specify color, hue, saturation or intensity values for a every specific lighting unit in a complex configuration, a user can group the lighting units, and all units in the group can respond in kind to a control signal. For example, a synchronized group of lights can all light in the same color and intensity at the same time. A chasing group of lights can illuminate in a predetermined sequence of colors, so that, for example, a rainbow chases down a string of lights in a particular order.

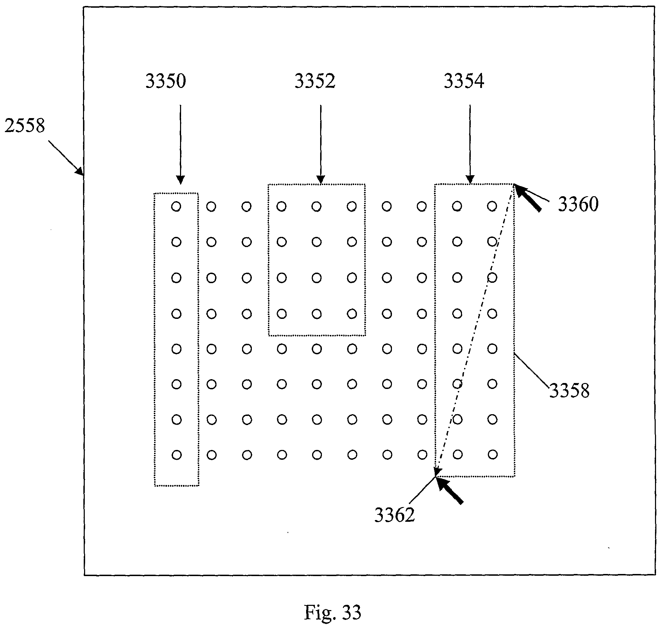

Referring to Fig. 33, groups can take various configurations. For example, a group may consist of a single line or column 3350 of lighting units, such as disposed in an array. A group can consist of a subsection of an array, such as the array 3352 or the dual column 3354. Many other groupings can be envisioned. In embodiments, a group can be formed in the layout pane 2558 by creating a "rubber band" 3358 around lights in a group by clicking the mouse at the point 3360 and moving it to the point 3362 before clicking again, so that all groups that are included in the rectangle of the rubber band 3358 are made into members of the same group.

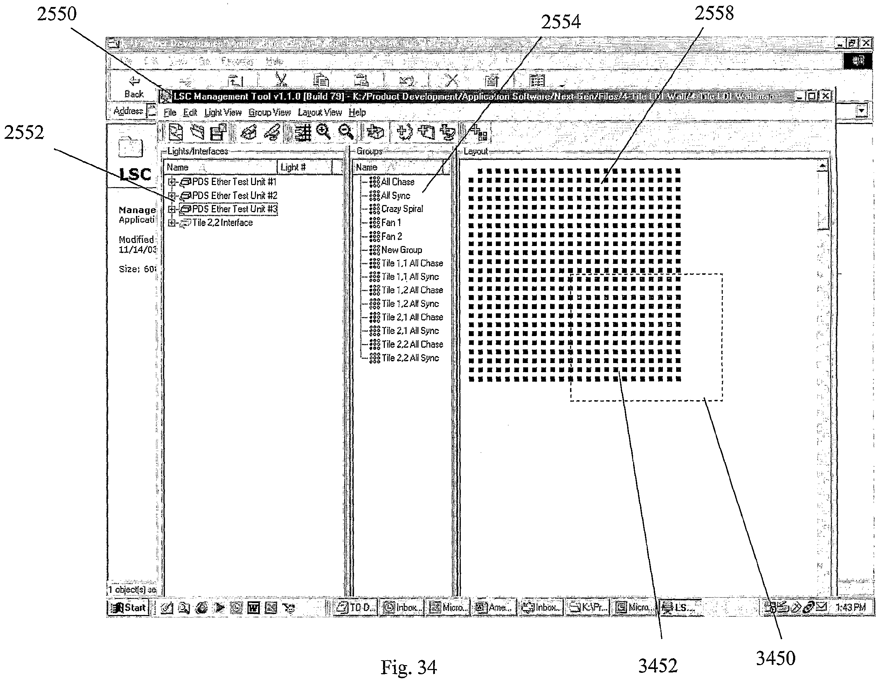

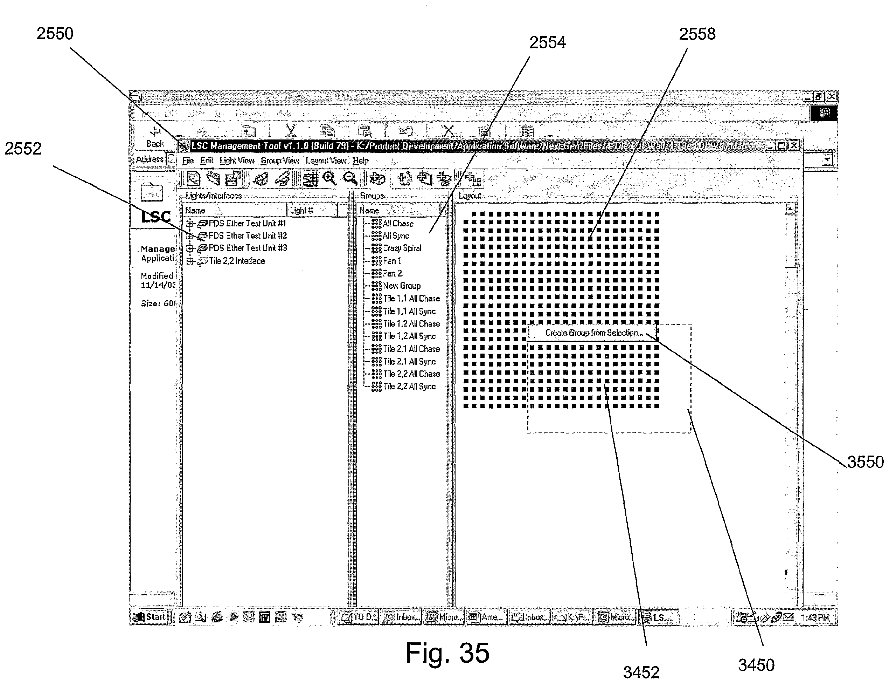

Fig. 34 shows the creation of a group 3452 by dragging a rubber band 3450 around the group in the layout pane 2558 of the interface 2550. Referring to Fig. 35, by right-clicking the mouse after forming the group with the rubber band 3450, the user can create a new group with the option 3550, in which case the group appears in the groups pane 2554.

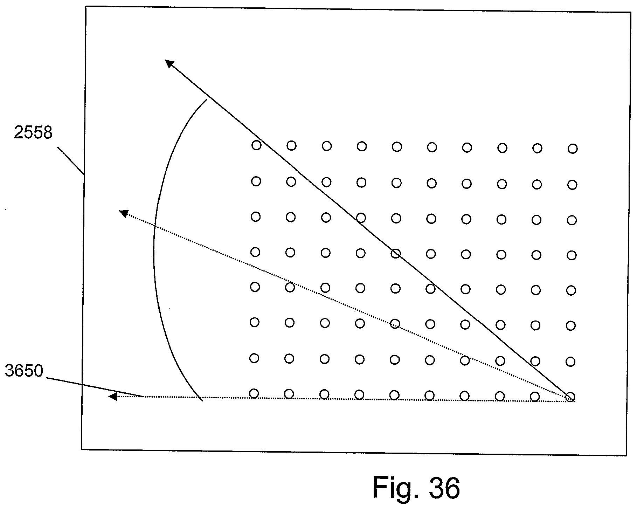

Referring to Fig. 36, groups can be created in various ways in the layout pane 2558. For example, an arrow 3650 can be dragged across a graphic depicting a layout of lighting units. Individual lighting units can be added to a group in the sequence that the lighting units are crossed by the arrow 3650, so that effects that use the group can initiate in the same sequence as the crossing of lighting units by the arrow 3650. Other shapes can be used to move across groups in the layout pane 2558, putting the lighting units in the order that the shapes cross the lighting units. Moving the arrow 3650 allows the creation of complex patterns, such as spirals, bursts, scalloped shapes, and the like, as chasing groups are created by moving lines or other shapes across a layout of lights in a desired order. The group ordering can be combined with various effects to generate lighting shows in the light show composer.

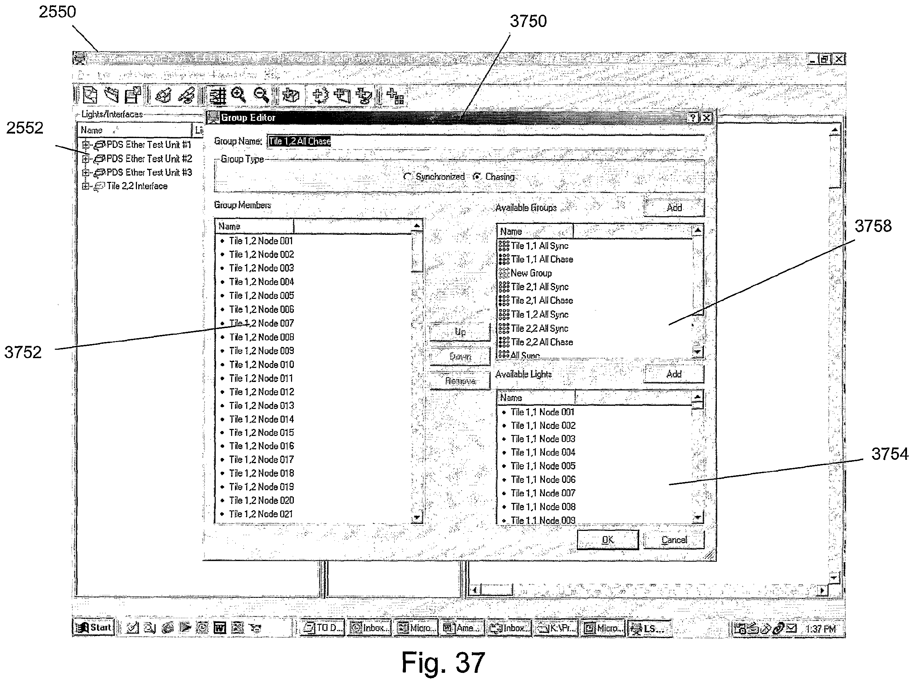

Referring to Fig. 37, by double clicking on a group in the groups pane 2554, a user can bring up a groups editor 3750, in which the user can edit characteristics of members of a group that appear in the group members pane 3752, such as by adding or deleting lighting units from the available lights pane 3754 or adding other groups from the available groups pane 3758.

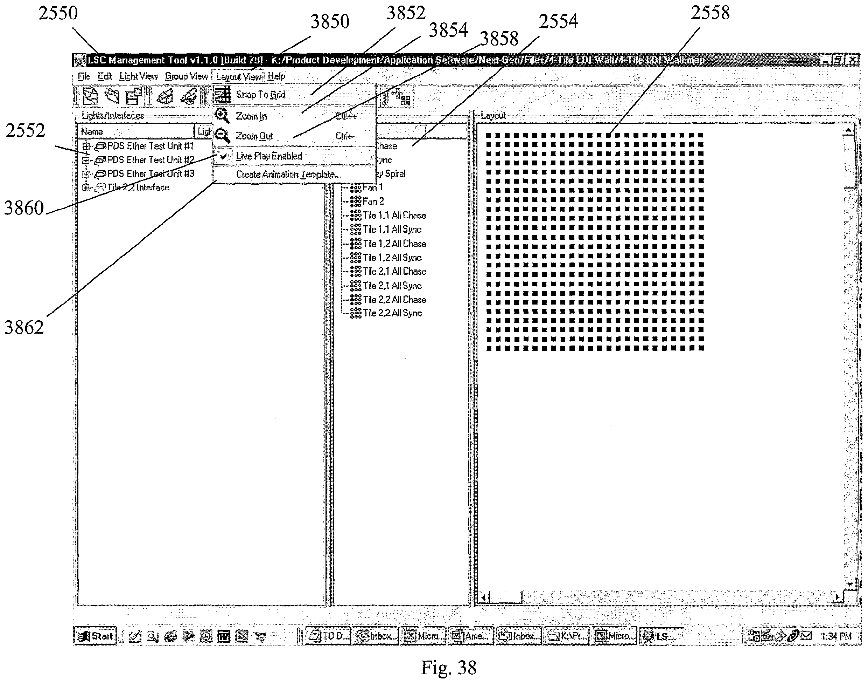

Referring to Fig. 38, various options are available to the user if the user clicks the layout view menu item 3850. Through a pull-down menu, the user can snap the layout to a grid with a button 3852. The user can zoom in with a button 3854 or zoom out with a button 3858. The user can enable live playing with a button 3860. The user can create an animation template in the layout pane 2558 with a button 3862. In embodiments, a user may be offered various other editing options for the view of the layout of lighting units in the layout pane 2558. For example, in embodiments the layout pane 2558 may be enabled with a three-dimensional visualization capability, so that the user can layout lights in a three-dimensional rendering that corresponds to a three-dimensional mapping in the real world.

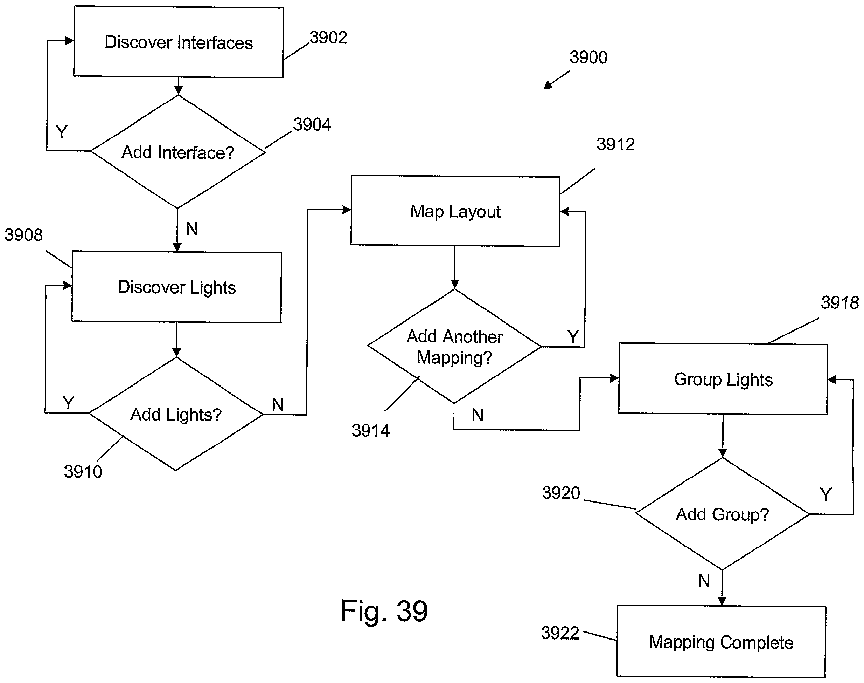

Referring to Fig. 39, a flow diagram 3900 shows various steps that are optionally accomplished using the mapping facility 1652, such as the interface 2550, to map lighting units and interfaces for an environment into maps and layouts on the authoring computer 1750. At a step 3902, the mapping facility 1652 can discover interfaces for lighting systems, such as power/data supplies 1758, tile light interfaces, DMX or DALI interfaces, or other lighting system interfaces, such as those connected by an Ethernet switch. At a step 3904 a user determines whether to add more interfaces, returning to the step 3902 until all interfaces are discovered. At a step 3908 the user can discover a lighting unit, such as one connected by Ethernet, or one connected to an interface discovered at the step 3902. The lights can be added to the map of lighting units associated with each mapped interface, such as in the lights/interfaces pane 2552 of the interface 2550. At a step 3910 the user can determine whether to add more lights, returning to the step 3908 until all lights are discovered. When all interfaces and lights are discovered, the user can map the interfaces and lights, such as using the layout pane 2558 of the interface 2550. Standard maps can appear for tiles, strings, arrays, or similar configurations. Once all lights are mapped to locations in the layout pane 2559, a user can create groups of lights at a step 3918, returning from the decision point 3920 to the step 3918 until the user has created all desired groups. The groups appear in the groups pane 2554 as they are created. The order of the steps in the flow diagram 3900 can be changed; that is, interfaces and lights can be discovered, maps created, or groups formed, in various orders. Once all interfaces and lights are discovered, maps created and groups formed, the mapping is complete at a step 3922. Many embodiments of a graphical user interface for mapping lights in a software program may be envisioned by one of skill in the art in accordance with this invention.

Wherein the lighting systems are selected from the group consisting of an architectural lighting system, an entertainment lighting system, a restaurant lighting system, a stage lighting system, a theatrical lighting system, a concert lighting system, an arena lighting system, a signage system, a building exterior lighting system, a landscape lighting system, a pool lighting system, a spa lighting system, a transportation lighting system, a marine lighting system, a military lighting system, a stadium lighting system, a motion picture lighting system, photography lighting system, a medical lighting system, a residential lighting system, a studio lighting system, and a television lighting system.

Using a mapping facility, light systems can optionally be mapped into separate zones, such as DMX zones. The zones can be separate DMX zones, including zones located in different rooms of a building. The zones can be located in the same location within an environment. In embodiments the environment can be a stage lighting environment.

Thus, in various embodiments, the mapping facility allows a user to provide a grouping facility for grouping light systems, wherein grouped light systems respond as a group to control signals. In embodiments the grouping facility comprises a directed graph. In embodiments, the grouping facility comprises a drag and drop user interface. In embodiments, the grouping facility comprises a dragging line interface. The grouping facility can permit grouping of any selected geometry, such as a two-dimensional representation of a three-dimensional space. In embodiments, the grouping facility can permit grouping as a two-dimensional representation that is mapped to light systems in a three-dimensional space. In embodiments, the grouping facility groups lights into groups of a predetermined conventional configuration, such as a rectangular, two-dimensional array, a square, a curvilinear configuration, a line, an oval, an oval-shaped array, a circle, a circular array, a square, a triangle, a triangular array, a serial configuration, a helix, or a double helix.

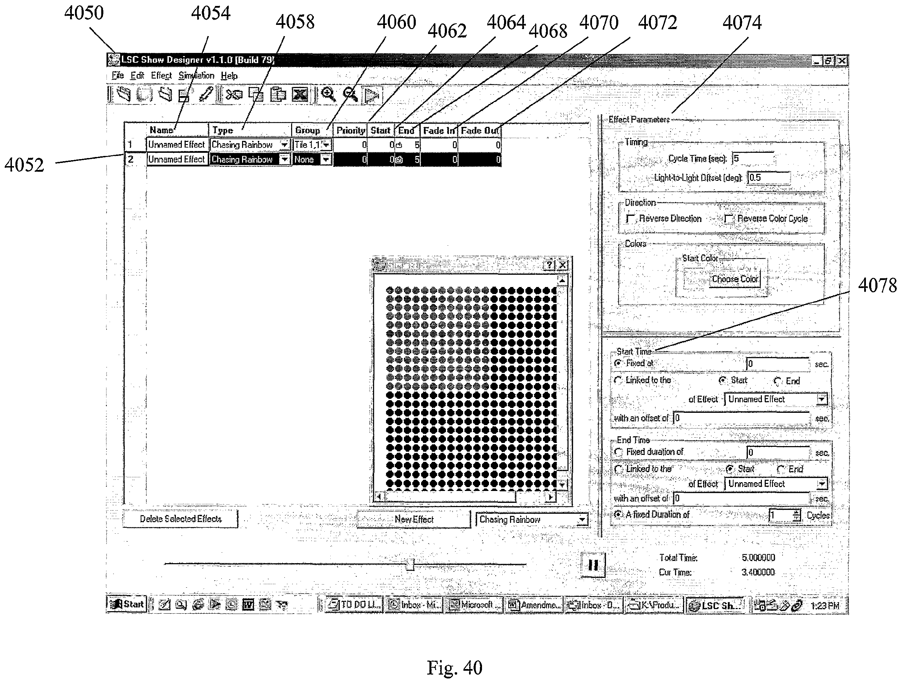

Referring to Fig. 40, a light system composer 1652 can be provided, running on the authoring computer 1750, for authoring lighting shows comprised of various lighting effects. The lighting shows can be downloaded to the light system engine 1654, to be executed on lighting units 100. The light system composer 1652 is preferably provided with a graphical user interface 4050, with which a lighting show developer interacts to develop a lighting show for a plurality of lighting units 100 that are mapped to locations through the mapping facility 1658. The user interface 4050 supports the convenient generation of lighting effects, embodying the object-oriented programming approaches described above. In the user interface 4050, the user can select an existing effect by initiating a tab 4052 to highlight that effect. In embodiments, certain standard attributes are associated with all or most effects. Each of those attributes can be represented by a field in the user interface 4050. For example, a name field 4054 can hold the name of the effect, which can be selected by the user. A type field 4058 allows the user to enter a type of effect, which may be a custom type of effect programmed by the user, or may be selected from a set of preprogrammed effect types, such as by clicking on a pull-down menu to choose among effects. For example, in Fig. 40, the type field 4058 for the second listed effect indicates that the selected effect is a color-chasing rainbow. A group field 4060 indicates the group to which a given effect is assigned, such as a group created through the light system manager interface 2550 described above. For example, the group might be the first row of a tile light, or it might be a string of lights disposed in an environment. A priority field 4062 indicate the priority of the effect, so that different effects can be ranked in their priority. For example, an effect can be given a lower priority, so that if there are conflicting effects for a given group during a given show, the a higher priority effect takes precedence. A start field 4064 allows the user to indicate the starting time for an effect, such as in relation to the starting point of a lighting show. An end field 4068 allows the user to indicate the ending time for the effect, either in relation to the timing of the lighting show or in relation to the timing of the start of the effect. A fade in field 4070 allows the user to create a period during which an effect fades in, rather than changes abruptly. A fade out field 4072 allows the user to fade the effect out, rather than ending it abruptly. For a given selected type of effect, the parameters of the effect can be set in an effects pane 4074. The effects pane 4074 automatically changes, prompting the user to enter data that sets the appropriate parameters for the particular type of effect. A timing pane 4078 allows the user to set timing of an effect, such as relative to the start of a show or relative to the start or end of another effect.

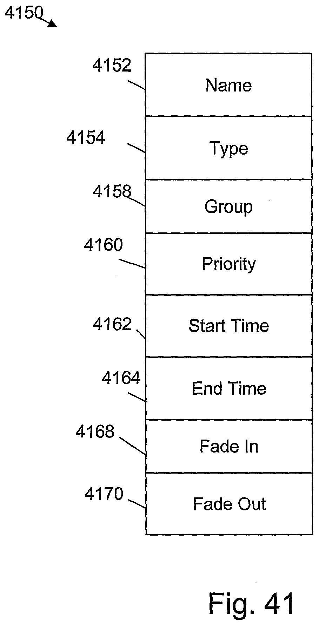

Referring to Fig. 41, a schematic 4150 indicates standard parameters that can exist for all or most effects. These include the name 4152, the type 4154, the group 4158, the priority 4160, the start time 4162, the end time 4164, the fade in parameter 4168 and the fade out parameter 4170.

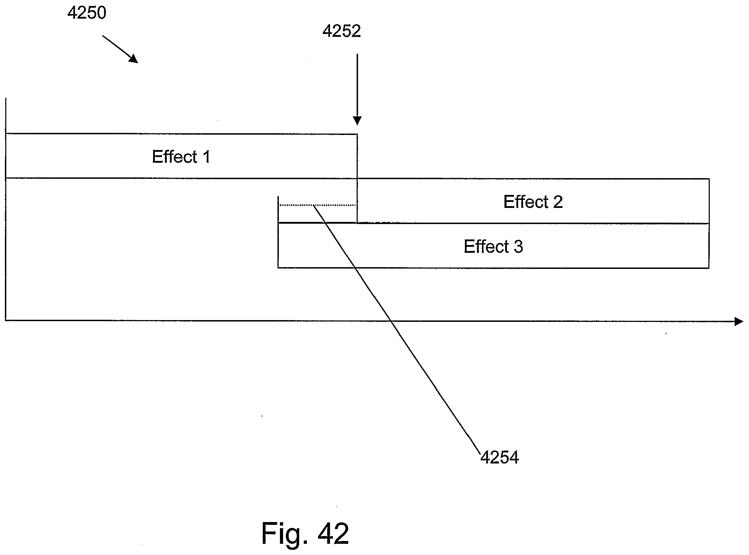

Referring to Fig. 42, a set of effects can be linked temporally, rather than being set at fixed times relative to the beginning of a show. For example, a second effect can be linked to the ending of a first effect at a point 4252. Similarly, a third effect might be set to begin at a time that is offset by a fixed amount 4254 relative to the beginning of the second effect. With linked timing of effects, a particular effect can be changed, without requiring extensive editing of all of the related effects in a lighting show. Once a series of effects is created, each of them can be linked, and the group can be saved together as a meta effect, which can be executed across one or more groups of lights.

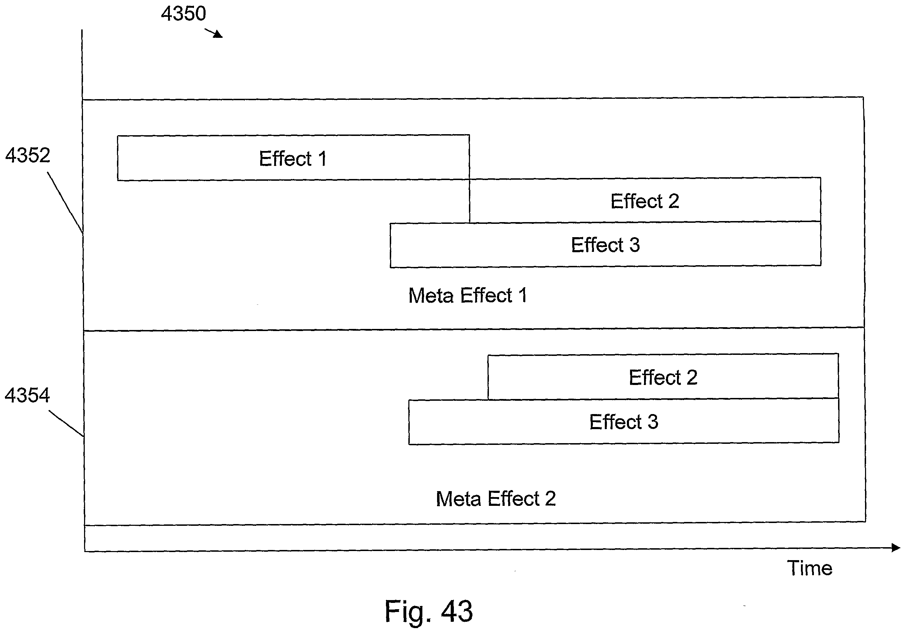

Referring to the schematic diagram 4350 of Fig. 43, once a user has created meta effects, the user can link them, such as by linking a first meta effect 4352 and a second meta effect 4354 in time relative to each other. Linking effects and meta effects, a user can script entire shows, or portions of shows. The creation of reusable meta effects can greatly simplify the coding of shows across groups.

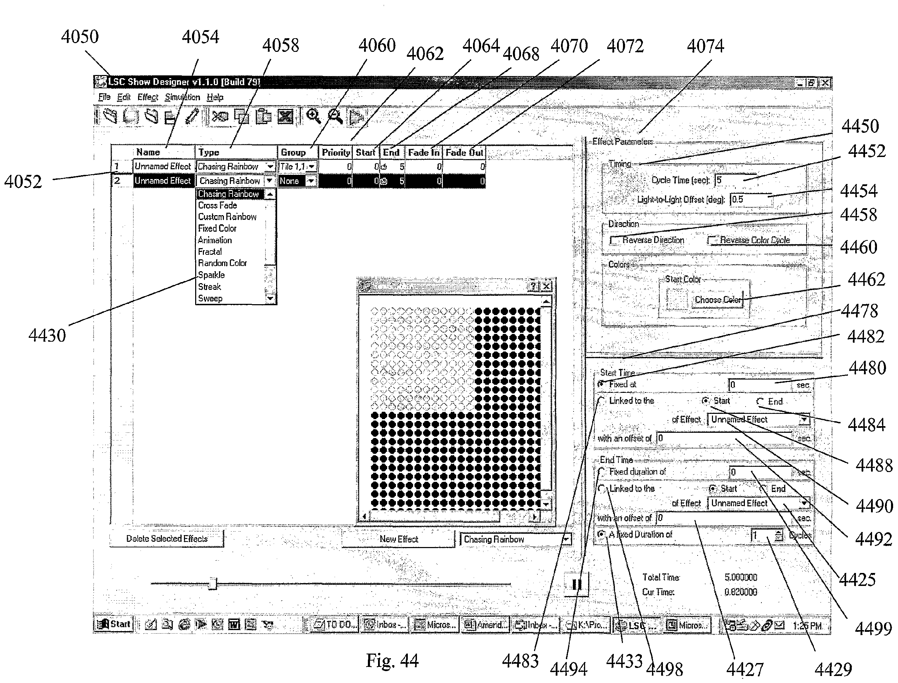

Referring to Fig. 44, the user interface 4050 allows the user to set parameters and timing for various effects. First, a user can select a particular type of effect in the type field 4058, such as by pulling down the pull-down menu 4430. Once the user has selected a particular type of effect, the parameters for that effect appear in the parameters pane 4074. For example, where the effect is a color-chasing rainbow, as selected in the type field 4058 of Fig. 44, certain parameters appear in the parameters pane 4074, but if other types are selected, then other parameters appear. When the color-chasing rainbow is selected, a timing field 4450 appears, where the user can enter a cycle time in a field 4452 and light-to-light offset in a field 4454. In a field 4458, the user can elect to reverse the direction of a particular effect. The user can also elect to reverse the color cycle at a field 4460. At a field 4462, the user can select to choose a particular starting color for the rainbow, completing the setting of the parameters for the color-chasing rainbow effect.

Referring still to the interface 4050 of Fig. 44, the user sets the starting time for the particular effect. The user can elect a fixed time by selecting the button 4482, in which case the effect will start at the time entered at the field 4480, relative to the start of the show. If the user wishes to start an effect at a relative time, linked to another effect, then the user can indicated a linked timing with a button 4483, in which case the user chooses to link either to the start or end of another effect, using the buttons 4488 and 4484, and the user enters the name of the other effect to which the timing of the effect will be linked at the field 4490. The user can enter an offset in the timing of the effects at a field 4492.

Referring still to Fig. 44, the user also sets the ending time for a particular effect. The user can choose a fixed ending time by selecting the button 4494 and entering the time (relative to the start of the lighting show, for example) at the field 4499. If the user wishes to use timing linked to other effects, rather than relative to the start of the show, the user indicates so by indicating that the effect will be linked at the button 4498. As with the start of effects, the user elects either the start or the end of the other effect as the timing and enters the name of the other effect at the field 4425. The user indicates the duration of any desired offset at a field 4427. Rather than linking to a fixed time relative to the beginning of the show or linking to another effect, the user can also set a fixed duration for the effect by selecting the button 4433 and entering the duration at the field 4429.

The user interface 4050 of Figs. 40 and 44 is representative of a wide range of potential user interfaces that allow a user to create effects and to assign parameters to those effects, including timing parameters, including ones that link particular effects to other effects. Many different effects can be generated, in each case consisting of a set of control instructions that govern the intensity, saturation, color, hue, color temperature, or other characteristic of each lighting unit 100 in a group of lighting units 100 along a timeline. Thus, effects consist of sets of control instructions, groups allow a user to apply control instructions across more than one lighting unit 100 at a time, and parameters allow the user to modify attributes of the effects. Meta effects allow users to build larger effects, and eventually shows, from lower level effects. Once a user has created an effect, meta effect, or show, it can be stored, so that it can be accessed for later purposes, such as to build other effects, meta effects, or shows, or it can be edited, such as by changing parameters or timing in the user interface 4050.

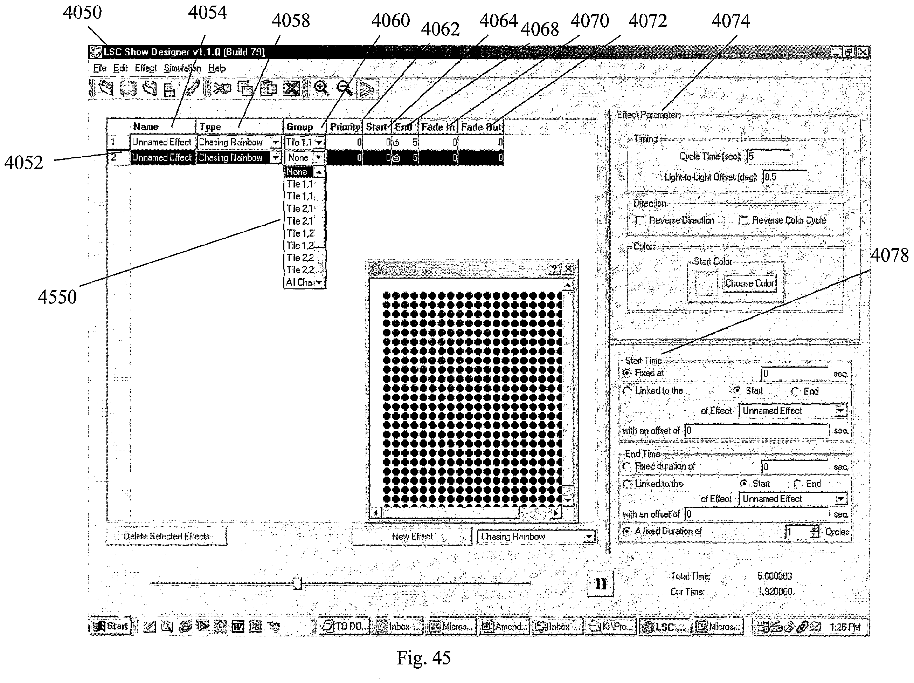

Referring to Fig. 45, a user can select a group to which the user wishes to apply an effect, such as by selecting a pull-down menu 4550 in the user interface 4050. The group can be, for example, any group that is mapped according to the mapping facility 1658 of the authoring computer 1750. The group might be a group of a tile light, a string light, a set of addressable lighting units, a column of an array, a group created by dragging a rubber band in the user interface 2550, a group created by dragging a line or arrow across the group in a particular order, a synchronized group, a chasing group, or another form of group. Selecting a group automatically loads the attributes of the group that were stored using the user interface 2550 of the mapping facility 1658 of the light system manager 1650.

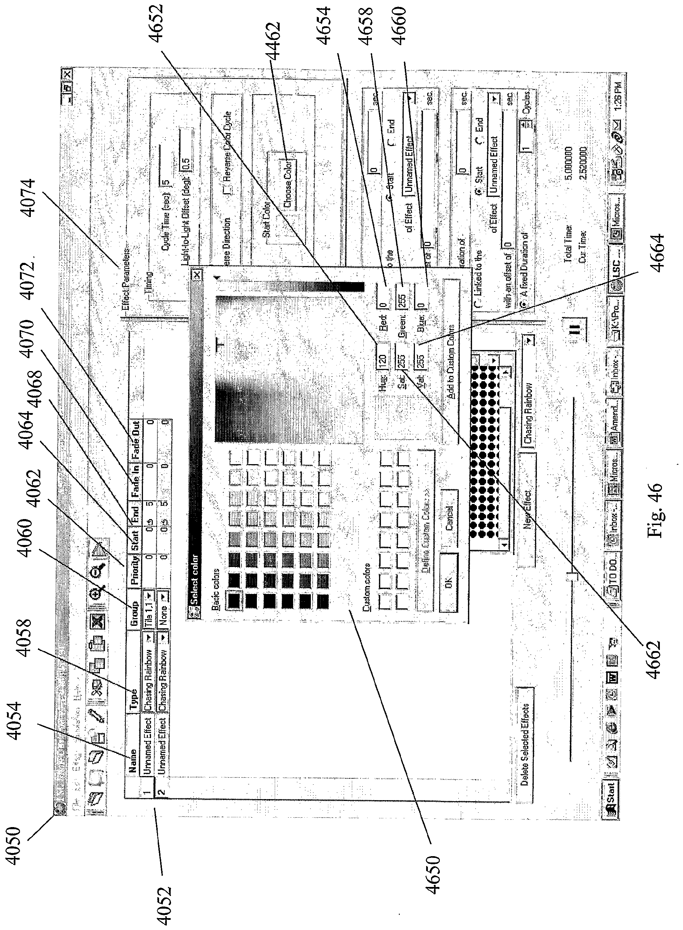

Referring to Fig. 46, when the user selects the choose color button 4462 in the user interface 4050, a palette 4650 appears, from which the user can select the first color of a color chasing effect, such as a color-chasing rainbow. Similarly, the palette 4650 may appear to select a color for a fixed color effect, or for a starting color for any other effect identified above. If the effect is a custom rainbow, then the user can be prompted, such as through a wizard, to select a series of colors for a color chasing rainbow. Thus, the palette 4650 is a simple mechanism for the user to visualize and select colors for lighting effects, where the palette colors correspond to real-world colors of the lighting units 100 of a lighting system that is managed by the light system manager 1650. Using fields of the palette 4650, a user can create custom colors and otherwise specify values for the lighting unit 100. For example, using a field 4652, the user can set the hue numerically within a known color space. Using a field 4654, the user can select the red value of a color, corresponding to the intensity, for example, of a red LED in a triad of red, green and blue LEDs. Using a field 4658 the user can select a green value, and using a field 4660 the user can select a blue value. Thus, the user can select the exact intensities of the three LEDs in the triad, to produce an exactly specified mixed color of light from a lighting unit 100. Using a field 4662, the user can set the saturation of the color, and using a field 4664, the user can set the value of the color. Thus, through the palette 4650, a user can exactly specify the lighting attributes of a particular color for a lighting unit 100 as the color appears in a specified effect. While red, green and blue LEDs appear in the palette 4650, in other embodiments the LEDs might be amber, orange, ultraviolet, different color temperatures of white, yellow, infrared, or other colors. The LED fields might include multiple fields with different wavelength LEDs of a similar color, such as three different wavelengths of white LED.

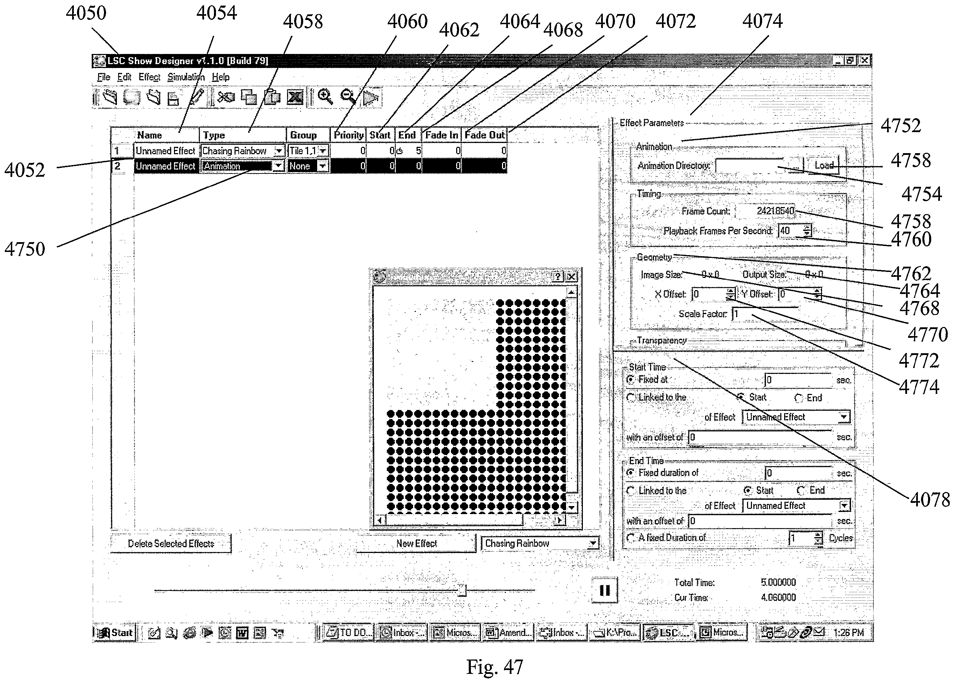

Referring to Fig. 47, a user can select an animation effect 4750, in which case the effect parameters pane 4074 presents parameters that are relevant to animation effects. An animation effect might be generated using software. An example of software used to generate a dynamic image is Flash 5 computer software offered by Macromedia, Incorporated. Flash 5 is a widely used computer program to generate graphics, images and animations. Other useful products used to generate images include, for example, Adobe Illustrator, Adobe Photoshop, and Adobe LiveMotion. In the parameters pane 4074, the user can set parameters for the animation effect. As described above, the pixels of the animation can drive colors for a lighting show, such as a show that is prepared for display on an array or tile light, with the lighting units 100 that make up the tile or array being addressed in a way that corresponds to pixels of the animation, as described above. In the parameters pane 4074, an animation pane 4752 appears, in which a user can enter an animation director in a field 4754 and load the animation by selecting the load button 4758, in which case the particular animation loads for further processing. In addition to the usual timing parameters in the timing pane 4078, the user can set timing parameters that relate to the animation, such as the number of frames, in a field 4758, and the number of frames per second in a field 4760. The user can also determine a geometry for the animation, using a geometry pane 4762. The user can set the image size 4768 and the output size 4764. The user can also offset the image in the X direction using an offset field 4772 and in the Y direction using another offset field 4770. The user can also set a scaling factor for the animation, using a field 4774. By setting these parameters, a user can connect an animation to a lighting show, so that lighting units conduct displays that correspond to an animation that appears on the user's computer screen (or runs on the light system engine 1654). The animation effect thus embodies many of the geometric authoring techniques described above.

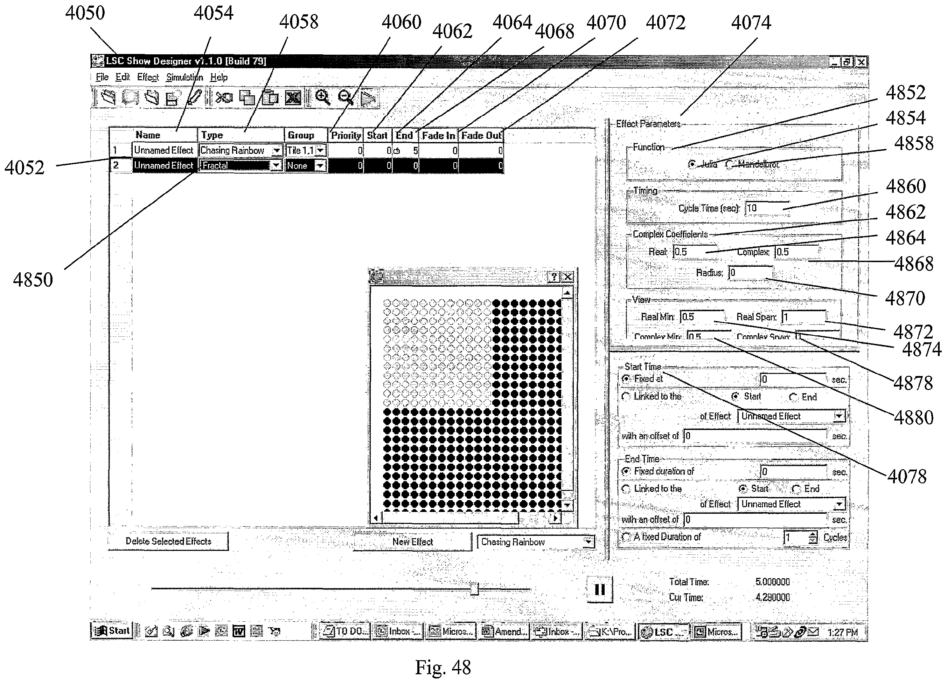

Referring to Fig. 48, a fractal effect 4850 can be selected, in which case the parameters pane 4074 presents parameters related to a fractal function. The fractal function allows the user to generate an effect where the illumination of lighting units depends on a complex function that has real and complex components. Various fractal types can be selected, such as a Julia type, using a button 4852, or a Mandelbrot type, using a button 4854. The user can then set the cycle timing of the fractal effect 4850, using a field 4858. The user can also determine the coefficients 4862 of the fractal function, including a real coefficient in a field 4864 and a complex coefficient in a field 4868, as well as a radius in a field 4870. Parameters related to the view of the fractal can be set as well, including a real minimum parameter in a field 4874, a complex minimum parameter in a field 4880, a real span parameter in a field 4872, and a complex span parameter in a field 4878. Uses of fractal functions can produce very striking and unexpected lighting effects, particularly when presented on an array, such as in a tile light, where the lighting units 100 are positioned in an array behind a diffusing panel.

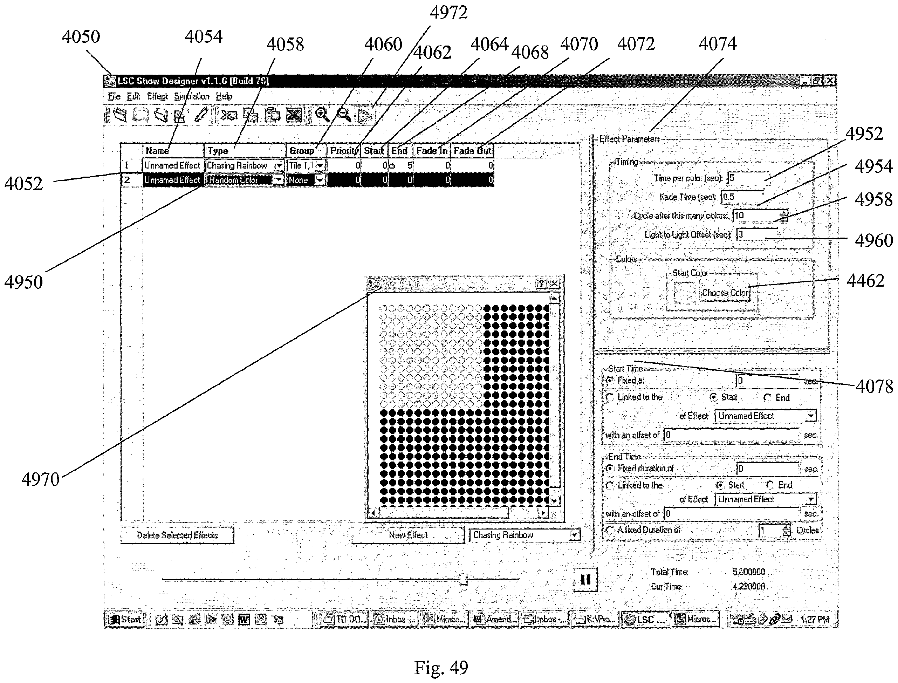

Referring to Fig. 49, a random color effect 4950 can be selected from the menu of the type field 4058, in which case the parameters pane 4074 presents parameters for a random color effect. The user can set various parameters, including those related to timing, such as the time per color in a field 4952, the fade time in a field 4754, the number of colors that appear randomly before a cycle is created in a field 4758, and the light-to-light offset in a field 4760. Using the button 4462, the user can select the initial color, such as by selecting it from the palette 4750 of Fig. 47.

Referring still to Fig. 49, a simulation window 4970 can be generated for any effect, which simulates the appearance of an effect on the selected group of lights. The simulation includes the map of light locations created using the mapping facility 1658 and user interface 2550, and the lighting units 100 represented on the map display colors that correspond to the light that will emit from particular lighting units 100 represented by the map. The simulation window 4970 is an animation window, so that the effect runs through time, representing the timing parameters selected by the user. The simulation window 4970 can be used to display a simulation of any effect selected by the user, simply by selecting the simulation arrow 4972 in the menu of the user interface 4050.

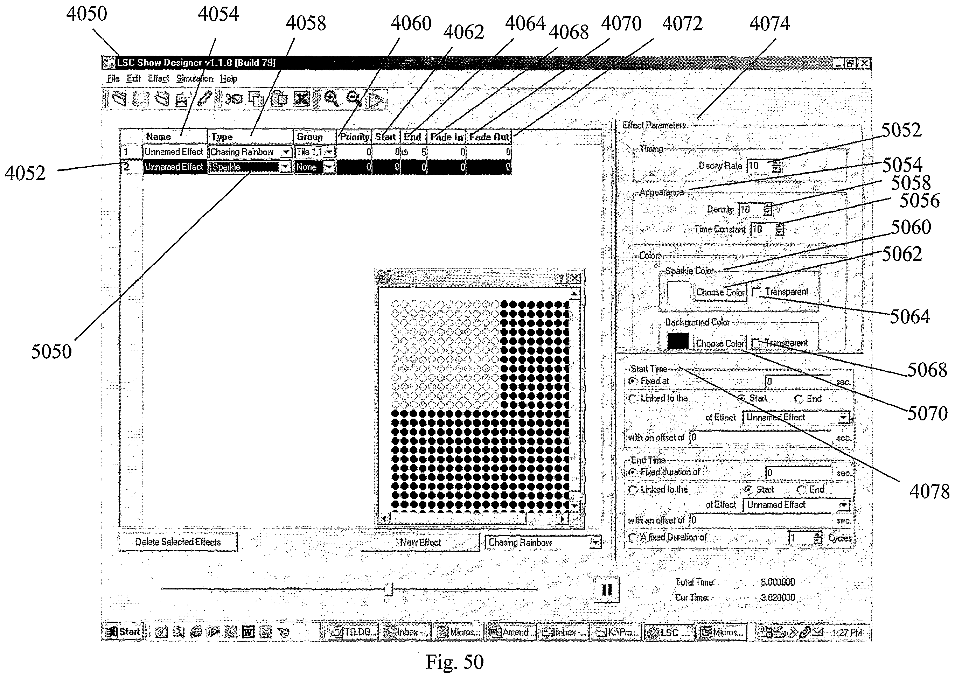

Referring to Fig. 50, a user can select a sparkle effect 5050 from the pull-down menu of the type field 4058, in which case the parameters pane 4074 shows parameters appropriate for a sparkle effect. The parameters include timing parameters, such as the rate of decay, set in a field 5052. The parameters also include appearance parameters 5054, including the density, which can be set in a field 5058, and a time constant, set in a field 5056. The user can also set colors, including a primary sparkle color 5060, which can be selected using a button 5062, which can pull up the palette 4650. Using a button 5062, the user can elect to make the sparkle color transparent, so that other effects show through. The user can also select a background color using a button 5070, which again pulls up a palette 4650. The user can use a button 5068 to make the background color transparent.

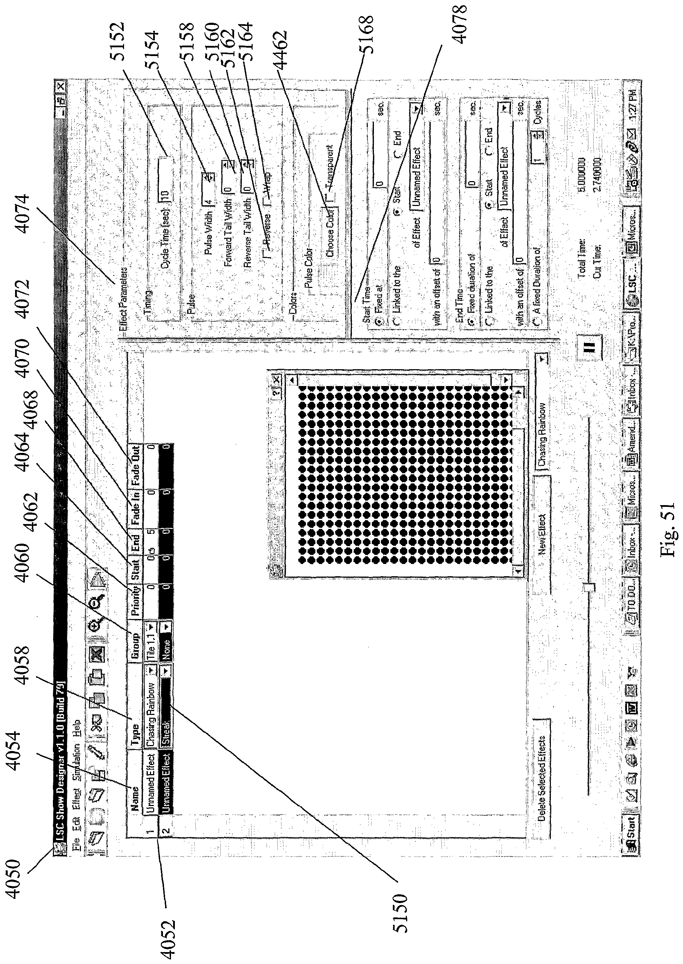

Referring to Fig. 51, the user can select a streak effect 5150 using the pull-down menu of the type field 4058, in which case the parameters pane 4074 shows parameters that govern the attributes of a streak effect 5150. The parameters including the conventional timing and linking parameters that apply to all or most all effects, plus additional parameters, such as a cycle time parameter, set in a field 5152. The user can also set various pulse parameters for the streak effect 5150, such as the pulse width 5158, the forward tail width 5160, and the reverse tail width 5162. The user can use a button 5162 to cause the effect to reverse directions back and forth or a button 5164 to cause the effect to wrap in a cycle. The user can select a color for the streak using the button 4462, in which case the palette 4650 presents color options for the user. The user can make the effect transparent using the button 5168.

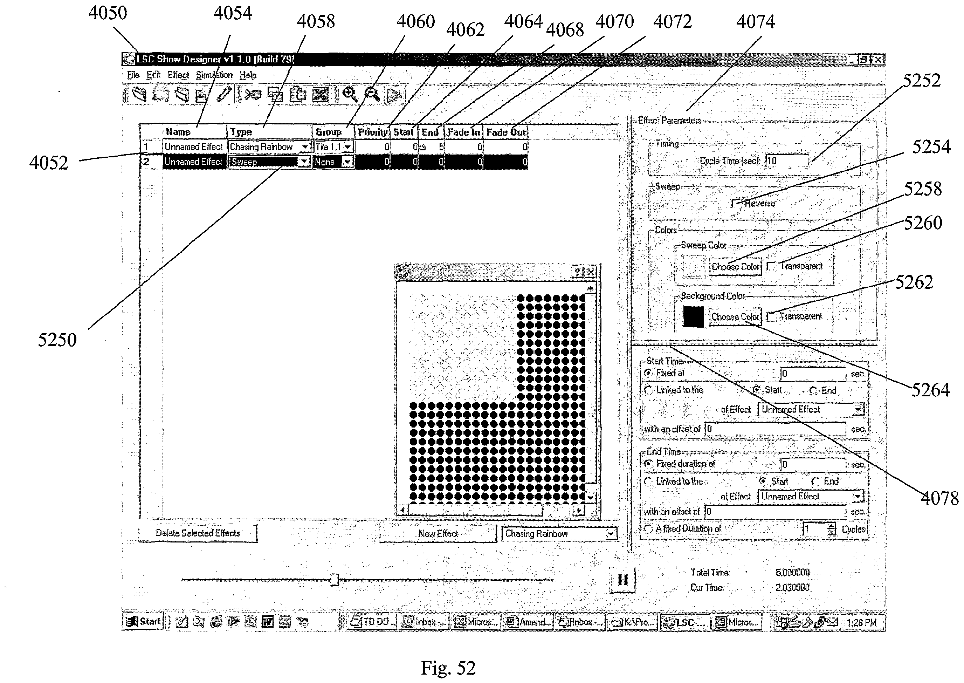

Referring to Fig. 52, the user can select a sweep effect 5152 using the pull-down menu of the type field 4058, in which case the parameters pane 4074 shows parameters that govern the attributes of a sweep effect 5150. The user can set the timing, using the cycle time field 5152. The user can select to have the sweep operate in a reversing fashion by selecting the button 5154. The user can select a sweep color using the color button 5258, which pulls up the palette 4650, and make the sweep color transparent using the button 5260. The user can select a background color using the button 5264, which also pulls up the palette 4650, and the user can make the background color transparent using the button 5262.

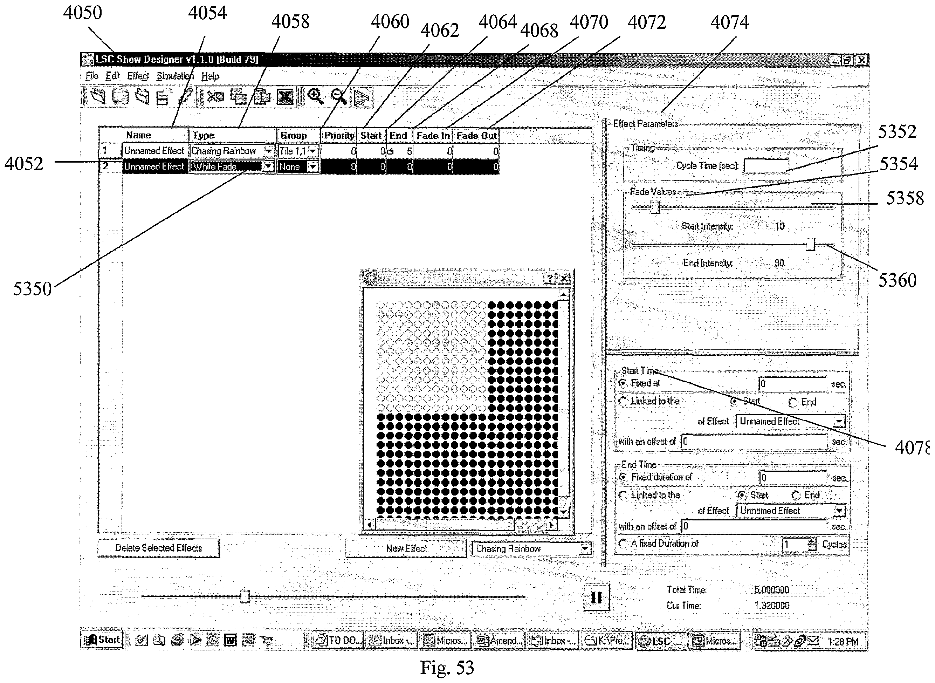

Referring to Fig. 53, the user can select a white fade effect 5350 using the pull-down menu of the type field 4058, in which case the parameters pane 4074 shows parameters that govern the attributes of a white face effect 5350. The user can enter the cycle time in the field 5352, and the user can determine fade values 5354 by using a slide bar 5358 to set the start intensity and a slide bar 5360 to set the end intensity.

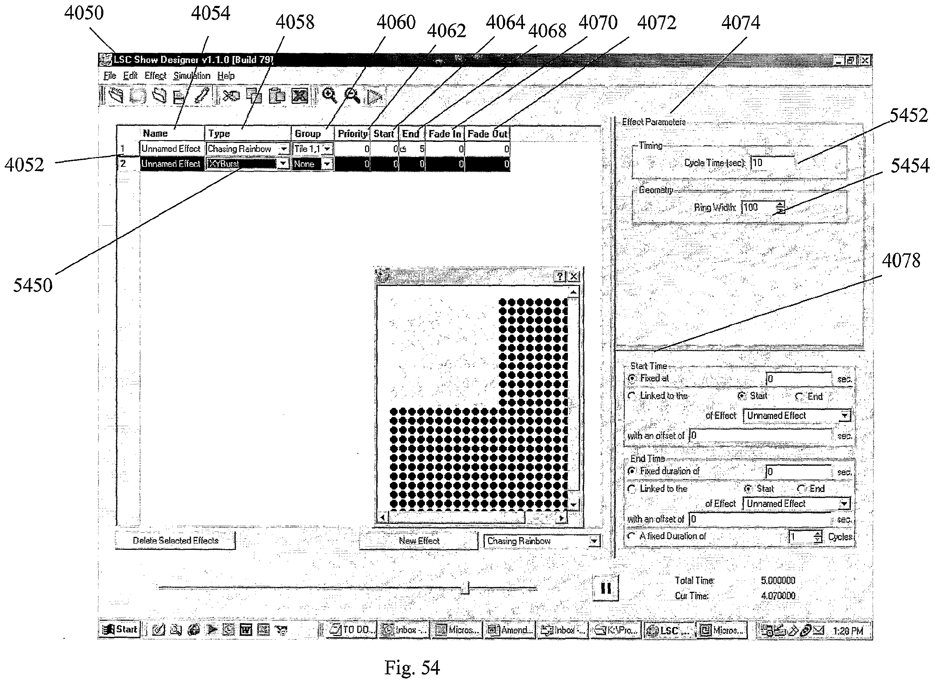

Referring to Fig. 54, the user can select an XY burst effect 5450 using the pull-down menu of the type field 4058, in which case the parameters pane 4074 shows parameters that govern the attributes of an XY burst effect 5450. The user can set the cycle time in a field 5452, and the user can set the ring width of the burst using a field 5454.

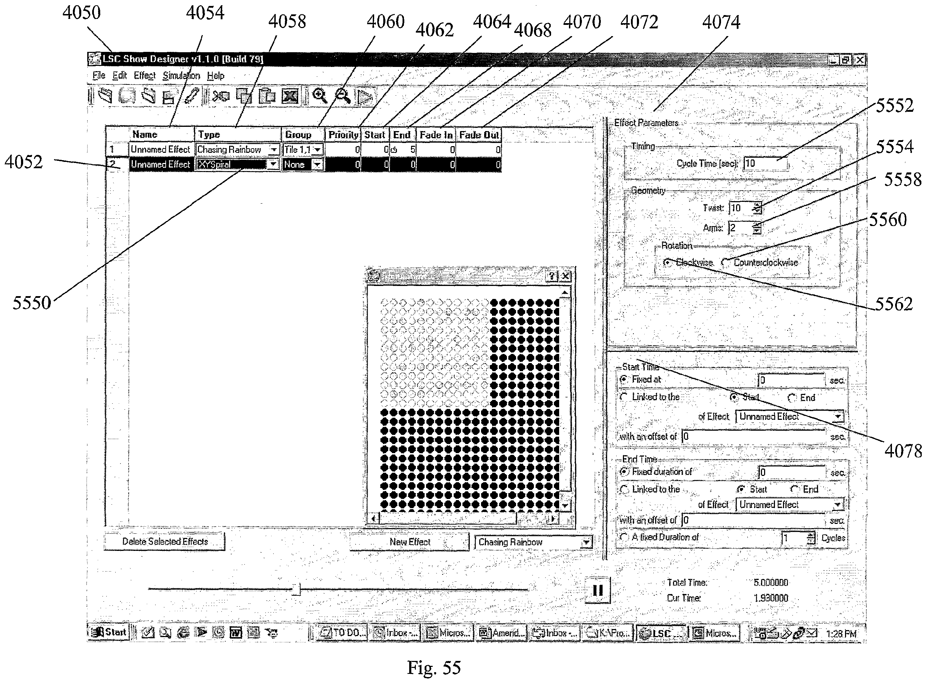

Referring to Fig. 55, the user can select an XY spiral effect 5550 using the pull-down menu of the type field 4058, in which case the parameters pane 4074 shows parameters that govern the attributes of an XY spiral effect 5550. The user can set the cycle time in a field 5552, and the user can set effect that relate to the geometry effect in the other fields of the parameters pane 4074. For example, the user can set a twist parameter in the field 5554, and the user can set the number of arms in the spiral in a field 5558. The user can also determine the direction of rotation of the spiral, by selecting a counterclockwise button 5560 or a clockwise button 5562.

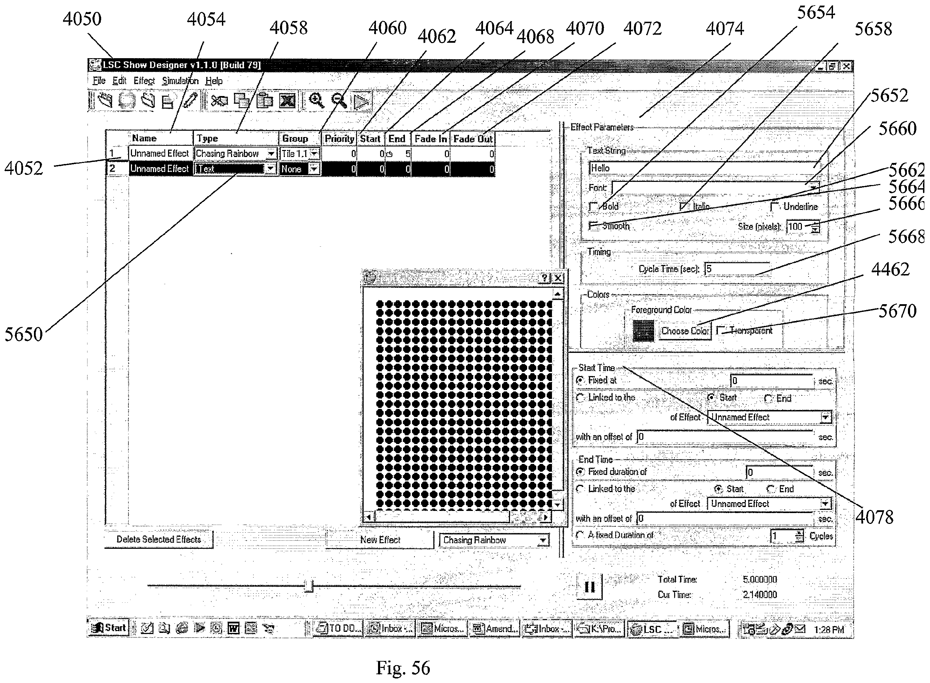

Referring to Fig. 56, the user can select a text effect 5650 using the pull-down menu of the type field 4058, in which case the parameters pane 4074 shows parameters that govern the attributes of a text effect 5650. The user can enter a text string in a field 5652, which will appear as a text item on the lighting units 100, such as an array, where the lighting units 100 in the array appears as pixels that build the text effect that appears in the field 5652. The attributes of the text string can be set, such as whether the text is bold in a field 5654, whether it is in italics in a field 5658, and whether it is underlined in a field 5662. A field 5660 allows the user to select a font for the text, such as "times new roman" or "courier." A button 5664 allows the user to smooth the text on the display. The user can select the size or pitch of the font using a field 5666. The user can set the cycle time for the text string using a field 5668. The user can choose the foreground color using a button 4462, pulling up the palette 4650 for color selection. The user can make the foreground color transparent using the button 5670. The text effect allows a user to conveniently display text, messages, brands, logos, information or other content over lighting systems, such as arrays, tile lights, or other lighting displays of any geometry that are mapped into the mapping facility 1658.

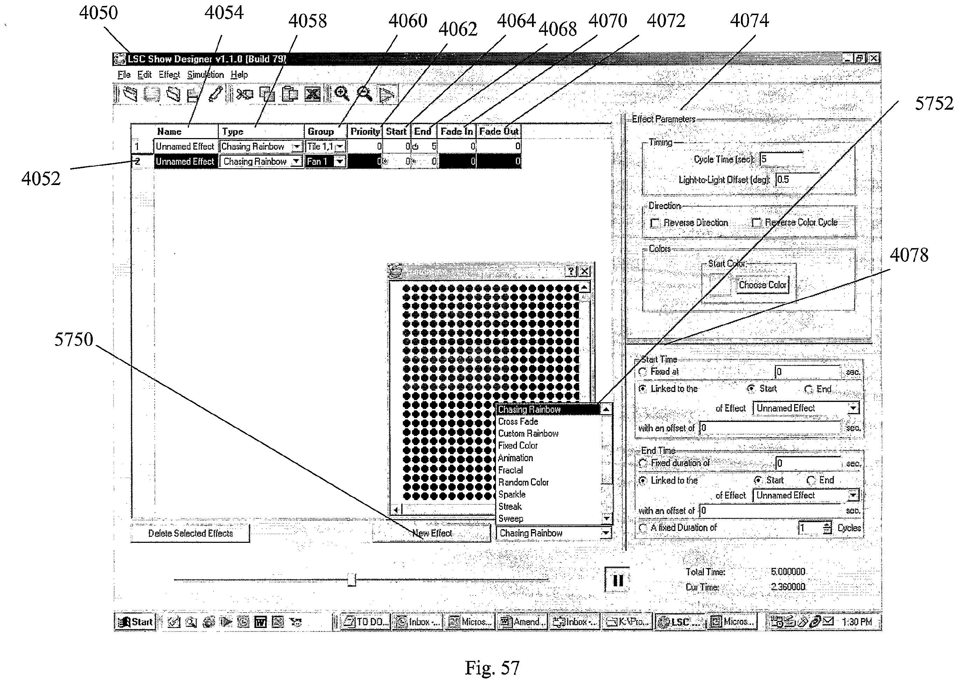

Referring to Fig. 57, a new effect button 5750 allows a user to add a new effect to the interface 4050. The selection of the button 5750 pulls up a menu 5752 listing types of effects. When the user highlights and clicks a particular type of effect, the parameters pane 4074 then shows parameters of the appropriate type for the new effect type that the user selected from the window 5752.

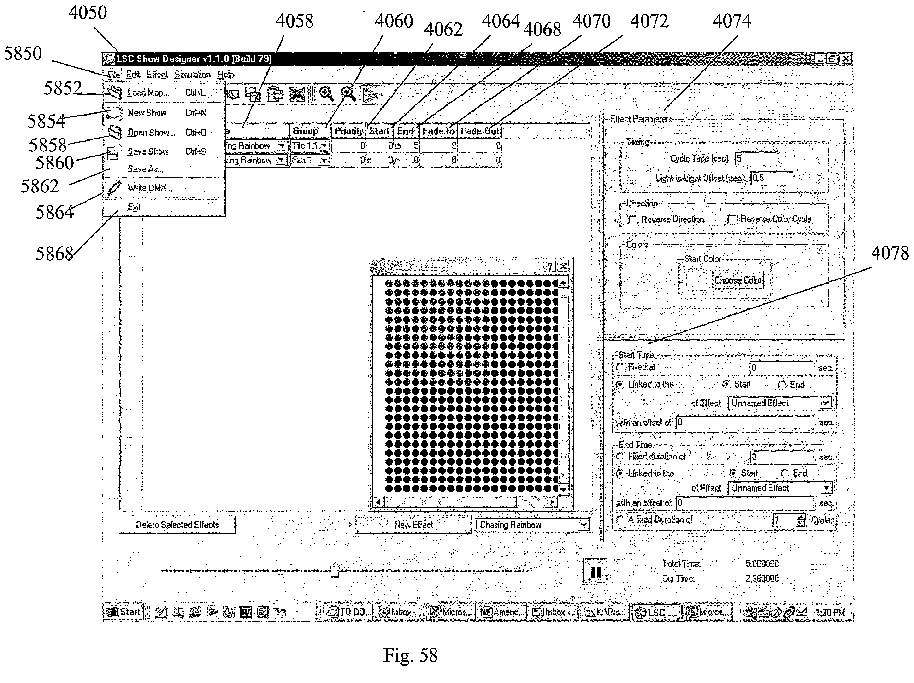

Referring to Fig. 58, the user may elect various file options in the interface 4050 by selecting the file menu 5850. From the file menu 5850, the user has an option 5852 to load a map, such as one created using the mapping facility 1658. The user can create a new show with the option 5854, in which case the user begins scripting new effects as described herein. The use can also open an existing show with the option 5858, in which case the user can browse files to find existing shows. The user can save a show with the option 5860, including edited versions of the show. The user can save an existing show in another location with the option 5862. The user also has the option to write DMX control instructions that correspond to the show 5864 that the user creates using the interface 4050.

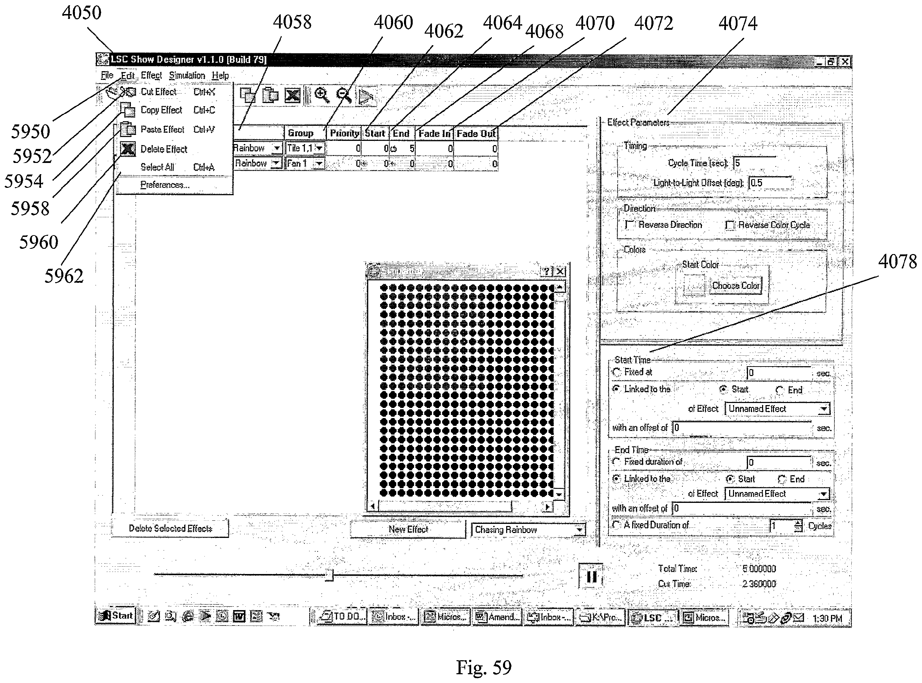

Referring to Fig. 59, a user can elect various editing options by selecting an edit menu 5950. The user can cut an effect with an option 5952. The user can copy an effect with the option 5954. The user can paste an effect with an option 5958. The user can delete an effect with the option 5960. The user can select all effects with an option 5962.

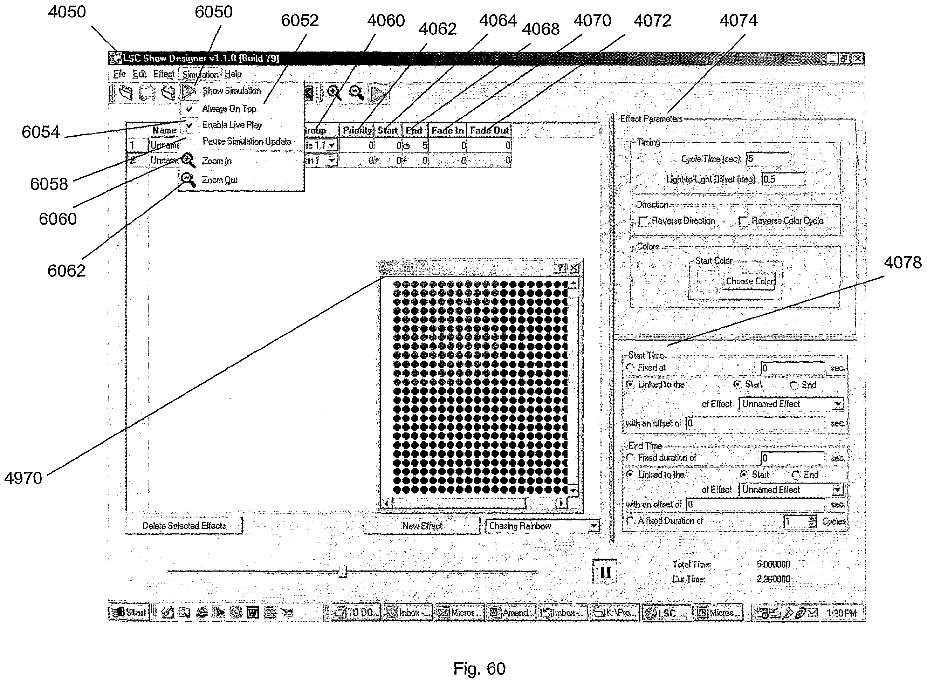

Referring to Fig. 60, a user can select a simulation menu 6050 and elect to show a simulation, in which case the simulation window 4970 appears. The user can keep the simulation always on top, using an option 6052. The user can enable live playing of effect using an option 6054. The user can pause updating of the simulation using an option 6058. The user can zoom in using an option 6060, and the user can zoom out using an option 6062.

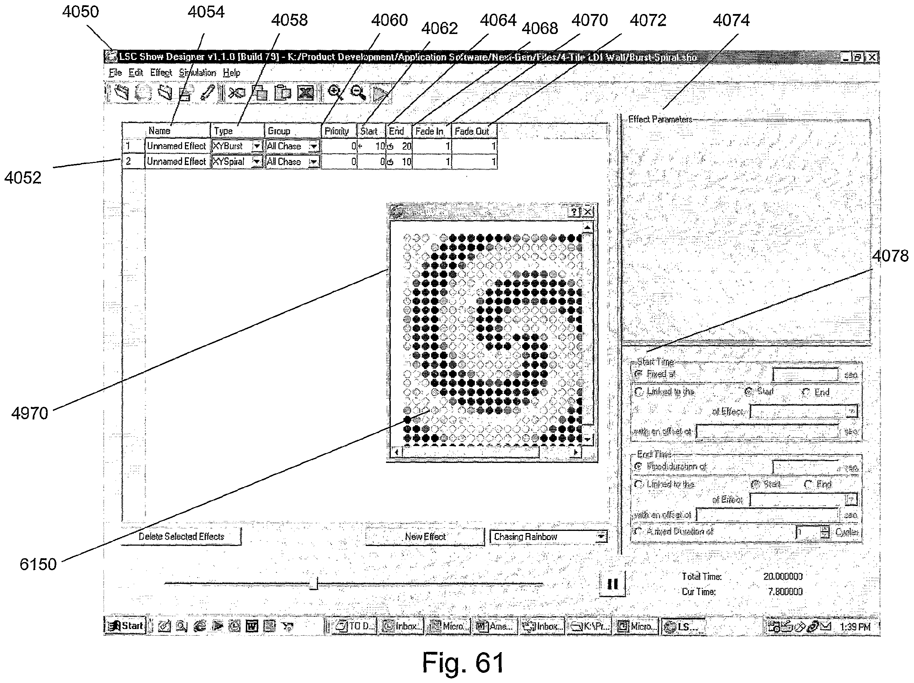

Fig. 61 shows a simulation window 4970 with an X burst effect 6150, using a chasing group.

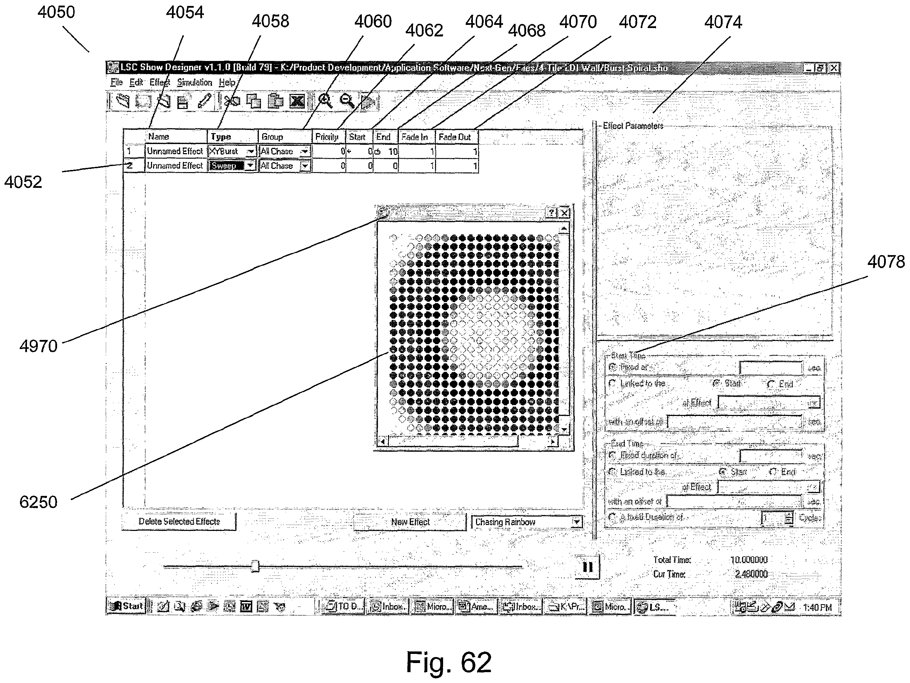

Fig. 62 shows a simulation window 4970 with a sweep effect 6250.

As seen in connection with the various embodiments of the user interface 4050 and related figures, methods and systems are included herein for providing a light system composer for allowing a user to author a lighting show using a graphical user interface. The light system composer includes an effect authoring system for allowing a user to generate a graphical representation of a lighting effect. In embodiments the user can set parameters for a plurality of predefined types of lighting effects, create user-defined effects, link effects to other effects, set timing parameters for effects, generate meta effects, and generate shows comprised of more than one meta effect, including shows that link meta effects.

In embodiments, a user may assign an effect to a group of light systems. Many effects can be generated, such as a color chasing rainbow, a cross fade effect, a custom rainbow, a fixed color effect, an animation effect, a fractal effect, a random color effect, a sparkle effect, a streak effect, an X burst effect, an XY spiral effect, and a sweep effect.

In embodiments an effect can be an animation effect. In embodiments the animation effect corresponds to an animation generated by an animation facility. In embodiments the effect is loaded from an animation file. The animation facility can be a flash facility, a multimedia facility, a graphics generator, or a three-dimensional animation facility.

In embodiments the lighting show composer facilitates the creation of meta effects that comprise a plurality of linked effects. In embodiments the lighting show composer generates an XML file containing a lighting show according to a document type definition for an XML parser for a light engine. In embodiments the lighting show composer includes stored effects that are designed to run on a predetermined configuration of lighting systems. In embodiments the user can apply a stored effect to a configuration of lighting systems. In embodiments the light system composer includes a graphical simulation of a lighting effect on a lighting configuration. In embodiments the simulation reflects a parameter set by a user for an effect. In embodiments the light show composer allows synchronization of effects between different groups of lighting systems that are grouped using the grouping facility. In embodiments the lighting show composer includes a wizard for adding a predetermined configuration of light systems to a group and for generating effects that are suitable for the predetermined configuration. In embodiments the configuration is a rectangular array, a string, or another predetermined configuration.

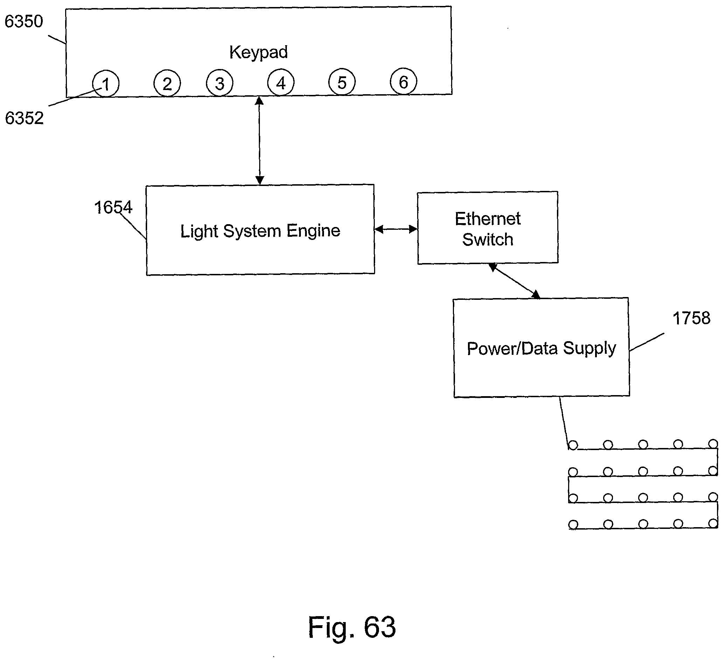

Referring to Fig. 63, once a show is downloaded to the light system engine 1654, the light system engine 1654 can execute one or more shows in response to a wide variety of user input. For example, a stored show can be triggered for a lighting unit 100 that is mapped to a particular PDS 1758 associated with a light system engine 1654. There can be a user interface for triggering shows downloaded on the light system engine 1654. For example, the user interface may be a keypad 6350, with one or more buttons 6352 for triggering shows. Each button 6352 might trigger a different show, or a given sequence of buttons might trigger a particular show, so that a simple push-button interface can trigger many different shows, depending on the sequence. In embodiments, the light system engine 1654 might be associated with a stage lighting system, so that a lighting operator can trigger pre-scripted lighting shows during a concert or other performance by pushing the button at a predetermined point in the performance.

In embodiments, other user interfaces can trigger shows stored on a light system engine 1654, such as a knob, a dial, a button, a touch screen, a serial keypad, a slide mechanism, a switch, a sliding switch, a switch/slide combination, a sensor, a decibel meter, an inclinometer, a thermometer, a anemometer, a barometer, or any other input capable of providing a signal to the light system engine 1654. In embodiments the user interface is the serial keypad 6350, wherein initiating a button on the keypad 6350 initiates a show in at least one zone of a lighting system governed by a light system engine connected to the keypad.

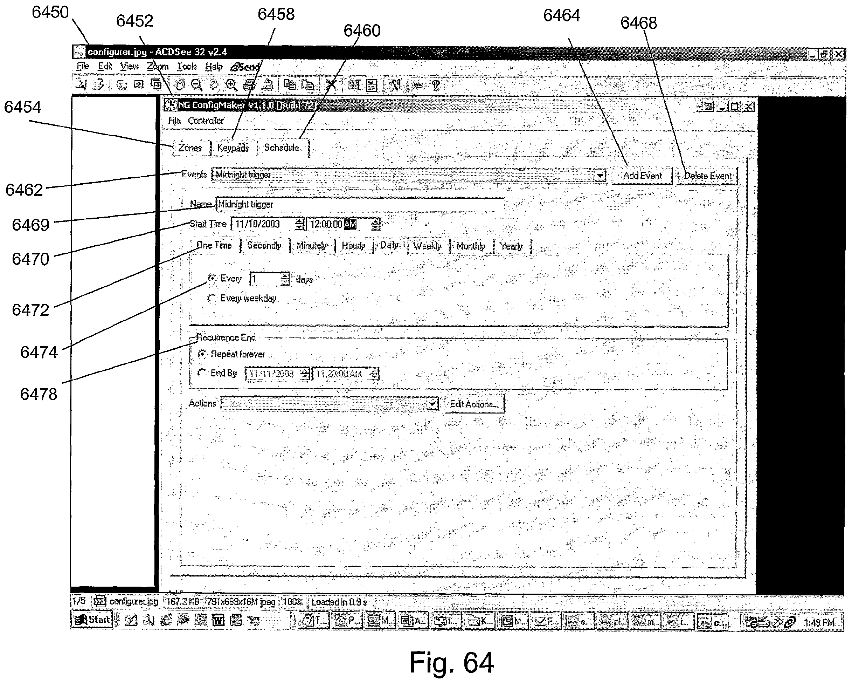

Referring to Fig. 64, a configuration interface 6450 can be provided for a lighting system, to enable the configuration of lighting systems to play lighting shows, such as those authored by the light system composer 1652 for the light system engine 1654. The configuration interface 6450, in embodiments, can be provided in connection with the light system composer 1652, in connection with the light system engine 1654, in connection with a user interface for the light system engine 1654, or in connection with a separate light system controller, such as for a concert or building lighting system. The configuration interface 6450 allows the user to handle different lighting zones 6454, to configure keypads 6458 for triggering light shows, and to configure events 6460 that are comprised of lighting shows and other effects. A user can configure an event 6462, including naming the event. The user can add events with a button 6464 and delete events with a button 6468. The user can name the event in the event name field 6469. The user can set a start time for the event with the field 6470. The user can set timing parameters, such as how frequently the event will repeat, with the tabs 6472, whether it is one time, each second, each minute, each hour, each day, each week, each month, or each year. With the button 6474 the user can have an event triggered after a selected number of days. The user can also set the time for recurrence to terminate with the parameters in the field 6478. Using the configuration interface 6450, a user can take shows that are generated by the light system composer 1652 and turn them into events that are scheduled to run on particular lighting systems in particular zones that are associated with a light system engine 1654 or other controller.

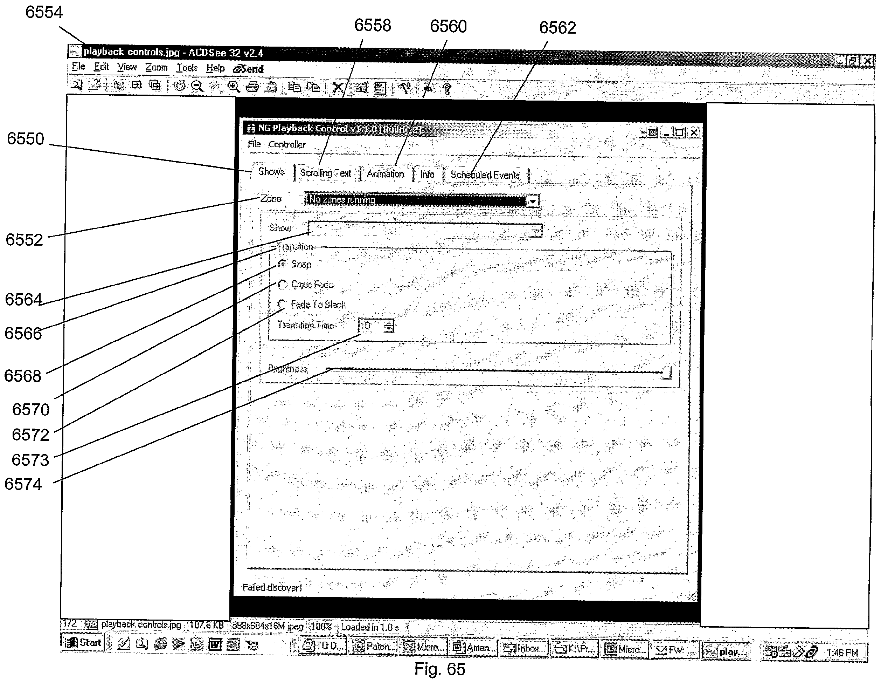

Referring to Fig. 65, a playback interface 6554 can be provided that facilitates the playback of lighting effects and shows created by the light system composer 1652, such as by the light system engine 1654 or by another controller. The playback interface 6554 allows a user to select shows with an option 6550, to select scrolling text files using an option 6558, to select animation shows or effects using an option 6560, to pull up information, or to select scheduled events using an option 6562. A user can apply playback to one or more selected zones with the field 6552. A user can select a show for playback using the field 6564. The user can set transition parameters for playback using the transition fields 6566. For example, the user can snap between shows using a snap button 6568, provide a cross-fade using a cross-fade button 6570, or fade to black between shows using a button 6572. A user can set transition timing using a field 6573 and set brightness using a bar 6574.

Many different forms of playback control can be provided. Since the light shows composed by the light show composer 1652 can be exported as XML files, any form of playback or download mechanism suitable for other markup language files can be used, analogous to playback facilities used for MP3 files and the like.

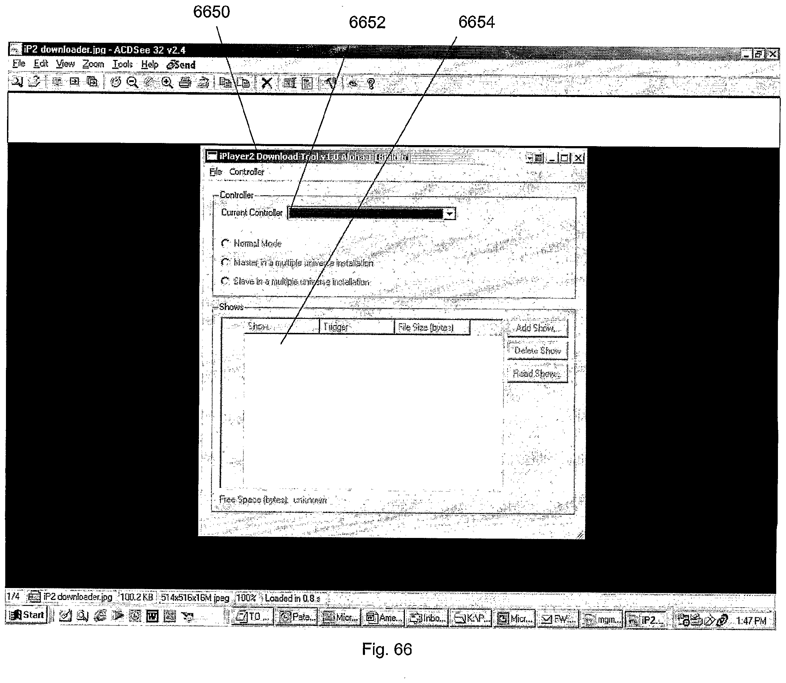

Referring to Fig. 66, a download tool can be provided, by which a show can be downloaded to a light system engine 1654. The user can select and enter the name or address of a particular controller in the field 6652. The user can add or delete shows in the field 6654 for downloading to a particular controller, similar to the downloading of MP3 files to an MP3 player.

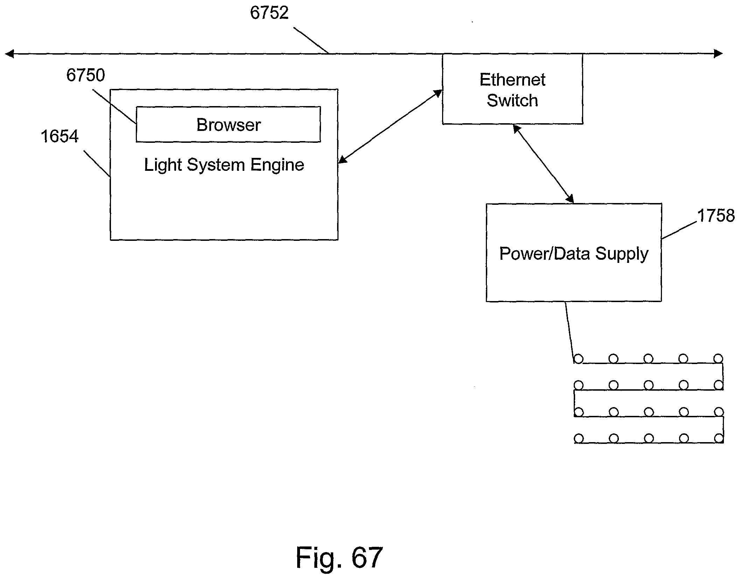

Referring to Fig. 67, one form of download of a light show is through a network 6752, such as the Internet. A light system engine 1654 can be supplied with a browser 6750 or similar facility for downloading a lighting show, such as one composed by the light system composer 1652. Because the lighting shows can be transmitted as XML files, it is convenient and fast to pass the files to the light system engine 1654 through a web facility. In embodiments, a user may use an XML parser to edit XML files after they are created by the light show composer 1652, such as to make last minute, on-site changes to a lighting show, such as for a concert or other event.

Certain embodiments of the present invention are directed to methods and systems for controlling a lighting network in response to an audio input. This can be accomplished in any of numerous ways, as the present invention is not limited to any particular implementation technique. In accordance with one illustrative embodiment, an audio input is digitally processed to analyze the audio input, and at least one aspect of a lighting system is controlled in response to a characteristic of the audio input. In another embodiment of the present invention, timing information is also considered so that the control signals sent to the lighting network for a particular audio input can vary over time, to avoid repetitiveness.

The assignee of the present application has previously developed other systems on which users can author lighting programs including one more lighting sequences, as well as devices for playing back a lighting program to control a lighting system. Many of the features of those systems can be incorporated in the present invention to enable the control of a lighting system in response to an audio input. Therefore, a description will initially be provided of authoring software and playback devices for lighting programs to control a lighting system, before turning to the specific aspects of the present invention relating to performing such control in response to an audio input.

In one embodiment of the invention, lighting effects can have priorities or cues attached to them which could allow a particular lighting unit to change effect on the receipt of a cue. This cue could be any type of cue, received externally or internally to the system, and includes, but is not limited to, a user-triggered cue such as a manual switch or bump button; a user-defined cue such as a certain keystroke combination or a timing key allowing a user to tap or pace for a certain effect; a cue generated by the system such as an internal clocking mechanism, an internal memory one, or a software based one; a mechanical cue generated from an analog or digital device attached to the system such as a clock, external light or motion sensor, music synchronization device, sound level detection device, or a manual device such as a switch; a cue received over a transmission medium such as an electrical wire or cable, RF signal or IR signal; a cue that relates to a characteristic of an audio signal; or a cue received from a lighting unit attached to the system. The priority can allow the system to choose a default priority effect that is the effect used by the lighting unit unless a particular cue is received, at which point the system instructs the use of a different effect. This change of effect could be temporary, occurring only while the cue occurs or defined for a specified period, could be permanent in that it does not allow for further receipt of other effects or cues, or could be priority based, waiting for a new cue to return to the original effect or select a new one. Alternatively, the system could select effects based on the state of a cue and the importance of a desired effect. For instance, if a sound sensor sensed sudden noise, it could trigger a high priority alarm lighting effect overriding all the effects otherwise present or awaiting execution. The priority could also be state dependent where a cue selects an alternative effect or is ignored depending on the current state of the system. Again, it should be appreciated that the embodiments of the present invention that employ priorities or queues for various lighting effects are not limited to the particular types of queues and priorities discussed above, as numerous other types are possible.

In event-driven embodiments, such as those using external inputs and those using outputs of other effects as inputs, a menu may be provided to define inputs and the consequences thereof. For example, a palette of predetermined inputs may be provided to a user. Each input, such as a specified transducer or the output of another effect, may be selected and placed within an authored lighting sequence as a trigger for a new effect, or as a trigger to a variation in an existing effect. Known inputs may include, for example, thermistors, clocks, keyboards, numeric keypads, Musical Instrument Digital Interface ("MIDI") inputs, DMX control signals, TTL or CMOS logical signals, signals from music players, such as the iPod from Apple Computer or MP3 players, other visual or audio signals, or any other protocol, standard, or other signaling or control technique, whether analog, digital, manual, or any other form. The palette may also include a custom input, represented as, for example, an icon in a palette, or an option in a dropdown menu. The custom input may allow a user to define the characteristics of an input signal (e.g., its voltage, current, duration, and/or form (i.e., sinusoid, pulse, step, modulation)) that will operate as a control or trigger in a sequence.

For instance, a theatrical lighting sequence may include programmed lighting sequences and special effects in the order in which they occur, but requiring input at specified points before the next sequence or portion thereof is executed. In this way, scene changes may take place not automatically as a function of timing alone, but at the cue of a director, producer, stage hand, or other participant. Similarly, effects which need to be timed with an action on the stage, such as brightening when an actor lights a candle or flips a switch, dramatic flashes of lightning, etc., can be indicated precisely by a director, producer, stage hand, or other participant--even an actor--thereby reducing the difficulty and risk of relying on preprogrammed timing alone.

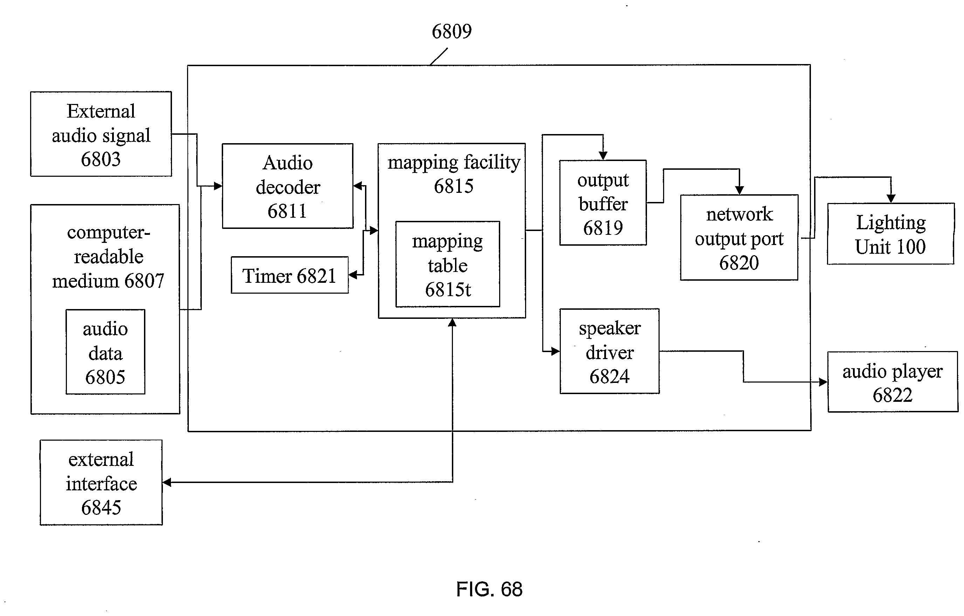

As mentioned above, one embodiment of the present invention is directed to a method and apparatus for controlling a lighting system in response to an audio input. Fig. 68 illustrates a computer system 6809 for implementing this embodiment of the present invention. However, it should be appreciated that this embodiment of the present invention is not limited to the implementation shown in Fig. 68, as numerous other implementations are possible.

The audio input can be provided in any of numerous ways. In the embodiment shown in Fig. 68, the audio input is provided as audio data 6805 provided on a computer-readable medium 6807 accessible to the computer system 6809. The computer-readable medium 6807 can take any of numerous forms, as the present invention is not limited to the use of any particular computer-readable medium. Examples of suitable computer-readable media include compact discs, floppy discs, hard discs, magnetic tapes, jump drives, flash memory devices, MP3 players, iPod devices from Apple Computer (and similar devices from other manufacturers) and volatile and non-volatile memory devices.

The audio data 6805 may be stored in any format suitable for the storage of digital data. One popular format is the MPEG Layer III data compression algorithm, which is often used for transmitting files over the Internet, and is widely known as MP3. The files stored in the MP3 format are typically processed by an MP3 decoder for playback. It should be appreciated that MP3 is merely one of numerous types of formats suitable for the storage of digital data, with other examples including MIDI, MOD, CDA, WMA, AS and WAV. It should be appreciated that these are merely examples of suitable formats, and that there are other standards and formats that can be used, including formats that do not adhere to any particular standard. In addition, while the MP3 format compresses the data, it should be appreciated that other formats may not. It should further be appreciated that the present invention is not limited to use with data stored in any particular format.

Rather than originating from a computer readable medium accessible to the computer system 6809, such as a microphone, stereo system, musical instrument or any other source capable of generating an audio signal 6803. The audio signal 6803 may be a digital signal, input to the computer system 6809 via a digital interface such as a USB, serial or parallel port or any other suitable interface, or may be an analog signal, input to the computer system 6809 via an audio jack or any other suitable interface. In accordance with one embodiment of the present invention, when the audio signal 6803 is provided in analog form, it can be converted (via an analog-to-digital converter not shown) within the computer system 6809, so that the audio signal can be processed digitally, which provides a number of advantages as discussed below. However, it should be appreciated that not all aspects of the present invention are limited in this respect, such that other embodiments of the present invention can process the audio signal in analog form.

In the embodiment shown in Fig. 68, the computer 6809 includes an audio decoder 6811 that accepts as an input either audio data 6805 which is stored on a computer readable medium 6807 coupled to the computer 6809, or an external audio signal 6803. The audio decoder 6811 generates as an output information reflective of one or more characteristics of the audio signal that is input to the audio decoder (i.e., either the audio signal defined by the audio data 6805 or the external audio signal 6803). The information characteristic of the audio input signal can take any of numerous forms, as the present invention is not limited to any particular technique for analyzing an audio signal. In accordance with one embodiment of the present invention, digital signal processing techniques are used to analyze the audio signal. It should be appreciated that there are many different types of computations that can be performed using digital signal processing techniques, and the present invention is not limited to any particular technique for analyzing the audio signal. Examples of information characteristic of an audio signal include information relating to a frequency content and an intensity of the audio signal. For example, the audio decoder 6811 may generate time domain information for the audio input signal, representing the intensity of the audio signal over time. The time domain information may be outputted as an array, wherein each array element is an integer representing the intensity of the audio signal for a given point in time, or in any other suitable format. Audio decoder 6811 may further generate frequency domain information by performing a Laplace transform (examples of which include a Fourier transform and a fast Fourier transform (FFT)) of time domain information for the audio signal. In one embodiment, a fast Fourier transform is performed, but the present invention is not limited in this respect and can employ any suitable technique for analysis in the frequency domain. The frequency domain information may be outputted as an array, wherein each array element is an integer representing the intensity of the audio signal for a given point in time. Audio decoder 6811 may further generate frequency domain information by performing a fast Fourier transform (FFT) of time domain information for the audio signal. The frequency domain information may be outputted as an array, wherein each array element can be an integer representing the amplitude of the signal for a given frequency band during a corresponding time frame. In accordance with one embodiment of the present invention, the frequency domain information is the FFT of the corresponding time domain information for a particular time frame. Again, it should be appreciated that the audio decoder 6811 is not limited to generating information characteristic of an audio signal in this manner, as other techniques for analyzing an audio signal and formats for presenting information relating thereto are possible.

It should be appreciated that many audio signal formats comprise two or more independently encoded channels, and that many audio file formats maintain the independence of the channel data. Examples of such multi-channel audio signals include stereo signals, AC-1 (Audio Coding-1), AC-2 and AC-3 (Dolby Digital). In accordance with one embodiment of the present invention, each channel for a single audio signal is analyzed separately by the audio decoder 6811, such that separate information is generated by analyzing the characteristics of the different channels. For example, using the example described above, wherein the information concerning an audio signal includes frequency domain information and time domain information, in one embodiment of the present invention the audio decoder 6811 generates separate frequency domain information and time domain information for each separate channel for a single input audio signal (e.g., audio data 6805 or external audio signal 6803).

The audio decoder 6811 can be implemented in any of numerous ways, as the present invention is not limited to any particular implementation technique. For example, the audio decoder 6811 can be implemented in dedicated hardware, or can be implemented in software executed on a processor (not shown) within the computer system 6809. When implemented in software, the audio decoder 6811 can be provided as an executable program written in any suitable computer programming language (e.g., Fortran, C, Java, C++, etc.). The software for implementing the audio decoder 6811 can be stored on any computer readable medium accessible to the computer system 6809, including the computer readable medium 6807 that stores the audio data 6805, or any other computer readable media. The software for implementing the audio decoder 6811 can, for example, can be any one of a number of commercially available software programs that perform the above-described functions. Examples of such commercially available software programs include MP3 players such as Winamp.TM., available from Nullsoft, Inc. Such commercially available MP3 players include application programming interfaces (APIs) that enable third party add-on plug-in software components to interface with the MP3 player, and to take advantage of the functionality provided thereby, including the above-described information that the audio decoder 6811 provides concerning the characteristics of an audio input. Thus, as discussed further below, one embodiment of the present invention is directed to software, for execution on a computer system 6809, that acts as a plug-in to a commercially available MP3 player to provide the mapping functions described below to control a lighting network in response to an input audio signal (e.g., stored audio data 6805 or an external audio signal 6803).

The mapping facility 6815 performs a function that is similar in many respects to the playback function performed by other components described above, such as the processing facilities and data storage facilities described elsewhere herein. In this respect, the mapping facility 6815 can be provided with a lighting program (e.g., stored in a mapping table 6815t) that can include one or more variables to receive input values at execution time. As shown in FIG. 68, the mapping facility 6815 can receive the output of the audio decoder 6811, so that information concerning the characteristics of the input audio signal can be provided to the mapping facility 6815 to provide the input values for variables in the lighting program executed by the mapping facility 6815.

In accordance with one illustrative embodiment of the present invention, the mapping facility 6815 can execute lighting programs that each includes only a single entry defining the manner in which control signals, to be passed to the lighting network, will be generated. Each such lighting program for the mapping facility 6815 may be programmed using a number of if/then statements or Boolean logic to interpret the numerous varied permutations of inputs from the audio decoder 6811 relating to characteristics of the audio input signal, and may generate control signals to the lighting network accordingly. Even with such static lighting programs, the control signals transmitted to the lighting network will result in a changing light show as the input audio signal is played, as the characteristics of the audio signal will change over time, resulting in changing inputs to the mapping facility 6815 and, consequently, changing control signals sent to the lighting network. Alternatively, the mapping table 6815t can include lighting programs that include a plurality of lighting sequences, in much the same manner as the embodiments described herein. In accordance with these embodiments of the present invention, the mapping facility 6815 will step through various lighting sequences as the input audio signal is played back, which can result in a more varied light show, as not only will the inputs from the audio decoder 6811 change as the input audio signal is played back, but the mapping function executed by the mapping facility 6815 can also be programmed to change over time.

It should be appreciated that the embodiment of the present invention shown in FIG. 68 can be programmed (i.e., in the mapping table 6815t) with lighting programs that can achieve any of the lighting effects discussed herein and in the documents incorporated by reference herein.

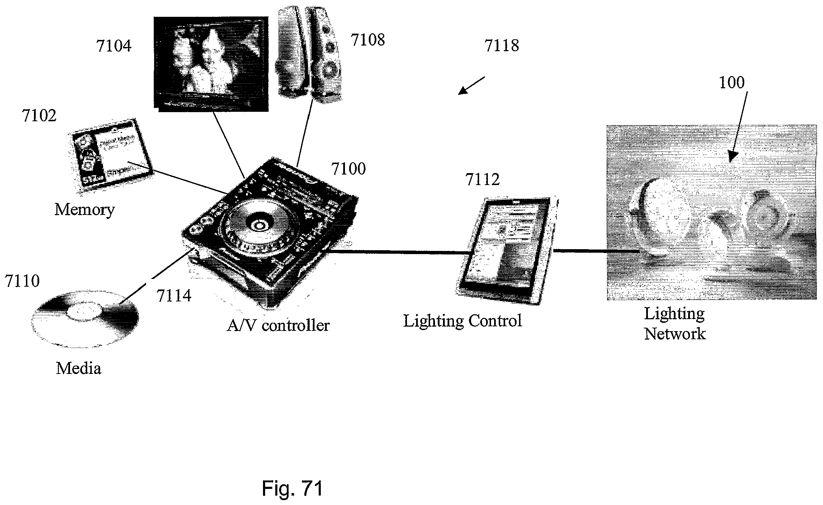

In the embodiment shown in FIG. 68, the computer system 6809 includes a timer 6821 that provides an input to the mapping facility 6815. The timer is an optional feature that need not be employed in all embodiments of the present invention. In accordance with one embodiment of the present invention, the timer 6821 is used to provide variation over time in the mapping function executed by the mapping facility 6815, to achieve resulting variation in the control signals sent to the lighting network during the playback of one or more audio input signals and thereby avoid redundancy in the lighting show produced in response to the audio signals. This changing of the mapping function can be accomplished in any of numerous ways. For example, for a particular entry in the mapping table 6815t, a variable can be provided that receives an input value from the timer 6821, such that the timer information can be taken into account in the mapping logic. Alternatively, a mapping facility 6815 can use inputs received from the timer 6821 to index into the mapping table 6815t to select a different lighting program, or a different line within a particular lighting program, to change the mapping function. As with the embodiment of the present invention discussed elsewhere herein, the timer 6821 can include date and time information, such that the mapping function can change as a result of the date and/or time, or can include local time information so that the mapping function can be changed as a result of the amount of time that a particular lighting show has been executed in response to audio signal inputs. In embodiments described below in connection with Fig. 71 and subsequent Figs., the mapping facility 6815 or mapping table 6815t may change in response to user input to an audio/visual controller 7100, such as part of an entertainment control system 7118.

In the embodiment of FIG. 68, an external interface 6845 is provided to receive additional user inputs that can be input to the mapping facility 6815 to impact the control signals sent to the lighting network. It should be appreciated that this is an optional feature, and need not be provided in every embodiment of the present invention. The external interface 6845 can be of any of numerous types, including all of those discussed elsewhere herein, and can control the lighting show produced by the mapping facility 6815 in any of the numerous ways discussed above. For example, one or more additional external inputs can provide an additional variable to the mapping function performed by the mapping facility 6815 to impact the control signals sent to the lighting network. In addition, the external input received by the external interface 6845 can also be used to change between lighting programs provided by the mapping table 6815t, change the sequence of commands executed thereby (e.g., by branching to an out-of-line location), or any of the other results described in connection with the embodiments discussed above.

In accordance with one illustrative embodiment of the present invention, the external interface 6845 is a graphical user interface (GUI) that can be displayed on a display of the computer system 6809 to facilitate a user in selecting a particular mapping function to be provided by the mapping table 6815t. This aspect of the present invention can be implemented in any of numerous ways, and is not limited to any particular implementation technique. As an example, a graphical user interface can be provided that lists various types of mapping functions that are considered to be particularly suitable for particular music types. Thus, prior to playing a particular song as the audio input signal, a user can select a mapping function (e.g., from the mapping table 6815t) that fits the style of music of the song to be played. In this manner, the user can customize the lighting show generated based upon the type of music to be played. Of course, it should be appreciated that this is simply one example of the manner in which a graphical user interface can be used, as numerous other implementations are possible.

In another embodiment of the present invention, the particular mapping function employed can be selected based upon information provided with the audio signal that provides an indication of the type of music included therein. Specifically, some pieces of music can include a tag or other information in the music, or associated therewith, that identifies the type of music. In accordance with one embodiment of the present invention, such information can be used to select a mapping function that fits the style of music in much the same manner as described above.

As should be appreciated from the foregoing, changes in the mapping performed by the mapping facility 6815 can be accomplished in numerous ways by including a variable in a single mapping function that can result in changes of the mapping output or by switching between different mapping functions in the mapping table 6815t. The changes in the mapping performed by the mapping facility 6815 can be accomplished in response to any of numerous stimuli, including input provided from an external input (e.g., from a user selecting a different mapping function), in response to timing information from the timer 6821, in response to some characteristic of an input audio signal (e.g., provided to the mapping facility 6815 by the audio decoder 6811), in response to a detection by the audio decoder that a particular audio signal (e.g., a song) has terminated and a new one is beginning, etc. Thus, there are numerous ways of continually updating the mapping performed by the mapping facility 6815. Of course, it should be appreciated that the present invention is not limited to using any or all of these techniques, as these are described herein merely for illustrative purposes.

In embodiments, a cue table or transient memory may be provided in connection with the computer system 6809. A cue table can be provided between the external interface 6845 and the mapping facility 6815, and/or between the audio decoder 6811 and the mapping facility 6815 to assist in analyzing the inputs provided by the external interface 6845 and/or the characteristics of the input audio signal provided by the audio decoder 6811. Of course, it should be appreciated that these features are optional, and need not be employed in all embodiments of the present invention.

As mentioned above, it should be appreciated that the manner in which the characteristics of the input audio signal are analyzed by the mapping facility 6815 to impact the control signals sent to the lighting network to control the lighting show can be performed in any of numerous ways, as the present invention is not limited to any particular type of analysis. For example, the mapping facility 6815 can look for particular activity levels within a particular frequency band, can detect a beat of the music based upon pulses within particular frequency bands or overall activity of the input signal, can look for an interaction between two or more different frequency bands, can analyze intensity levels characteristic of a volume at which the audio signal is being played, etc. One variable for consideration by the mapping facility 6815 is the sensitivity of the system at which differences in a characteristic of the audio signal will be recognized, resulting in a change in the control signals sent to the lighting network, and thereby a change in the lighting show. As indicated above, in one embodiment of the present invention, the external interface 6845 can also enable external inputs (e.g., inputs from a user) to change any of numerous variables within the mapping function to impact the lighting show produced.

It should be appreciated that the mapping facility 6815 can be implemented in any of numerous ways, including with dedicated hardware, or with software executed on a processor (not shown) within the computer system 6809. When implemented in software, the software can be stored on any computer readable medium accessible to the computer system 6809, including a computer readable medium 6807 that stores the audio data 6805. The software that implements the mapping facility 6815 can be implemented as an executable program written in any number of computer programming languages, such as those discussed above. The software can be implemented on a same processor that also executes software to implement the audio decoder 6811, or the computer system 6809 can be provided with separate processors to perform these functions.

As discussed above, one embodiment of the present invention is directed to the provision of a software plug-in that is compatible with commercially available MP3 players to enable the control of a lighting network in response to an audio signal being played by the MP3 player. Thus, one embodiment of the present invention is directed to a computer readable medium encoded with a program that, when executed by a processor on a computer system such as 6809, interacts with an audio decoder 6811 of an MP3 player executing on the computer system 6809, and implements the functions of the mapping facility 6815 to generate the control signals necessary to control a lighting network as described above. Of course, it should be understood that this is simply one illustrative embodiment of the present invention, as numerous other implementations are possible.

As with the other embodiments of the invention described above, the lighting units 100 of the lighting network may be any type of light source, including incandescent, LED, fluorescent, halogen, laser, etc. Each lighting unit may be associated with a predetermined assigned address as discussed above. The computer system 6809 may send control signals to the lighting network in any of numerous ways, as the present invention is not limited to any particular technique. In the embodiment shown in FIG. 68, the computer system 6809 includes an output buffer 6819 and a network output port 6820 to facilitate transmission of control signals from the mapping facility 6815 to the lighting network. The network output port 6820 can be any of numerous types of interfaces capable of communicating with the lighting network, including the numerous types of interfaces discussed herein and in the documents incorporated by reference herein. In the embodiments shown, the information outputted by the mapping facility 6815 is passed through an output buffer 6819 that is then coupled to the network output 6820. However, it should be appreciated that the present invention is not limited in this respect, as no output buffer need be used.

It should be appreciated that the information stored in the mapping table 6815t and output from the mapping facility 6815 may not be in a format capable of directly controlling a lighting network, such that in one embodiment of the present invention, a format conversion is performed. As discussed above, examples of formats for controlling a plurality of lighting units include data streams and data formats such as DMX, RS-485, RS-232, etc. Any format conversion can be performed by the mapping facility 6815, or a separate converter can be employed. The converter can be implemented in any of numerous ways, including in dedicated hardware or in software executing on a processor within the computer system 6809.

In the embodiment of the invention shown in FIG. 68, the computer system 6809 not only generates control signals to control a lighting network, but also drives one or more speakers to generate an audible sound from the audio input signal, with the audible sound being synchronized to the light show produced by the lighting network. For example, the computer system 6809 includes an audio player 6822 that reads audio data 6805 stored on the computer readable medium 6807, performs any processing necessary depending upon the format in which the audio data 6805 is stored (e.g., decompresses the data if stored in a compressed format) and passes the information to a speaker driver 6824 which can then drive one or more speakers to produce an audible sound. It should be appreciated that the one or more speakers described above may include any device for generating audible output including, for example, headphones and loudspeakers. The speaker driver 6824 can be implemented in any of numerous ways, as the present invention is not limited to any particular implementation technique. For example, the speaker drivers 6824 can be implemented on a sound card provided within the computer system 6809. The audio player 6822 also can be implemented in any of numerous ways. For example, commercially available MP3 players include software that, when executed on a processor within the computer system 6809, perform the functions of the audio player 6822.

It should be appreciated that the external audio signal 6803 can be provided in either digital form, or in analog form. When provided in analog form, the external audio signal may pass through an analog-digital converter (not shown) within the computer system 6809 prior to being passed to the audio decoder 6811. This conversion can be accomplished in any of numerous ways, as the present invention is not limited to any particular implementation. For example, the external audio signal can be provided to a sound card within the computer system 6809, which can perform the analog-to-digital conversion.

It should be appreciated that in the embodiment of the present invention wherein the same computer system 6809 that generates the control signals for the lighting network also drives speakers to generate an audible sound for the audio signal, some synchronization may be performed to ensure that the lighting show produced on the lighting network is synchronized with the audible playing of the audio signal. This can be accomplished within the computer system 6809 in any of numerous ways. For example, when the audio player 6822 and audio decoder 6811 are provided as part of a commercially available MP3 player, the MP3 player will automatically perform this synchronization.

As should be appreciated from the foregoing, in one embodiment of the present invention, the analyzing of an audio input signal is performed essentially simultaneously with a playing of the audio signal to generate an audible sound. However, the present invention is not limited in this respect, as in another embodiment of the present invention, the analysis of the audio input signal is performed prior to playing the audio signal to generate an audible sound. This can provide for some flexibility in performing the mapping of the audio input signal to control signals for the lighting network, as the mapping function can consider not only the characteristics of the audible signal that corresponds with the instant in time for the control signals being generated, but can also look ahead in the audio signal to anticipate changes that will occur, and thereby institute lighting effects in advance of a change in the audible playback of the audio signal. This can be performed in any of numerous ways. For example, the audio input signal can be analyzed prior to it being played to generate an audible output, and the results of that analysis (e.g., from the audio decoder 6811) can be stored in memory (e.g., in a transient memory) or in the mapping table 6815t, for future reference by the mapping facility 6815 when the audio signal is audibly played. Thus, the function performed by the mapping facility 6815 can look not only to characteristics of the music that correspond to the point in time with the audio signal being played, but can also look ahead (or alternatively behind) in the audio signal to anticipate changes therein. Alternatively, rather than storing the outputs that are characteristic of the audio signal, another option is to perform the mapping at the time when the audio input signal is first analyzed, and store the entire control signal sequence in memory (e.g., in the mapping table 6815t). Thereafter, when the audio signal is audibly played, the mapping facility 6815 need not do any analysis in real time, but rather, can simply read out the previously defined control signals, which for example can be stored at a particular sample rate to then be played back when the audio signal is played to generate an audible signal.

While the embodiment of the present invention directed to performing an analysis of the audio signal prior to playing it back provides the advantages described above, it should be appreciated that this is not a requirement of all embodiments of the present invention.

It should be appreciated that the lighting programs (e.g., entries in the mapping table 6815t) for the embodiment shown in FIG. 68 can be authored using an authoring system in much the same manner as described above in connection with the generation of lighting programs for the embodiments described herein and in the documents incorporated herein by reference. Thus, for example, a graphical user interface can be provided to assist a user in generating the lighting programs. As with the embodiments of the invention described above, the authoring can be performed on the same computer system 6809 that is used to playback the lighting program and generate the control signals to the lighting network, or the lighting programs can be authored on a different system, and then transferred, via a computer readable medium, to the mapping table 6815t in the computer system 6809.

In accordance with an alternate embodiment of the invention, Applicants have appreciated that the device used to control a set of lighting units 100 need not have all of the functionality and capability of a computer system, for example it need not include a video monitor, keyboard, or other robust user interface. Furthermore, Applicants have appreciated that in many instances, it is desirable to provide a relatively small and inexpensive device to perform the lighting control function in response to an audio input, so that the device can be portable.

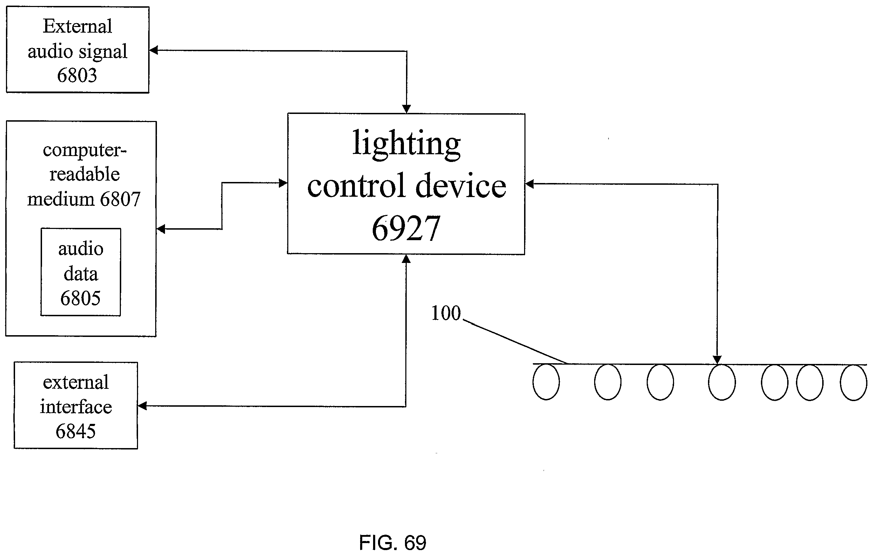

In view of the foregoing, one embodiment of the present invention, is directed to a lighting control device that includes all of the functionality described above in connection with FIG. 68, but is implemented on a computer system that is dedicated to performing the functions described above, and is not a general purpose computer. An illustration of this embodiment of the present invention is provided in FIG. 69, which discloses a lighting control device 6927 for controlling lighting units 100 of a lighting network in response to audio input data or an input audio signal. The lighting control device performs all of the functions of the embodiment illustrated in FIG. 68, but is not implemented on a general purpose computer. Rather, the lighting control device is a device dedicated to performing only those functions described above, and need not include some of the functionality found in a general purpose computer, such as a full size display, a full alphanumeric keyboard, an operating system that enables processing of multiple applications simultaneously, etc. The lighting control device can take any of numerous forms, as the present invention is not limited to any particular implementation.

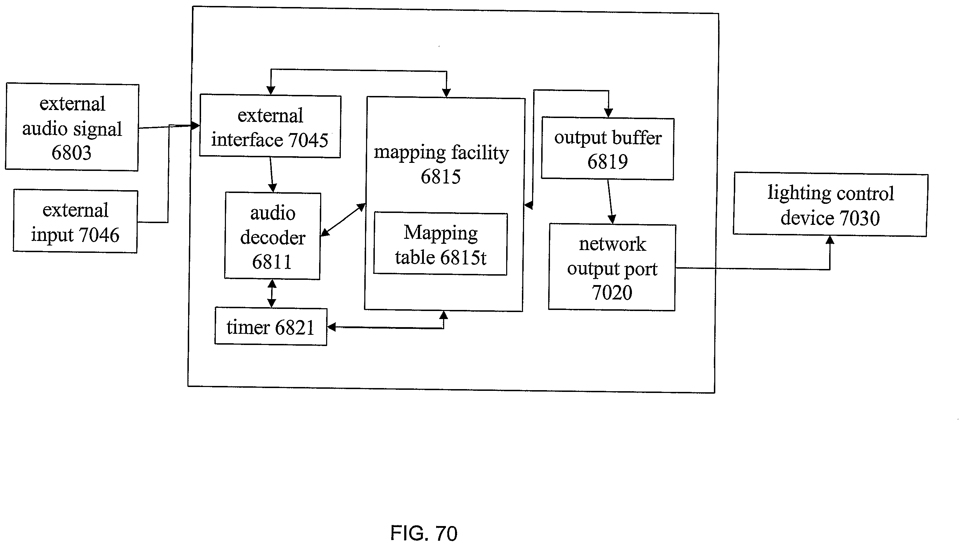

An even further simplified embodiment of the present invention is illustrated in FIG. 70, which illustrates a lighting control device 7030 that includes only a subset of the functionality provided in the embodiment of the invention shown in FIG. 68. Specifically, the embodiment of the invention shown in FIG. 70 does not include an audio player for generating an audio signal internally, and is not adapted to be coupled to a computer readable medium including audio data. Rather, the lighting control device 7030 is adapted to receive an external audio signal 6803 from any suitable source, and to then process the audio signal, in much the same manner as the embodiment of FIG. 68, to generate control signals for a lighting network to produce a lighting show based on the external audio input. Thus, the lighting control device 7030 includes an audio decoder 6811 and a mapping facility 6815 (with its associated table 6815t) that each performs the functions described above in terms of analyzing an external audio input signal and generating commands for a lighting network based thereon, and further includes a network output port 7020 compatible with the lighting network. The lighting control device 7030 may optionally include a timer 6821, output buffer 6819 and/or a cue table (not shown) that can perform the same functions described above in connection with the embodiment of FIG. 68.

In the embodiment shown in FIG. 70, the lighting control device 7030 includes an external interface 7045 for receiving an external input 7046, which can take any of numerous forms as discussed above in connection with the embodiment of FIG. 68. In accordance with one embodiment of the present invention, the external interface 7045 is adapted to be a simple interface that is relatively inexpensive and compact. The external interface can be used to perform any of numerous functions, such as to switch between lighting programs (e.g., entries in the mapping table 6815t), to vary lighting effects or parameters therefore, or any of the other functions discussed elsewhere herein and in the documents incorporated herein by reference. The external interface can take any of numerous forms, including switches, buttons, jog dials, dials, touch screens, voice recognition systems, sliders, a console, a keyboard, a speech recognition system or any other device, such as a sensor (e.g., responsive to light, motion or temperature) whereby a command or signal can be provided to the lighting control system. An external device may be coupled to the external interface 7045 via any suitable technique, including a direct wire connection, or via RF or some other type of wireless connection.

It should be appreciated that the lighting control device 7030 may receive the external audio signal using any suitable interface, such as the serial port, USB port, parallel port, IR receiver, a standard stereo audio jack, or any other suitable interface.

The components on the lighting control device 7030 can be powered in any of numerous ways, including through the provision of a power facility as described herein and in the documents incorporated herein by reference.

The lighting control device 7030 may begin processing of the external audio signal 6803 and/or initiate the sending of control signals to the lighting network to initiate a lighting show either in response to a signal received at the external input 7046, or immediately upon receipt of the external audio signal 6803. Alternatively, the lighting control device 7030 may initiate a lighting show at a specified time, or upon any suitable condition. The lighting control device 7030 may continue to send control information to the lighting network until it no longer receives any external audio signal 6803, until a signal is received at the external input 7046, until the occurrence of a specified condition, until a particular point in time, or any other suitable event. In one embodiment of the present invention, the lighting control device 7030 includes a storage device to store the mapping table 6815t. The storage device can be a memory unit, database, or other suitable module (e.g., a removable Flash memory) for storing one or more lighting programs in the mapping table 6815t. In accordance with one embodiment of the present invention, the storage device is formed as a non-volatile memory device, such that once information is stored thereon, the information is maintained, even when no power is provided to the lighting control device 7030.

It should be appreciated that any single component or collection of multiple components of the above-described embodiments that perform the functions described above can be generically considered as one or more controllers that control the above-discussed functions. The one or more controllers can be implemented in numerous ways, such as with dedicated hardware, or using a processor that is programmed to perform the functions recited above. In this respect, it should be appreciated that one implementation of the present invention comprises at least one computer readable medium (e.g., a computer memory, a floppy disk, a compact disk, a tape, etc.) encoded with a computer program that, when executed on a processor, performs the above-discussed functions of the present invention. The computer readable medium can be transportable such that the program stored thereon can be loaded onto any device having a processor to implement the aspects of the present invention discussed above. In addition, it should be appreciated that the reference to a computer program that, when executed, performs the above-discussed functions is not limited to an application program, but rather is used herein in the generic sense to reference any type of computer code (e.g., software or microcode) that can be employed to program a processor to implement the above-discussed aspects of the present invention.

In embodiments of the present disclosure, lighting technology can be coupled with media. Media forms include, without limitation, audio, music, movies, television, video, video games and all forms of text display, audio sources, and visual sources. Media is a means to communicate information, tell a story, or provide a pleasing effect or experience. Most media has migrated towards a digital form, enabling new forms of interaction and control.

Referring to Fig. 71, in embodiments of the invention, media can also be created and played in real time, so that a user experiences media as it is created and/or modified. For example, disk jockeys (DJs) play music for events or broadcast. DJs, among other things, create sequences of musical and video selections to provide entertainment at a variety of venues and events. Good DJs create themes around an event or show and create a mood; they build a 'soundtrack' for an event. In addition to their own patter, DJs became stars in their own right because their creative expression provides more than simple playback of existing compositions. They interact directly with media and providing on-the-fly editing capability. This includes, but is not limited to, overlapping songs to ensure consistent beat across tunes and creating effects such as scratching, slowing and accelerating music, such as by manual override of turntable rotation to create sounds. Djs also frequently create repetition within a song by controlling turntable motion. Controls used by DJs include speed, pitch, cueing, sequencing and much more.

Newer technology, such as CD players with interactive controls, can be *directed,* on the fly, much like a jazz performance where improvisation plays as much a role as the underlying composition. Very often the DJ is editing and selecting in real-time as the music and audio unfolds. There are a variety of products on the market that cater to the DJ for control of recorded media,, including turntables for LPs and CDs.

Control capabilities now extend to real-time control of videos through similar control systems and interfaces. For example, there now exists a digital audio and video DVD turntable that enables the live control of audio and video from a DVD or other media to create effects and experiences that are also directed but provide capability in video realm. Projected and displayed images on monitors, displays, screens and other forms of image display can be controlled directly by manipulating the playback of imagery and video. An entertainment control system 7118 can include various control components, such as an audio/visual controller 7100, described in more detail below.

One aspect of the invention includes a coupling between one or more A/V devices and one or more lighting devices to be interactively controlled and directed by a person. Another aspect of the invention involves the generation and control of lighting effects.

In the entertainment control system 7118 of the embodiment in Figure 71, a VJ console, 7100, is connected to media player or display devices such as a television set or video display, 7104, and a sound system, 7108, comprising one or more speakers. The A/V controller 7100, or a computer-based program allows direct interaction with the audio and video information to allow the user to control the output to provide fast looping, hot cues, store cue points and other effects (see Appendix). In this invention, the audio/video controller 7100, or other audio or audio/video device can be connected via an interface connecting the audio/visual controller 7100 and the lighting control interface 7112, that provides information about the audio and video signal, including but not limited to, high level information such as beats-per-minute (bpm), tempo, pitch, spectral information (e.g. Fourier transform, or equalizer-style histogram), and other audio input such as described elsewhere in this disclosure. This type information may be delivered to the lighting control interface 7112, which may be a separate device or may be integrated with the audio/visual controller 7100 into the same unit.

As shown in Figure 71, additional inputs to the A/V controller 7100 can be solid-state memory, 7102, in a variety of recorded media, 7110, on CD, VCD, DVD or other standard media formats or over a network. The information from the A/V controller 7100, to the lighting control interface 7112, can be in the form of raw data or higher level constructs such as effects of shows which are meta-level sequences of lighting information.

In an embodiment the functions of many of the elements of Figure 71, including the audio/video controller 7100, and the lighting control interface 7112 can be incorporated into the same device. This integrated unit could provide some or all of the functionality of the two independent units but in one package or setup.

In an embodiment, the lighting deck is a stand-alone device whose size, shape and interface are similar to that of the audio/visual controller 7100 to facilitate use, setup and transportation. In addition to a specialized device, a personal computer with software may provide much of the same functionality for the user. The interface can take the form of a tablet PC, a PDA, a personal computer, a laptop, or housing with a display and switches. In embodiments the lighting control interface 7112 may include a mapping facility, such as described in connection with Figs. 68 through 70. Thus, in another embodiment these units could be centrally controlled by a computer with various interface devices replicating the capability of the mechanics of the interfaces shown in Figure 71.

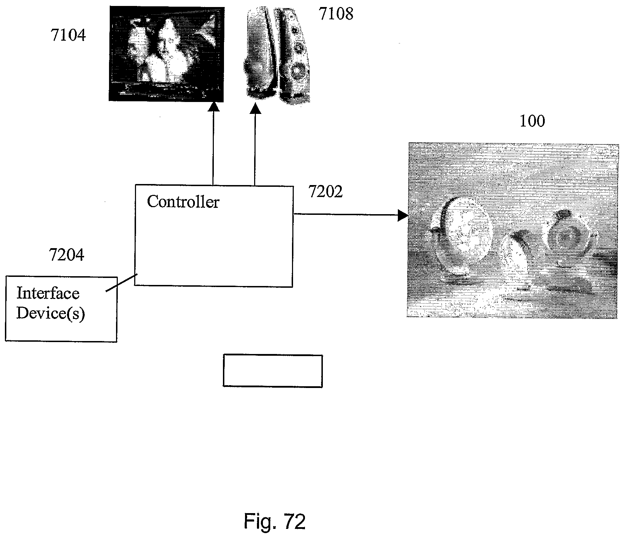

Figure 72 illustrates a computer controller 7202 plus the interface device(s), 7204, providing the equivalent functionality of the audio/visual controller 7100, and lighting control interface 7112. The computer provides memory, sounds and video output capability as well as the ability to read a variety of media formats including but not limited to CD, DVD, USB peripherals, hard drive and other networked devices, as well as other media formats described elsewhere herein and by those of skill in the art. The setup depicted in Fig. 72 allows more than one person the capability for interacting and improvisation in real-time as in a live performance. The audio interaction could be through one or more persons and the lighting interaction could be through one or more persons.

In an embodiment the memory 7102 can also be used for the recording of a performance. The interactive inputs can be recorded in real-time as well, so that a particular performance can be stored and replayed. These media shows can be self-contained shows that are connected to a light, sound and video system for playback. In another embodiment, media shows can be sold, traded or given away to consumers to be part of their music, audio and video collection and played back on consumers' audio/visual systems to create a concert or club venue in the home.

In an embodiment, the lighting control interface 7112 allows for the storage and downloading of new functions and new parameter settings. A modular architecture allows for user modification and implementation of such effects or downloading via interfaces such as USB or Firewire over standard media (disk, flash memory etc), network connections or other wireless capability (e.g. IR, 802.11 etc).

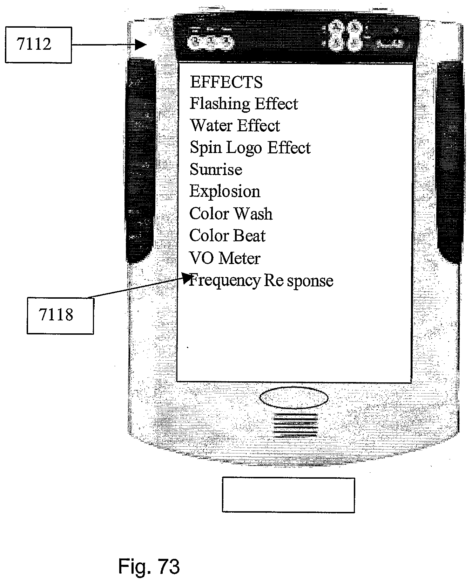

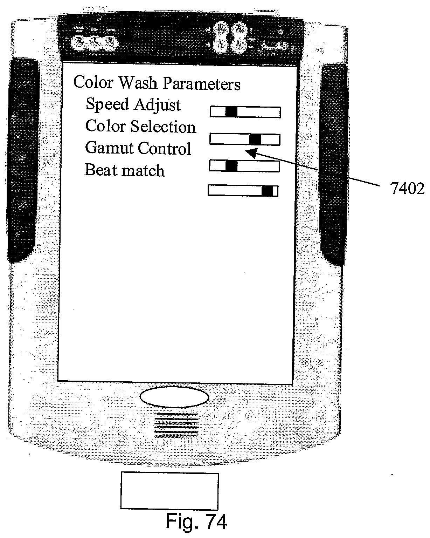

Referring to Fig. 73, a tablet or display interface can serve as the lighting control interface 7112 and can present a variety of options either in textual or graphical form. The advantage of graphical form is that active live icons or a list 7118 can represent in shorthand the type of effect through text or an icon representing the effect in image form. In the iconic representation, these images are presented in a graphical user interface environment can be active; dynamic thumbnails. In another embodiment, each of the many effects or shows can have parameters or influence variables associated with it that allow that user to modify and change and manipulate the show or effect in real-time as shown in Figure 74.

In an embodiment, an effect or a sequence of effects is selected, and various parameters of the effect can be further selected to provide control of color(s) and tempo within the effect 7402. For example, as shown in Fig. 74, the Color Wash function has been selected and several parameters can be activated and changed according to user input. The speed of an effect can be changed by moving the graphical slider from left to right, or the base color can be changed by adjusting its corresponding slider. The control of these parameters *influences* the underlying effect, so the user is able to rely on a general effect tailored to particular circumstances, venues, music or video content. At the same time, the user can provide customization and avoid repetition of identical effects. Influences may include effects modulated by beat, amplitude or frequency, among others as described elsewhere herein and in the documents incorporated herein by reference.

Other audio analysis tools can be incorporated to provide many types of information as shown in Fig. 73. Non-limiting examples include: bpm (beats per minute), spectral information (e.g. Fourier transform), amplitude, frequency content etc.

In one embodiment, the information can be at a higher level. This takes the form of meta information such as genre, type or general characteristics such as 'rock music', album name, playlist name, Gracenotes information, artist name or mid-level information such as beats, effects setting, etc or provides detailed spectral information. Additionally in this embodiment a light track that is associated with a selection can be streamed directly out as well. In an embodiment, the light track can be at a fixture level, or preferably, as a sequence of effects that is independent of installation geometry.

The A/V controller 7100, can be one or more of the following: a specialized device for audio/video control, such as the Pioneer DVJ-X1, a computer, a controller, an interface device, and/or a player, such as a DVD or CD player with controls beyond simple playback. In an embodiment, audio/visual controller 7100 could have recording capability to record operator input sequences to provide 'live' playback at a later time. Such sequences would be stored in memory, 7102, or writable media such as recordable DVDs or CD-RW, CDR etc. This capability allows for live and interactive control of video playback to provide active and changing sequences during a performance. In an embodiment, the unit can also incorporate built-in effects for audio and video effects such as stuttering playback, modulating the output, false coloring, warping of the image and more.

In certain embodiments, the lighting control interface 7112 may be a conventional lighting console, such as available from one of several manufacturers, such as High End Systems, ETC, Strand, and others. The input to such a lighting console would allow a high speed connection for the purpose of controlling lighting effects that are directed by the user of the audio/visual controller 7100. In general, the current generation of such lighting controllers is cue-based and would not easily provide for high bandwidth input for the purposes of controlling a lighting network, but such consoles could have improved input and control features to provide such capabilities.

In an embodiment, the controller, 7302, as shown in this invention can be a computer-based controller or a embedded system that is stand-alone. It can be a laptop, tablet PC, PDA, or other form of computer with a user interface.

In an embodiment, in addition to the music input, video parameters can be used to effect lighting control as well in real-time. Colors, frame or clip rate (not just standard frame or interlace rate but edited clip rate) or spatial frequencies, movements, change, etc are then used to modulate lighting. Features would include hot cues, hyper jog, time-stretching and so on. Video effects include looping ability, scratch re-wind, pitch-shift etc.

In other embodiments, lighting can be controlled and drive the audio and video portions of a performance in response to the lighting control.

The graphical representation, shown in the figures, does not limit user interface means and possibilities for user control. Different graphical elements and user interaction can be used to create a wide variety of interfaces including mechanical interfaces or graphical interfaces associated with a particular effect or set of effects.

Recordable media has often taken the form of rotating physical media such as records, LP records, CDs and back to wax and metal cylinders. The interface of controlling such rotating media makes it attractive to control for DJing purposes, and it is likely that even when moving media becomes obsolete in favor of solid-state solutions (e.g. digital memory) that the rotating or other mechanical or motion interface will remain a preferable one. Such interfaces to media can take the form of trackballs, mouse, levers, switches, joysticks, gestural interfaces, haptic interfaces and other forms of motion-to-control interfaces.

The user interface to the lighting control interface 7112, can be a touch screen, a series of dials, turntables, buttons, knobs, levers, trackballs, switches, and haptic interfaces, gestural inputs using proximity or motion sensors or imaging devices. Physiological inputs may include heartbeats, body movement and other motor skill-based movements.

In another embodiment, inputs from sensors can be used to effect changes in the lighting and audio and video output. In such an embodiment, sensors provide information on movement through pressure, strain, and proximity sensors or imaging sensors as people move and dance.

In embodimenta, a wide variety of effects and effect parameters can be used. They can be pre-determined - as in played back verbatim, algorithmic in nature, have a variety of different interacting parameters. Effect examples include the effects described elsewhere herein and in the documents incorporated herein by reference, including, but are not limited to the following:
- Chasing Rainbow Effect - a rainbow of color that moves across a room. Parameters can include speed of effect, width of effect, color amplitudes and saturation.
- Water Effect - swirling and movement of blues and white to give the effect of water color and movement. Parameters may include rate of change, color intensities, color change over time, scale of the effect (how it is displayed across a space - related to numbers of lights and positions and pitch of fixtures.)
- Logo Effect - Take an image and display it in lights - parameters may include movement, stretch and distortion, keystone adjustments, rotations, speeds, accelerations etc.
- Sunrise - a slower effect showing the passage of time and color of sunlight and sunrise and sunset. Parameters may include
- Explosion - Propagation of color corresponding to audio input
- Spatial Strobes - movement of color and light. Parameters may include rotation (helicopter noise), heavy beats that propagate through a space via light and color.
- Color Wash - Variance in color over time. Parameters include speed and color choices.
- Color Beat - pulsing and color variance based upon music beat
- VO Meter - use of an entire venue and fixture installation to show color (HSB) and intensity across a space in correspondence with modulation by music or video input.
- Frequency and amplitude Response - light and color correspondence to pitch and amplitude information. Many parameters can be related to particular bands and frequencies in the acoustic information.
- Sweeps - movement of light across a space.
- Fills - fill a space - linearly, radially, spirals and other geometric shapes. Line movement, polygon movement, 3D shape movement.
- Delay or Echo effect - akin to a 'light echo' of an audio or video stimulus.

In an embodiment, additional control functions can incorporate special effects machines such as fog, smoke, bubbles, confetti cannons, pyrotechnics, motion activated systems and aroma which are used in clubs and theatrical venues for dramatic impact. Traditional theatrical venue control of these types of devices can now be incorporated into a live performance whereby music, video, lighting and special effects devices are all tied into performance control. In this way the DJ/VJ can control and influence all of this in a live setting.

Adjustable delays can also be introduced as a function of distance, since control signals and light travel much faster than sound. In large venues, such as large interior spaces or exterior spaces, this can adjust for the speed of sound so perfect synchronization is available locally or delayed echo effects are purposefully generated for a performance with the appropriate delays for the whole system or as a function of distance.

Installation geometries can be incorporated into the control configuration for the lighting system so that a Surround Lighting effect and apparent motion of light within an environment are possible. Effects are then both temporal and spatial and allow for control and influence of lighting effects that move through a room or venue. Venue setups can be standardized from venue to venue. A famous club installation can be replicated or scaled for other venues. Most lighting setups vary from venue to venue; some may have more or less lights than another. Some lights may have more features than another.

Standard configurations of lights can be used or a new configuration built up from a club layout. Testing mode to test 'sweeps' across room. Adjustments can be made by manipulating icons or graphical elements on the display.

In embodiments, various techniques can be used to determine network addresses and physical addresses of lighting units 100, such as query-based assessments described above, approaches based on vision sensors, manual mapping of addresses, and the like. In an embodiment, a configuration can be determined by disposing a location facility in connection with a lighting unit 100, such as a GPS location facility or local area transmitter/receiver system that operates on triangulation principles similar to those used in GPS. Thus, lighting units 100 equipped with such location-determination facilities can determine their locations relative to the earth (in the case of GPS), relative to a controller, such as the audio/visual controller 7100, which may be equipped with a transmitter/receiver to communicate with the lighting units 100, or relative to each other. Thus, a location-based determination can be made as to the physical locations of lighting units 100 and the correspondence of those locations to the network addresses of the lighting units 100 in a lighting network, such as one that is controlled by an audio/visual controller 7100 or lighting control interface 7112. Thus, in embodiments location-based arrays of lights may be disposed around a venue, such as dance floor or stadium. Every lighting unit 100 can have a transmitter associated with it, and user can bring in an antenna array for setup purposes to get locations of all of the lighting units 100. Thus, users can move lights around and relocate them, including on the fly during performances, or between performances. Similarly, the presence of a new light can be recognized by the antenna and added to a known mapping of a network of lights. An antenna system allows a user to get both pieces of information needed for mapping, namely, where the lighting units 100 actually are in the venue and where the lighting units 100 are in the network.

Configurations can be created at time of installation so that a club or other venue always has the configuration file for the venue accessible and stored on media or on the web for downloading purposes. Clubs can make this available to users even before they arrive on location so they can load and be ready to go when setup is complete. For example: Avalon.map could be a complete map file for the Avalon club in Boston. Avalon.sho might be a showfile consisting of a series of effects that can be adjusted live. Similarly, configurations could be determined on the fly, or as additional units are added.

In embodiments the audio/visual controller 7100 is also capable of storing and playing back sequences. In this way, the system can be used as an authoring system by show designers. A storage sequence can be selected and triggered, and all inputs and outputs can be recorded for a time period or until certain input conditions are met and stored to memory and retrieved at a later time for playback. Even in this case, the playback need not mirror exactly what the outputs are, and they can be a function of the settings, triggers and conditions that were set. So, for example, the playback of an effect sequence may be identical, but the output may be different sue to sensor settings, time of day, musical inputs etc.

In embodiments the A/V controller 7100 may be an industry standard digital audio and video controller, such as the Pioneer DVJ-X1 from Pioneer Electronics (USA) Inc. The A/V controller 7100 can allow users to manipulate and play back synchronized digital audio and video. DVJs can use an A/V controller 7100 to manipulate DVD visuals in a way similar to how they would music. Real-time digital video scratches, loops and instant cues are all possible with the audio/visual controller 7100, while the video and audio streams always stay in perfect sync, even when they're being reversed and pitched. The audio/visual controller 7100 can bring together existing AV technologies into a single unit that interfaces with currently available software and hardware to introduce a completely new form of entertainment. Two A/V controllers 7100 may be linked together via a fully integrated audio and visual mixer. This set-up allows the digital audio and video from the two separate sources to be mixed and scratched on the fly - in the same way that DJs create audio mixes in their live sets today. The Pioneer DVJ-X1, for example, offers on-board memory capacity as well as a SD Card slot similar to the CDJ-1000MK2 for even greater flexibility in performance. This allows for AV loops and cue points to be stored, either on-board or on a removable memory card. For example, a memory card that is bundled with the DVJ-X1 can store up to 500 loop or cue points. During playback, the saved cue and loop points can be searched, selected and previewed using an external preview monitor.

In embodiments, the audio/visual controller 7100 can have a memory feature for storing wave data, cue points and loop points. The data can be stored on a removable memory card (SD) or the player's internal memory. In embodiments the A/V controller 7100 may include a jog dial, which allows a user to cue a music track with a touch sensitive jog dial that is similar in control characteristics to a vinyl turntable. In embodiments the A/V controller 7100 may include a pitch bend controller to allow the user to speed up or slow down the tempo of video or audio playback, depending on the direction the jog dial is rotated. In embodiments, the A/V controller 7100 may have different modes, such as a vinyl mode to simulate traditional turntable effects, or a standard CD mode, without touch sensitivity. In embodiments the A/V controller 7100 may include functions that simulate a vinyl turntable, such as allowing a user to cue or scratch a track by rotating a jog dial in a particular direction. Similarly, the parameters of the jog dial may be adjusted, such as to modify the speed at which a track slows down or stops, as well as the speed with which a track returns to normal speed.

In embodiments, the A/V controller 7100 may include master tempo control, so that when a user changes speed, the system maintains the pitch of vocal and instrumental audio, without noticeable differences. The A/V controller 7100 can include tempo control, such as a slider that allows tempo adjustment.

In embodiments, the A/V controller 7100 may provide a range of cue functions, each of which can be used to serve as a cue for a lighting control signal. Such functions may include an auto cue function, which automatically cues the beginning of a track. The A/V controller 7100 may also include a manual cue, set at a position on a track. Adjustment can be made by using either the jog dial or manual search buttons. The cue point can be automatically stored in the internal memory (If SD is inserted in A/V controller 7100, the cue point is automatically stored in the SD) until it is overwritten with a new cue point. In embodiments a cue point can be set on the fly and stored into the internal memory by just simply hitting the In / Real-time cue button. In embodiments a user can start the music by sliding a cross fader. By sliding the fader back, it will return the A/V controller 7100 back to the previously selected cue point.

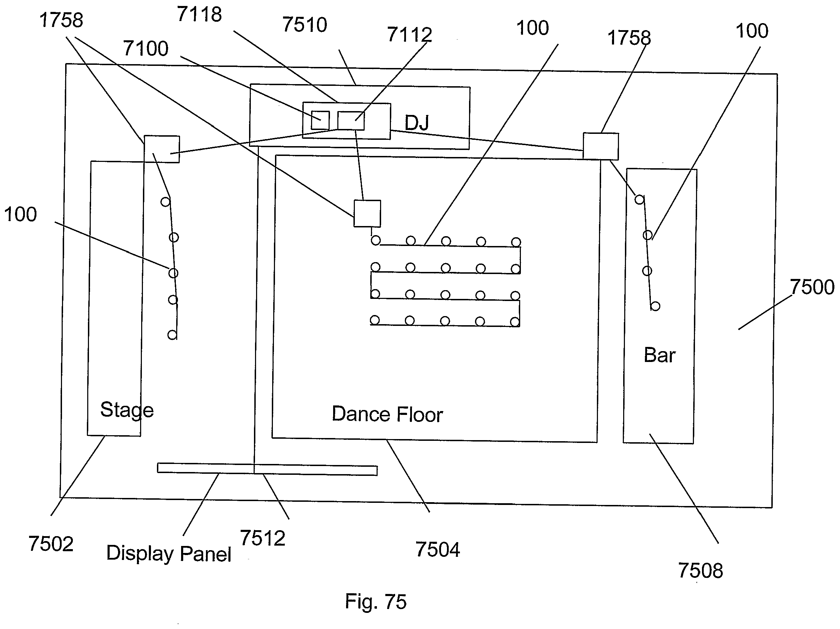

Referring to Fig. 75, an entertainment venue 7500, such as located in or associated with a bar, restaurant, nightclub, casino, concert hall, theatre, movie theatre, function hall, clubhouse, school, church or other venue may include various features that support live performances as well as playing media. For example, in an example of such a venue 7500, a disc jockey (or video jockey) may have a control center 7510, which may include a control system 7118 such as described in connection with Fig. 71 and the subsequent figures. The control system 7118 may have an audio/visual controller 7100 that is integrated with or associated with a lighting control interface 7112, which may take various forms, such as, for example, the light system engine 1654 described herein, or other lighting control interfaces 7112. The lighting control interface 7112 can provide an interface to control various lighting units 100, such may be disposed about the venue 7500, such as at a bar 7508, on or under a dance floor 7504, on or near a stage 7502, on a display panel 7512, or on walls, ceilings, curtains, doors, furniture, or other features of the venue 7500. The lighting units 100 may be part of a single network of lighting units, or they may be disposed in groups. In an embodiment, the lighting units 100 are strings of lights that are addressed through a serial addressing protocol in which each light takes a control signal, reads the first unmodified byte, modifies that byte, and passes on the data to the next light in the string. The strings may optionally be associated with power/data supplies 1758, such as described elsewhere herein, so that the lighting control interface 7112 can be used to control various universes of lights displayed in or on different features of the venue 7500.

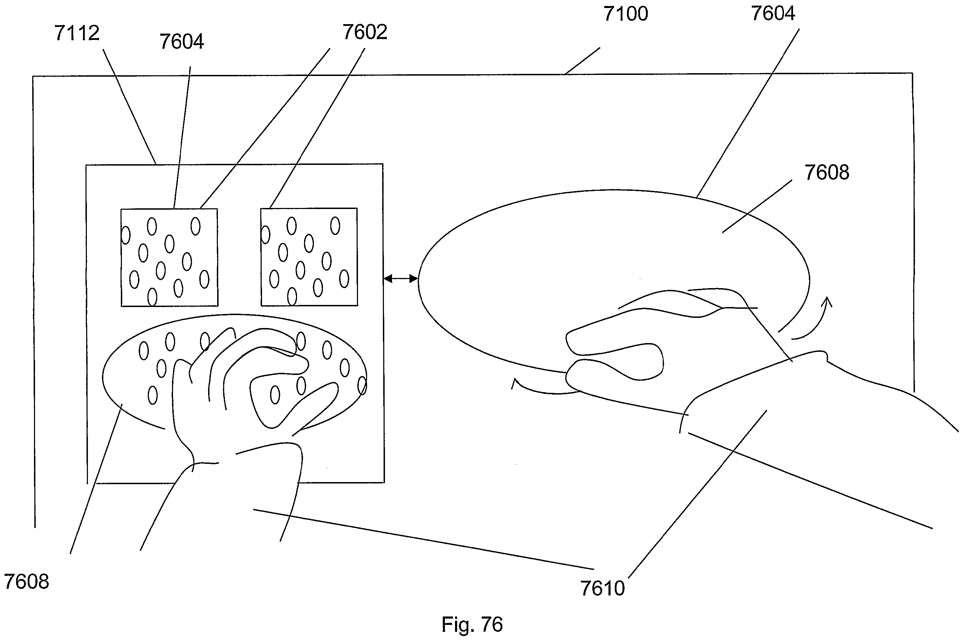

Referring to Fig. 76, in an entertainment control system 7118, similar to that described in connection with Fig. 71, an audio/visual controller 7100 may include or be associated with the lighting control interface 7112, which in turn may include one or more interfaces 7602, each of which may control lighting units 100, such as strings of lights addressed in the serial addressing protocols described above. The lighting units 100 can be mapped to specific locations in the entertainment venue 7500, such as using any of the mapping and addressing facilities described herein or used by those of ordinary skill in the art. In embodiments, various forms of interfaces 7602 may be used. In one embodiment, the interface 7602 in the lighting controller 7112 may include a visualization, such as a "skin" or other graphical display that is associated with the graphical user interface of a computer-based music or video player, such as Windows® media player from Microsoft Corporation, iTunes and iMovie from Apple Computer, Inc., various peer-to-peer and shareware music applications, such as Napster, Kazaa, and the like, and a wide range of other players and interfaces for creating, managing, and playing MP3 files, .wav files, and other media, including music, audio clips and video. The graphical user interfaces for such programs often include visualizations, or graphical displays, that relate to the media content. Such visualizations include artistic content, such as representations of album and CD covers, graphical equalizers, graphics that depict synthesizers, amplifiers, volume controls, and the like, and "skins" or similar works created to be displayed on a user's computer screen when media content is played with the media application. In embodiments, an entertainment control system 7118 used by a VJ, DJ or the like may include an interface for creating and/or displaying such visualizations, and portions of the visualizations may be mapped to the locations of the lighting units 100 that are disposed in the venue 7500, so that lighting units 100 located in the venue 7500, such as strings of lighting units 100, can display lighting effects that correspond to the visualizations. For example, a "skin" for an MP3 player may be reproduced in colored lights on or under a dance floor, on a curtain associated with a stage, on the face of a bar, on the tabletop of a restaurant, on a wall, on a ceiling, on a light tile, or on a panel-type lighting display. Thus, the user can create or display visualizations using a conventional computer interface, such as by retrieving, modifying and manipulating files, play them using the entertainment control system 7118, and render associated lighting effects in the venue 7500. In embodiments the individual interfaces 7602 of the lighting control interface 7112 may include physical interfaces, such as touch screens, that respond to the touch of the user 7610. For example, the touch screen may allow a user to trigger effects, or modify them, by touching the screen, such as by sweeping across the screen to cause the visualization to follow a certain direction, pointing to particular areas to change color or intensity of the visualization and associated lighting control for such areas, and other similar interfaces. The interfaces 7602 may include various sliders, dials, equalizers, buttons and the like as described herein. The interfaces may include a jog dial 7602, similar to a vinyl record, that allows a user to accelerate or slow the playing of media (and corresponding lighting effects, such as by rotating the jog dial 7608 clockwise or counter-clockwise, holding it down, or otherwise interacting with it. The jog dial may be part of a separate lighting control interface 7112, or the lighting control interface 7112 may accept input from a separate jog dial from the audio/visual controller 7100, such as the same one that is used to control audio that is played in the venue 7500. In other embodiments the interface 7602 of the lighting control interface 7112 may include a video controller, such as a video playback system, and the video may be associated with lighting control signals to produce lighting effects that correspond to the video, such as by mapping the pixels of the video to the lighting control, as described elsewhere in this disclosure and in the applications incorporated herein by reference.

In embodiments the entertainment system controller 7118 may facilitate a mapping of addresses from locations of lighting units 100 in a room and associate them with features of media. For example, low frequencies (bass) or high frequencies (treble) could be associated with particular parts of a dance floor, curtain, or the like in the venue 7500, so that aspects of the media are displayed in lights as the media is played by the media player. Particular colors can be associated with particular tones, such as greens and blues with treble and warm colors like reds and oranges with bass tones, for example. In embodiments the mapping may be changed, such as moving the base tones around the room, such as by sweeping the jog dial 7608 to rotate or flip the mapping of particular colors to particular media features. Thus, in an object oriented coding scheme that maps from a visualization to a lighting control scheme, an intermediate object may be included that allows dynamic shifting of the mapping between the visualization and the lighting control signal.

In embodiments the entertainment control system 7118 can be disposed on a table of a restaurant, so that a customer can control media displays, including lighting systems, in the venue, directly from the tabletop.

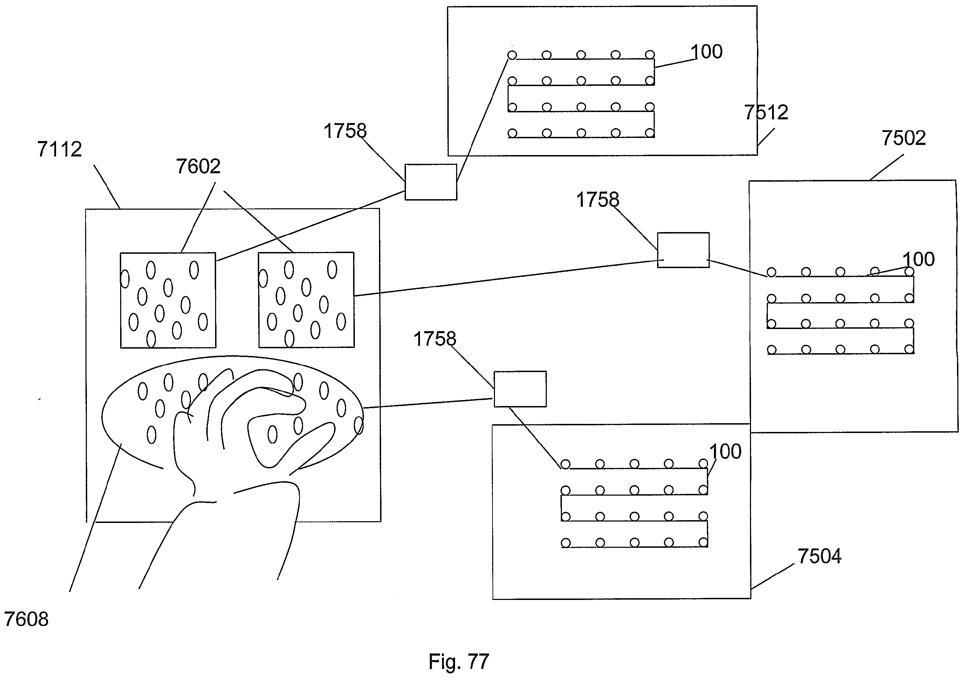

Referring to Fig. 77, the lighting control interface 7112 of the entertainment control system 7118 can be associated with various lighting systems 100, such as ones associated with a dance floor lighting system 7504, a stage lighting system 7502, or a panel display 7512, which may be a light tile as described herein and in documents incorporated herein by reference. Each lighting system 100 may include, for example, a string of lights. The different lighting systems may be disposed throughout the venue in various configurations, such as the network topologies described herein, such as Ethernet networks, DMX and DALI networks, networks with central controllers, peer-to-peer networks, wireless networks, or the like. Embodiments may include power/data supplies 1758 for each lighting system 100.

Thus, in embodiments there is provided a method of illuminating an environment in coordination with a media display, including steps of providing a lighting control system for controlling a lighting system; providing a user interface for controlling a media display that is distinct from the lighting system; and associating an input of the lighting control system with the output of the user interface, wherein the method includes taking input from an audio/visual controller with a physical interface and using it to control lights in an entertainment venue.

In embodiments the lighting system may be a string lighting system displayed on an area, such as part of an entertainment venue. The area might be a bar, a wall, a dance floor, a curtain, a stage, tile, floor, panel-display, or the like.

In embodiments methods may include taking a visualization from a computer display associated with an audio player and displaying lights that correspond to the visualization in a physical entertainment venue. In embodiments the visualization is a skin for an MP3, and the method includes allowing a user to modify the skin through a physical interface. In embodiments the physical interface is a touch screen. In embodiments touching the screen changes at least one of the brightness and the color of at least part of the skin.

In embodiments methods and systems may include taking video input from a music video and displaying corresponding light on a string of lights that use a serial addressing protocol. The string of lights may be disposed in an entertainment venue. The user may modify output through a physical interface, such as the interface for an audio/visual controller 7100, such as a jog dial, touch screen, or other interface. The user may dynamically alter the mapping between inputs and the lighting control outputs.

While the invention has been described in connection with certain preferred embodiments, other embodiments would be recognized by one of ordinary skill in the art and all such embodiments are encompassed by this disclosure.

## Claims

1. A lighting control system for an entertainment system (7118) that includes a video display (7104) and a sound system (7108), the lighting control system comprising:
one or more LED-based lighting units (100);
an audio/visual controller (7100) for allowing a user to interactively modify in real-time, via a user interface distinct from the video display, at least one of a video signal for output by the video display and an audio signal for output by the sound system; and
a lighting control interface (7112) for receiving information about the interactively modified video and/or audio signals and controlling the one or more LED-based lighting units (100) to generate one or more lighting effects based on the information about the interactively modified video and/or audio signals, wherein the received information comprises output from the user interface,
**characterized in that** the lighting control interface includes a mapping facility (6815) comprising a mapping table (6815t) to store at least one lighting program,
wherein the at least one lighting program includes one or more variables to receive input values at execution time;
wherein the audio signal provides the input values for the one or more variables of the at least one lighting program; and
wherein the at least one lighting program, when executed at the execution time by the mapping facility, generates control signals to control the one or more LED-based lighting units.

2. The lighting control system of claim 1, wherein the audio/visual controller is configured to read at least one recorded medium to provide the video signal and/or the audio signal to be interactively modified by the user, the at least one recorded medium including a DVD or a CD.

3. The lighting control system of claim 1, wherein the information about the interactively modified video and/or audio signals includes at least one of beats-per-minute (bpm), tempo, pitch, spectral information, and amplitude.

4. The lighting control system of claim 1, wherein the information about the interactively modified video and/or audio signals is in the form of raw data or meta-level sequences of lighting information.

5. The lighting control system of claim 1, wherein the information about the interactively modified video and/or audio signals includes video parameters, and wherein the video parameters include one or more of colors, frame or clip rate, spatial frequencies, and movements.

6. The lighting control system of any of the foregoing claims, wherein the audio/visual controller and the lighting control interface are integrated in a same computer controller (7202).

7. The lighting control system of any of the foregoing claims, further comprising at least one interface device (7204, 7602) coupled to at least one of the audio/visual controller and the lighting control interface.

8. The lighting control system of claim 7, wherein the at least one interface device includes a job dial (7608) that is similar in control characteristics to a vinyl turntable.

9. The lighting control system of claim 7, wherein the at least one interface device includes a graphical user interface, wherein a visualization including a skin or other graphical display that relates to the video signal and the audio signal is associated with the graphical user interface, and wherein the lighting control interface controls the one or more LED-based lighting units to generate the one or more lighting effects based on the visualization.

10. The lighting control system of any of the foregoing claims, wherein the one or more LED-based lighting units include a plurality of LED-based lighting units disposed about an entertainment venue (7500).

11. The lighting control system of claim 12, wherein the plurality of LED-based lighting units include strings of lights that are addressed through a serial addressing protocol.

12. The lighting control system of any of claims 10 and 11, wherein the lighting control interface is configured to control various universes of lights displayed in or on different features of the entertainment venue.

13. The lighting control system of any of claims 10 to 12, wherein addresses of the plurality of LED-based lighting units are mapped to specific locations in the entertainment venue, and wherein features of media are associated with particular parts of the entertainment venue.

14. The lighting control system of claim 13, wherein the audio signal includes low frequencies and high frequencies, and wherein the low frequencies and the high frequencies respectively are associated with the particular parts of the entertainment venue, and wherein particular colors are associated with the low frequencies and the high frequencies.

15. The lighting control system of any of claims 13 and 14, wherein the audio/visual controller is configured to allow a dynamic shifting of a mapping between particular media features and the plurality of LED-based lighting units.

## Patentansprüche

1. Beleuchtungssteuerungssystem für ein Unterhaltungssystem (7118), das eine Videoanzeige (7104) und ein Tonsystem (7108) enthält, das Beleuchtungssteuerungssystem umfassend:
eine oder mehrere LED-basierte Beleuchtungseinheiten (100);
eine audiovisuelle Steuerung (7100), die einem Benutzer erlaubt, interaktiv in Echtzeit, über eine Benutzerschnittstelle, die sich von der Videoanzeige unterscheidet, zumindest eines von einem Videosignal zur Ausgabe durch die Videoanzeige und einem Audiosignal zur Ausgabe durch das Tonsystem zu modifizieren; und
eine Beleuchtungssteuerungsschnittstelle (7112) zum Empfangen von Informationen über die interaktiv modifizierten Video- und/oder Audiosignale und Steuern der einen oder mehreren LED-basierten Beleuchtungseinheiten (100), um einen oder mehrere Beleuchtungseffekte basierend auf den Informationen über die interaktiv modifizierten Video- und/oder Audiosignale zu generieren, wobei die empfangenen Informationen eine Ausgabe von der Benutzerschnittstelle umfassen,
**dadurch gekennzeichnet, dass** die Beleuchtungssteuerungsschnittstelle eine Mapping-Einrichtung (6815) enthält, die eine Mapping-Tabelle (6815t) umfasst, um zumindest ein Beleuchtungsprogramm zu speichern,
wobei das zumindest eine Beleuchtungsprogramm eine oder mehrere Variable enthält, um Eingangswerte bei Ausführungszeit zu empfangen,
wobei das Audiosignal die Eingangswerte für die eine oder mehreren Variablen des zumindest einen Beleuchtungsprogramms bereitstellt; und
wobei das zumindest eine Beleuchtungsprogramm, wenn bei der Ausführungszeit durch die Mapping-Einrichtung ausgeführt, Steuersignale generiert, um die eine oder mehreren LED-basierten Beleuchtungseinheiten zu steuern.

2. Beleuchtungssteuerungssystem nach Anspruch 1, wobei die audiovisuelle Steuerung konfiguriert ist, zumindest ein aufgezeichnetes Medium zu lesen, um das Videosignal und/oder das Audiosignal, das durch den Benutzer interaktiv modifiziert werden soll, dem zumindest einen aufgezeichneten Medium, enthaltend eine DVD oder eine CD, bereitzustellen.

3. Beleuchtungssteuerungssystem nach Anspruch 1, wobei die Informationen über die interaktiv modifizierten Video- und/oder Audiosignale zumindest eines von Schläge pro Minute (bpm), Tempo, Tonhöhe, Spektralinformationen und Amplitude enthalten.

4. Beleuchtungssteuerungssystem nach Anspruch 1, wobei die Informationen über die interaktiv modifizierten Video- und/oder Audiosignale die Form von Rohdaten oder Metapegelsequenzen von Beleuchtungsinformationen enthalten.

5. Beleuchtungssteuerungssystem nach Anspruch 1, wobei die Informationen über die interaktiv modifizierten Video- und/oder Audiosignale Videoparameter enthalten und wobei die Videoparameter eines oder mehrere von Farben, Frame- oder Clip-Rate, Raumfrequenzen und Bewegungen enthalten.

6. Beleuchtungssteuerungssystem nach einem der vorstehenden Ansprüche, wobei die audiovisuelle Steuerung und die Beleuchtungsteuerungsschnittstelle in einer selben Computersteuerung (7202) integriert sind.

7. Beleuchtungssteuerungssystem nach einem der vorstehenden Ansprüche, weiter umfassend zumindest eine Schnittstellenvorrichtung (7204, 7602), die an zumindest eine von der audiovisuellen Steuerung und der Beleuchtungsteuerungsschnittstelle gekoppelt ist.

8. Beleuchtungssteuerungssystem nach Anspruch 7, wobei die zumindest eine Schnittstellenvorrichtung eine Aufgabenwählscheibe (7608) enthält, die in Steuerungseigenschaften einem Vinylplattenteller ähnlich ist.

9. Beleuchtungssteuerungssystem nach Anspruch 7, wobei die zumindest eine Schnittstellenvorrichtung eine grafische Benutzerschnittstelle enthält, wobei eine Visualisierung, die eine Skin- oder andere grafische Anzeige enthält, die sich auf das Videosignal und Audiosignal bezieht, mit der grafischen Benutzerschnittstelle verknüpft ist, und wobei die Beleuchtungsteuerungsschnittstelle die eine oder mehreren LED-basierten Beleuchtungseinheiten steuert, um den einen oder die mehreren Beleuchtungseffekte basierend auf der Visualisierung zu generieren.

10. Beleuchtungssteuerungssystem nach einem der vorstehenden Ansprüche, wobei die eine oder mehreren LED-basierten Beleuchtungseinheiten eine Vielzahl von LED-basierten Beleuchtungseinheiten enthalten, die um einen Veranstaltungsort (7500) angeordnet sind.

11. Beleuchtungssteuerungssystem nach Anspruch 12, wobei die Vielzahl von LED-basierten Beleuchtungseinheiten Lichterketten enthalten, die durch ein serielles Adressierprotokoll adressiert werden.

12. Beleuchtungssteuerungssystem nach einem der Ansprüche 10 und 11, wobei die Beleuchtungsteuerungsschnittstelle konfiguriert ist, verschiedene Lichtuniversen zu steuern, die in oder auf verschiedenen Elementen des Veranstaltungsorts angezeigt werden.

13. Beleuchtungssteuerungssystem nach einem der Ansprüche 10 bis 12, wobei Adressen der Vielzahl von LED-basierten Beleuchtungseinheiten auf spezifische Stellen im Veranstaltungsort abgebildet sind und wobei Elemente von Medien mit bestimmten Teilen des Veranstaltungsorts verknüpft sind.

14. Beleuchtungssteuerungssystem nach Anspruch 13, wobei das Audiosignal niedere Frequenzen und hohe Frequenzen enthält und wobei die niederen Frequenzen und die hohen Frequenzen jeweils mit den besonderen Teilen des Veranstaltungsorts verknüpft sind und wobei besondere Farben mit den niederen Frequenzen und den hohen Frequenzen verknüpft sind.

15. Beleuchtungssteuerungssystem nach einem der Ansprüche 13 und 14, wobei die audiovisuelle Steuerung konfiguriert ist, eine dynamische Verschiebung eines Mapping zwischen besonderen Medienelementen und der Vielzahl von LED-basierten Beleuchtungseinheiten zu erlauben.

## Revendications

1. Système de commande d'éclairage pour un système de divertissement (7118) qui inclut un afficheur vidéo (7104) et un système de son (7108), le système de commande d'éclairage comprenant :
une ou plusieurs unités d'éclairage (100) à base de LED ;
une unité de commande audio/visuelle (7100) pour permettre à un utilisateur de modifier de manière interactive en temps réel, via une interface utilisateur distincte de l'afficheur vidéo, au moins l'un d'un signal vidéo pour la sortie par l'afficheur vidéo et d'un signal audio pour la sortie par le système de son ; et
une interface de commande d'éclairage (7112) pour recevoir des informations concernant les signaux vidéo et/ou audio modifiés de manière interactive et pour commander la ou les plusieurs unités d'éclairage (100) à base de LED pour produire un ou plusieurs effets d'éclairage sur la base des informations concernant les signaux vidéo et/ou audio modifiés de manière interactive, dans lequel les informations reçues comprennent une sortie provenant de l'interface utilisateur,
**caractérisé en ce que** l'interface de commande d'éclairage inclut un équipement de mise en correspondance (6815) comprenant une table de mise en correspondance (6815t) pour stocker au moins un programme d'éclairage,
dans lequel l'au moins un programme d'éclairage inclut une ou plusieurs variables pour recevoir des valeurs d'entrée au moment de l'exécution ;
dans lequel le signal audio fournit les valeurs d'entrée pour la ou les plusieurs variables de l'au moins un programme d'éclairage ; et
dans lequel l'au moins un programme d'éclairage, quand il est exécuté au moment de l'exécution par l'équipement de mise en correspondance, produit des signaux de commande pour commander la ou les plusieurs unités d'éclairage à base de LED.

2. Système de commande d'éclairage selon la revendication 1, dans lequel l'unité de commande audio/visuelle est configurée pour lire au moins un support enregistré pour fournir le signal vidéo et/ou le signal audio à modifier de manière interactive par l'utilisateur, l'au moins un support enregistré incluant un DVD ou un CD.

3. Système de commande d'éclairage selon la revendication 1, dans lequel les informations concernant des signaux vidéo et/ou audio modifiés de manière interactive incluent au moins l'un de battements par minute (bpm), de tempo, de hauteur de son, d'informations spectrales et d'amplitude.

4. Système de commande d'éclairage selon la revendication 1, dans lequel les informations concernant les signaux vidéo et/ou audio modifiés de manière interactive sont sous la forme de données brutes ou de séquences à méta-niveau d'informations d'éclairage.

5. Système de commande d'éclairage selon la revendication 1, dans lequel les informations concernant des signaux vidéo et/ou audio modifiés de manière interactive incluent des paramètres vidéo et dans lequel les paramètres vidéo incluent un ou plusieurs de couleurs, de fréquence d'images ou de clips, de fréquences spatiales et de mouvements.

6. Système de commande d'éclairage selon l'une quelconque des revendications précédentes, dans lequel l'unité de commande audio/visuelle et l'interface de commande d'éclairage sont intégrées dans une même unité de commande informatique (7202).

7. Système de commande d'éclairage selon l'une quelconque des revendications précédentes, comprenant en outre au moins un dispositif d'interface (7204, 7602) couplé à l'au moins une de l'unité de commande audio/visuelle et de l'interface de commande d'éclairage.

8. Système de commande d'éclairage selon la revendication 7, dans lequel l'au moins un dispositif d'interface inclut un cadran de travail (7608) qui est similaire dans des caractéristiques de commande à une platine tourne-disque.

9. Système de commande d'éclairage selon la revendication 7, dans lequel l'au moins un dispositif d'interface inclut une interface utilisateur graphique, dans lequel une visualisation incluant une peau ou autre affichage graphique qui se rapporte au signal vidéo et au signal audio est associée à l'interface utilisateur graphique, et dans lequel l'interface de commande d'éclairage commande la ou les plusieurs unités d'éclairage à base de LED pour produire le ou les plusieurs effets d'éclairage basés sur la visualisation.

10. Système de commande d'éclairage selon l'une quelconque des revendications précédentes, dans lequel la ou les plusieurs unités d'éclairage à base de LED incluent une pluralité d'unités d'éclairage à base de LED disposées autour d'un lieu de divertissement (7500).

11. Système de commande d'éclairage selon la revendication 12, dans lequel la pluralité d'unités d'éclairage à base de LED inclut des séries de lumières qui sont adressées par un protocole d'adressage série.

12. Système de commande d'éclairage selon l'une quelconque des revendications 10 et 11, dans lequel l'interface de commande d'éclairage est configurée pour commander des univers divers de lumières affichés dans ou sur des particularités différentes du lieu de divertissement.

13. Système de commande d'éclairage selon l'une quelconque des revendications 10 à 12, dans lequel des adresses de la pluralité d'unités d'éclairage à base de LED sont mises en correspondance à des emplacements spécifiques dans le lieu de divertissement, et dans lequel des particularités de supports sont associées à des parties particulières du lieu de divertissement.

14. Système de commande d'éclairage selon la revendication 13, dans lequel le signal audio inclut des basses fréquences et des hautes fréquences, et dans lequel les basses fréquences et les hautes fréquences sont respectivement associées à des parties particulières du lieu de divertissement, et dans lequel des couleurs particulières sont associées aux basses fréquences et aux hautes fréquences.

15. Système de commande d'éclairage selon l'une quelconque des revendications 13 et 14, dans lequel l'unité de commande audio/visuelle est configurée pour permettre un changement dynamique d'une mise en correspondance entre des particularités de supports particulières et la pluralité d'unités d'éclairage à base de LED.
